# EUROPEAN PATENT APPLICATION

(11) **EP 4 471 684 A2**
(43) Date of publication of application: **04.12.2024**
(21) Application number: 24175157.7
(22) Date of filing: 10.05.2024
(51) Int. Cl.: G06Q 10/047, G06Q 10/0631, G06Q 50/04, G06Q 10/087, G06Q 10/0875, G06Q 30/0282, G06Q 30/0601

(54) **SEMICONDUCTOR COMPONENT PROVISION SERVER**

(30) Priority: 11.05.2023 KR 20230061348
(71) Applicant: Samsung Electronics Co., Ltd., Suwon-si, Gyeonggi-do 16677 (KR)
(72) Inventor: HWANG, Junsu, 16677 Suwon-si, Gyeonggi-do (KR); KYUNG, Kyehyun, 16677 Suwon-si, Gyeonggi-do (KR); PARK, Jiwon, 16677 Suwon-si, Gyeonggi-do (KR); YANG, Seunghwan, 16677 Suwon-si, Gyeonggi-do (KR); LEE, Dongvin, 16677 Suwon-si, Gyeonggi-do (KR)
(74) Representative: Kuhnen & Wacker Patent- und Rechtsanwaltsbüro PartG mbB

(57) **Abstract**

A server includes an interface, a database and a proposal list generating circuit. The interface is connected to a customer device and user devices through a network and receives a production request of a product from the customer device and receives component parameter from the user devices, the component parameter each including a supportable specification of a component related to semiconductor production. The database stores the component parameter. The proposal list generating circuit classifies components for the production of the product indicated in the production request based on the supportable specification of the component parameter, determines one or more bottleneck components based on component parameter among the component parameter that match the classified components, and generates one or more proposal lists based on the one or more bottleneck components. The one or more proposal list is transmitted to the customer device through the interface.

## Description

### BACKGROUND

The present disclosure relates to a semiconductor component provision server, and more particularly, to a server for managing information of an entity that wants to manufacture a product using semiconductors and information of a semiconductor design house, foundry company, or post-processing company.

To produce a product using semiconductors, design of semiconductor devices and/or chips that meet the specifications of the product, production of the designed semiconductor devices and/or chips, and post-processing of the produced semiconductor devices and/or chips are performed. Entities producing a product using semiconductors may individually approach semiconductor design companies, semiconductor manufacturers, or semiconductor post-processing companies to produce a product using semiconductors.

### SUMMARY

It is an aspect to provide a semiconductor component provision server of an entity that produces a semiconductor product using semiconductors, based on real time information of a semiconductor design company, a semiconductor manufacturer, or a semiconductor post-processing company.

It is another aspect to provide a server for providing information of a semiconductor design company, a semiconductor manufacturer, or a semiconductor post-processing company to an entity that produces a product using semiconductors.

According to an aspect of one or more embodiments, there is provided a server comprising an interface connected to a customer device and a plurality of user devices through a network and configured to receive a production request of a product from the customer device; and receive a set of component parameters from the plurality of user devices, each component parameter of the set of component parameters being associated with a component related to semiconductor production; a database configured to store the set of component parameters; and a proposal list generation circuit configured to classify components associated with the production request based on the set of component parameters, determine at least one bottleneck component based on a subset of component parameters that are associated with the classified components, among the set of component parameters, and generate at least one proposal list based on the at least one bottleneck component, wherein the at least one proposal list is transmitted to the customer device through the interface.

According to another aspect of one or more embodiments, there is provided a server comprising a memory storing computer code; and at least one processor configured to access the memory and execute the computer code to cause the at least one processor to at least receive a production request of a semiconductor component from a customer device, automatically classify work associated with producing the semiconductor component, based on the production request, generate at least one proposal list based on the automatically classified work, and provide the at least one proposal list to the customer device, wherein the work includes at least one of semiconductor design, semiconductor production, semiconductor packaging, semiconductor post-processing, or forwarding of the semiconductor component, wherein the at least one proposal list is generated based on at least one of a first response received from a first user device, a second response received from a second user device, or a third response received from a third user device, the first response including semiconductor design information of the semiconductor component, the second response including semiconductor foundry information for producing the semiconductor component, and the third response including test information and packaging information of the semiconductor component.

According to still another aspect of one or more embodiments, there is provided a server for managing information on at least one of design, production, packaging, or forwarding of a semiconductor component, the server comprising a memory that stores at least one instruction; at least one processor; and an artificial intelligence engine configured to learn an operation result of the at least one processor, wherein the at least one processor is configured to access the memory and execute the at least one instruction to cause the at least one processor to at least receive a production request of the semiconductor component from a first customer device or a second customer device, automatically classify work associated with producing the semiconductor component, based on the production request, and generate at least one proposal list, based on the automatically classified work, wherein the at least one proposal list is generated based on at least one response among a first response received from a first user device, a second response received from a second user device, or a third response received from a third user device, the first response including semiconductor design information of the semiconductor component, the second response including semiconductor foundry information for producing the semiconductor component, and the third response including test information and packaging information of the semiconductor component, and the artificial intelligence engine is further configured to learn the at least one proposal list and provide the first customer device or the second customer device with the at least one proposal list generated based on a result of the learning.

According to yet another aspect of one or more embodiments, there is provided a server comprising a memory that stores computer code; at least one processor; and an artificial intelligence engine configured to learn an operation result of the at least one processor, wherein the at least one processor is configured to access the memory and execute the computer code to cause the at least one processor to at least receive a production request of a semiconductor component from a customer device, automatically classify work associated with produce the semiconductor component, based on the production request, and generate at least one proposal list, based on the automatically classified work, wherein the at least one proposal list is generated based on at least one of a first response received from a first user device, a second response received from a second user device, or a third response received from a third user device, the first response including semiconductor design information of the semiconductor component, the second response including semiconductor foundry information for producing the semiconductor component, and the third response including test information and packaging information of the semiconductor component, and the at least one proposal list includes a plurality of second user information, and the artificial intelligence engine is further configured to learn the at least one proposal list and provide the customer device with the at least one proposal list generated based on a result of the learning.

According to yet another aspect of one or more embodiments, there is provided a server comprising a memory that stores computer code; and at least one processor configured to access the memory and execute the computer code to cause the at least one processor to at least receive a production request of a semiconductor component from a customer device, automatically classify work associated with producing the semiconductor component, based on the production request, generate at least one proposal list, based on the automatically classified work, provide the at least one proposal list to the customer device, and generate payment information, based on the at least one proposal list, wherein the work includes at least one of semiconductor design, semiconductor production, semiconductor packaging, semiconductor post-processing, or forwarding of the semiconductor component, the at least one proposal list is generated based on at least one of a first response received from a first user device, a second response received from a second user device, or a third response received from a third user device, the first response including semiconductor design information of the semiconductor component, the second response including semiconductor foundry information for producing the semiconductor component, and the third response including test information and packaging information of the semiconductor component, and the payment information includes share investment or technology transfer information with respect to a customer corresponding to the customer device.

According to a further aspect of one or more embodiments, there is provided a semiconductor transaction server for generating fee processing information according to a semiconductor transaction between a customer and a user, the semiconductor transaction server comprising a memory that stores computer code and at least one processor configured to access the memory and execute the computer code to cause the at least one processor to implement at least a payment information generating module configured to receive a plurality of payment information respectively from a first user device, a second user device, a third user device, a fourth user device, and a fifth user device and generate final payment information by combining the plurality of payment information; and a fee processing module configured to generate information on a fee to be paid to an operator of the semiconductor transaction server, wherein the fee includes a brokerage fee according to matching between the customer and the user, wherein the brokerage fee is obtained by multiplying a payment amount by a first rate, the payment amount being calculated according to the final payment information, and the brokerage fee including a first brokerage fee and a second brokerage fee, according to a second rate, and wherein information on the first brokerage fee is transmitted to a customer device, and information on the second brokerage fee is transmitted to a user device matched with the customer device.

### BRIEF DESCRIPTION OF THE DRAWINGS

Various embodiments will be more clearly understood from the following detailed description taken in conjunction with the accompanying drawings, in which:
FIGS. 1A to 1E illustrate network systems according to various embodiments;
FIG. 2 illustrates the provision of user information in a network system, according to an embodiment;
FIGS. 3A and 3B are flowcharts of semiconductor transaction methods according to various embodiments;
FIG. 4 is a flowchart of a process of conducting a transaction according to recommendations of users, according to an embodiment;
FIGS. 5A to 5C are flowcharts of an operation of providing user information in semiconductor transaction methods, according to various embodiments;
FIG. 6 is a flowchart of a process of providing a recommended user list to a customer in a network system, according to an embodiment;
FIG. 7 illustrates information provided by a customer in a network system, according to an embodiment;
FIGS. 8A to 8D illustrate information provided to a customer in a network system, according to various embodiments;
FIGS. 9A and 9B are diagrams of a network system, in which a plurality of customers participate, according to an embodiment;
FIGS. 10A and 10B are diagrams of a network system, in which a plurality of second users participate, according to an embodiment;
FIGS. 11A and 11B are diagrams of a network system, in which a plurality of customers and a plurality of second users participate, according to an embodiment;
FIG. 12 is a flowchart of a process, in which a plurality of customers participate in a network system, according to an embodiment;
FIG. 13 is a flowchart of a process of providing foundry company information by using artificial intelligence (AI) in a network system, according to an embodiment;
FIG. 14 is a flowchart of a process, in which a plurality of foundry companies participate in a network system, according to an embodiment;
FIG. 15 is a diagram illustrating that customer information is provided to an investment entity in a network system , according to an embodiment;
FIG. 16 is a flowchart illustrating that customer information is provided to an investment entity in a network system, according to an embodiment;
FIG. 17 is a block diagram illustrating that a network system is implemented by AI, according to an embodiment;
FIG. 18 is a flowchart of a process, in which a semiconductor transaction is made in a network system, according to an embodiment;
FIG. 19 is a flowchart of a process of providing information in a network system, according to an embodiment;
FIG. 20 is a flowchart of a process of performing a transaction according to information provision in a network system, according to an embodiment;
FIG. 21A is a block diagram of a server according to an embodiment, and FIG. 21B is a table diagram of types of bottleneck components;
FIG. 22 is a flowchart of an operating method of the server of FIG. 21A, according to an embodiment;
FIG. 23 is a diagram illustrating an example of operation of the server of FIG. 21A, according to an embodiment;
FIG. 24 is a table diagram of data stored in a bottleneck component database in FIG. 21A, according to an embodiment;
FIGS. 25 and 26 are flowcharts of operating methods of the server 2000 of FIG. 21A, according to various embodiments;
FIGS. 27 and 28 are diagrams illustrating communication of a server through a network, according to an embodiment;
FIGS. 29 and 30 are block diagrams illustrating fee models according to various embodiments;
FIGS. 31 and 32 are flowcharts of fee processing methods according to various embodiments;
FIG. 33 is a block diagram of an advertising fee payment model according to an embodiment;
FIG. 34 is a flowchart of an advertising fee payment method according to an embodiment;
FIG. 35 is a block diagram illustrating a data fee payment model according to an embodiment;
FIG. 36 is a flowchart of a data fee payment method according to an embodiment; and
FIGS. 37 and 38 are block diagrams of configurations of servers according to various embodiments.

### DETAILED DESCRIPTION

Generally, semiconductor production processes may be carried out among semiconductor design companies, semiconductor manufacturers, and semiconductor post-processing companies. Entities that want to produce a product using semiconductors may individually request semiconductor-related work from the semiconductor design companies, semiconductor manufacturers, and semiconductor post-processing companies. Some aspects of the embodiments described herein may provide a system for managing the semiconductor production request and/or production parameters in associated with the entities relevant to the semiconductor production processes in an organized manner. Meanwhile, the semiconductor production management method according to the technical idea of the present invention is too difficult for humans to perform one by one, and tasks that humans cannot perform can be effectively performed through computerized implementation.

Terms used herein are briefly described and embodiments are described in detail below. Hereinafter, the term "semiconductor" may be understood as including a semiconductor device and/or a semiconductor chip including a plurality of semiconductor devices. The term "semiconductor component" may be understood as being the same as a semiconductor. As used in this specification, the phrase "at least one of A, B, or C" includes within its scope "only A", "only B", "only C", "A and B", "B and C", "A and C" and "A, B, and C".

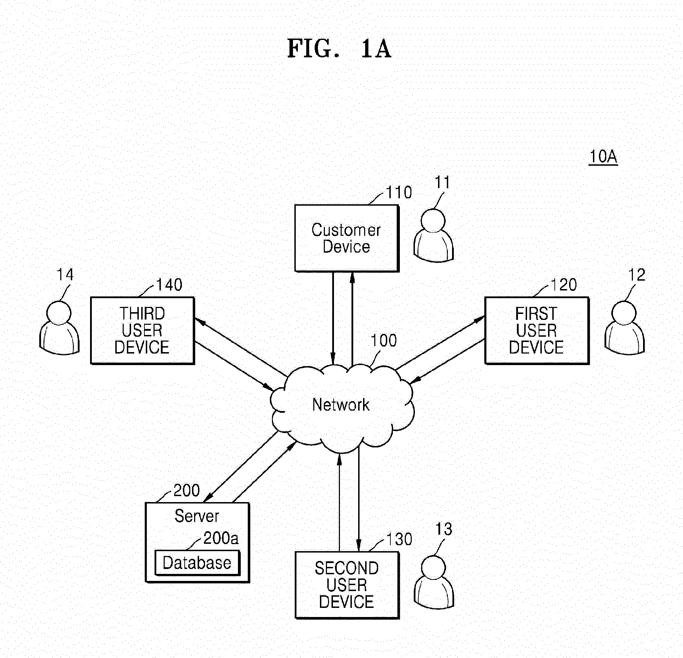

FIGS. 1A to 1E illustrate network systems according to various embodiments.

Referring to FIG. 1A, a network system 10A may include a customer device 110, a first user device 120, a second user device 130, and a third user device 140, and a server 200, which are connected to one another through a network 100. In an embodiment, the server 200 may provide a semiconductor transaction service. According to an embodiment, the network system 10A may include a terminal, computer, a user device, or the like, which may be accessed by a customer 11, a first user 12, a second user 13, or a third user 14. For example, the customer 11, the first user 12, the second user 13, and the third user 14 may access the server 200 by using their respective devices, provide company information through the network 100, and participate, through the network 100, in a semiconductor transaction based on the provided company information. For example, each of the customer device 110, the first user device 120, the second user device 130, and the third user device 140 may access the server 200.

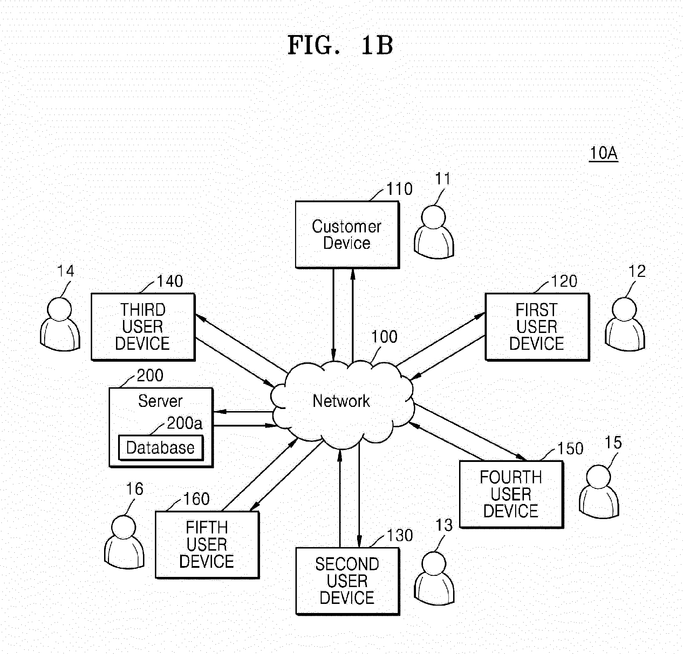

Hereinafter, the concept of each of the first user 12, the second user 13, and the third user 14 includes a plurality of semiconductor companies. According to an embodiment, the server 200 may be configured to be accessed by the customer device 110 and the first to third user devices 120, 130, and 140 of the network system 10A. For example, the customer device 110 and the first to third user devices 120, 130, and 140 may access information stored in the server 200 through the network 100. Here, it may be understood that information provision or response provision among the customer 11 and first to fifth users 12, 13, 14, 15, and 16 (see FIG. 1B) means that the customer device 110 and first to fifth user devices 120, 130, 140, 150, and 160 (FIG. 1B) provide and receive information through the server 200.

In the network system 10A according to an embodiment, the customer 11 may access the server 200 through the network 100 by using the customer device 110. Accordingly, the server 200 may receive a customer input or a customer proposal from the customer device 110 and may transmit a response from each of the first to third user devices 120, 130, and 140 to the customer device 110. According to an embodiment, a customer input or customer proposal may be a proposal or a product that a customer wants to produce.

The first user 12, the second user 13, and the third user 14 may access the server 200 through the network 100 by respectively using the first user device 120, the second user device 130, and the third user device 140. Accordingly, the server 200 may transmit a proposal to at least one of the first to third user devices 120, 130, and 140 and may receive a response from at least one of the first to third user devices 120, 130, and 140. According to an embodiment, the response received from at least one of the first to third user devices 120, 130, and 140 may include user information, user input, bidding information on semiconductors, or a user request.

According to an embodiment, the customer device 110 and the first to third user devices 120, 130, and 140 may include any one of stationary devices, such as a personal computer (PC), a network television (TV), a hybrid broadcast broadband TV (HBBTV), a smart TV, or an Internet protocol TV (IPTV), and mobile or handheld devices, such as a smartphone, a tablet PC, a notebook computer, and a personal digital assistant (PDA).

According to an embodiment, the network 100 for the communication connection among the customer device 110, the first user device 120, the second user device 130, the third user device 140, and/or the server 200 may be wired and/or wireless and may collectively refer to communication networks which support various communication standards or protocols for pairing and/or data transmission and reception among the customer device 110, the first user device 120, the second user device 130, the third user device 140, and/or the server 200.

According to an embodiment, the network 100 may be defined below as a platform implemented while communicating with the server 200 and the server 200 may correspond to a platform server. A wired/wireless network may include any one of the communication networks that are supported at present or in the future by standards, and one or more communication protocols for the wired/wireless network may be supported.

According to an embodiment, the network 100 may be formed by a network and communication standard or protocol for a wired connection, such as a universal serial bus (USB) connection, a composite video blanking sync (CVBS) connection, a component connection, a super-video (S-video) (analog) connection, a digital visual interface (DVI) connection, a high-definition multimedia interface (HDMI) connection, an RGB connection, or a D-subminiature (SUB) connection, and a network and communication standard or protocol for a wireless connection, such as a Bluetooth connection, a radio frequency identification (RFID) connection, an infrared data association (IrDA) connection, an ultra wideband (UWB) connection, a ZigBee connection, a digital living network alliance (DLNA) connection, a wireless local area network (WLAN) (Wi-Fi) connection, a wireless broadband (Wibro) connection, a world interoperability for microwave access (Wimax) connection, a high-speed downlink packet access (HSDPA) connection, a long-term evolution (LTE)/LTE-advanced (LTE-A) connection, or a Wi-Fi direct connection.

According to an embodiment, the server 200 may receive a proposal from the customer device 110, extract user information meeting conditions corresponding to the proposal, and transmit the proposal to at least one of the first to third user devices 120, 130, and 140 based on the user information. According to an embodiment, the proposal may include a semiconductor production proposal or semiconductor transaction information. For example, the semiconductor transaction information may include semiconductor transaction conditions, bidding information, delivery date information, or price information. According to an embodiment, the semiconductor transaction information may include proposal list information, which is generated based on the proposal, and information on work performed based on the proposal list information. According to an embodiment, a proposal list may include information on companies that perform semiconductor work classified based on a production proposal received from the customer device 110.

According to an embodiment, when the customer device 110 and any one of the first to third user devices 120, 130, and 140 log in, the server 200 may check the authentication of the service subscription thereof. When the authentication of the service subscription of the customer device 110 and one of the first to third user devices 120, 130, and 140 is confirmed, the server 200 may provide a main screen user interface to the customer device 110 and one of the first to third user devices 120, 130, and 140. The customer device 110 and one of the first to third user devices 120, 130, and 140 may input various types of information related to semiconductor transactions through a main screen service. According to an embodiment, the various types of information related to semiconductor transactions may be stored in a database 200a. In an embodiment, the database 200a may be provided on the server 200.

In the embodiments described below, each of the first to fifth users may include semiconductor-related companies. For example, the first user may include semiconductor design houses, the second user may include semiconductor foundry companies, the third user may include semiconductor post-processing companies, the fourth user may include semiconductor circuit design companies or design asset providers, and the fifth user may include semiconductor forwarders.

According to an embodiment, the server 200 may classify or categorize work according to a request received from the customer device 110. For example, when a production proposal received from the customer device 110 is about semiconductor devices, the server 200 may determine the work to be simple production work and provide the customer device 110 with a proposal list including only the second user 13.

However, when a production proposal received from the customer device 110 is about a product including a semiconductor chip package or a plurality of semiconductor devices, the server 200 may determine the work to be complex work and classify the semiconductor-related work to generate a proposal list. According to an embodiment, the semiconductor-related work may include semiconductor design, semiconductor production, semiconductor post-processing, semiconductor circuit design, and/or semiconductor forwarding. According to some embodiments, the semiconductor-related work may include at least one selected from the group consisting of semiconductor design, semiconductor production, semiconductor post-processing, semiconductor circuit design, and semiconductor forwarding.

According to an embodiment, the server 200 may automatically classify semiconductor-related work based on a production proposal or a production request received from the customer device 110 and generate at least one proposal list based on the production proposal or the production request. The server 200 may provide the at least one proposal list to the customer device 110. According to an embodiment, the proposal list may be generated based on first response information received from the first user device 120, second response information received from the second user device 130, and/or third response information received from the third user device 140. According to some embodiments, the proposal list may be generated based on at least one selected from the group consisting of first response information received from the first user device 120, second response information received from the second user device 130, and third response information received from the third user device 140.

For convenience of description, response information received from the first user device 120 may be referred to as the first response information. Response information received from the second user device 130 may be referred to as the second response information. Response information received from the third user device 140 may be referred to as the third response information. According to an embodiment, response information may include user information or bidding information related to a semiconductor transaction. According to an embodiment, the first user 12 may correspond to a semiconductor design house, the second user 13 may correspond to a semiconductor foundry company, and the third user 14 may correspond to a semiconductor post-processing company.

According to an embodiment, the customer 11 may correspond to an entity that orders a semiconductor or semiconductor product. For example, the customer 11 may correspond to a fabless company. According to an embodiment, the customer 11 may order semiconductors that may be used to manufacture a device or product to be produced, based on information on the device or product to be produced. For example, when the customer device 110 provides the server 200 with a proposal or a production request for semiconductors that may be used for product production, through the network 100, the first user device 120, the second user device 130, or the third user device 140 may access the server 200 and provide the server 200 with semiconductor information or one or more semiconductor parameters corresponding to the proposal. According to an embodiment, the semiconductor information or the one or more semiconductor parameters may include work information of the first user. For example, the semiconductor information may include, but is not limited to, semiconductor circuit design information, semiconductor manufacturing process information, semiconductor package assembly information, semiconductor test information, or semiconductor price information.

According to an embodiment, semiconductor circuit design information may include, but is not limited to, semiconductor design asset information, semiconductor chip design cost information, specifications of producible semiconductor chips, or information on the cost charged when a semiconductor chip is designed according to a request received from the customer device 110. The semiconductor circuit design information may include tasks related to semiconductor chip design that are not particular to semiconductor production facilities.

According to an embodiment, semiconductor manufacturing process information may include information related to a semiconductor foundry. For example, semiconductor foundry information may include, but is not limited to, information on semiconductor production capacity, semiconductor production facilities, types of semiconductor processes, a delivery date, or costs. The semiconductor foundry information may include information on all tasks using semiconductor production facilities.

According to an embodiment, semiconductor package assembly information or semiconductor test information may be referred to as semiconductor post-processing information. The semiconductor package assembly information may include, but is not limited to, information related to assembling a semiconductor device using manufactured semiconductor chips, packaging cost information, term information, or cost information. The semiconductor test information may include, but is not limited to, information related to testing a manufactured semiconductor chips, test cost information, test method information, or cost information.

According to an embodiment, the network system 10A may be configured such that semiconductors may be traded when the customer device 110 only transmits, to the server 200, information on a product to be produced. For example, when the customer device 110 provides the server 100 with the production request, or a proposal for a production of a product, the first to third user devices 120, 130, and 140 may provide the server 100 with semiconductor information as a response to the proposal. The product proposal received from the customer device 110 may include, but is not limited to, information on a manufacturing price of a product that the customer 11 wants to manufacture, a target semiconductor price, power consumption, graphic specifications, storage capacity, a use, semiconductor specifications, or stability. The product proposal may further include semiconductor information that may influence the performance or price of a product.

For example, when a proposal received from the customer device 110 is about smartphone manufacturing, the customer device 110 may provide a smartphone manufacturing cost, specific semiconductor information, power consumption, graphic specifications, storage capacity, or semiconductor specifications indicated by the customer 11 to the server 200 through the network 100. The first to third user devices 120, 130, and 140 may provide the server 200 with, as a response, semiconductor information corresponding to the proposal together with price information.

For example, the customer device 110 may input, to the server 200, whether to order a semiconductor chip itself or a product using a semiconductor chip. When the proposal received from the customer device 110 corresponds to an order for a semiconductor device itself, the server 200 may transmit a response request for a semiconductor transaction to the second user device 130, according to an embodiment. However, when the proposal received from the customer device 110 corresponds to an order for a product using a semiconductor chip, the server 200 may propose a response for a semiconductor transaction to the first to third user devices 120, 130, and 140, according to an embodiment.

For example, when a proposal received from the customer device 110 corresponds to the manufacture of a satellite, the customer device 110 may provide the server 200 with a satellite manufacturing price, specific semiconductor information, power consumption, graphic specifications, storage capacity, semiconductor specifications indicated by the customer 11, or conditions associated with stability. The first to third user devices 120, 130, and 140 may provide the server 200, as a response, with semiconductor information corresponding to the proposal together with price information.

According to an embodiment, the server 200 may receive information indicating whether a proposal received from the customer device 110 is about manufacturing of a finished product using a semiconductor or about manufacturing of a semiconductor device and may recommend a suitable company to the customer device 110.

For example, when a proposal received from the customer device 110 is about manufacturing of a camera or an image sensing device, the customer device 110 may provide the server 200 with a manufacturing price of a camera or an image sensing device, specific semiconductor information, power consumption, light-gathering ability, semiconductor specifications indicated by the customer 11, or conditions specified with a target stability. The first to third user devices 120, 130, and 140 may provide the server 200, as a response, with semiconductor information corresponding to the proposal together with price information.

For example, when a proposal received from the customer device 110 is about manufacturing of an element such as an image sensor, the customer device 110 may provide the server 200 with a manufacturing price of an image sensor, specific semiconductor information, power consumption, light-gathering ability, semiconductor specifications indicated by the customer 11, or conditions specified with the target stability. The first to third user devices 120, 130, and 140 may provide the server 200, as a response, with semiconductor information corresponding to the proposal together with price information.

For example, when a proposal received from the customer device 110 is about manufacturing of a server for providing an artificial intelligence (AI) application, the customer device 110 may provide the server 200 with a manufacturing price indicated by the customer 11, specific semiconductor information, power consumption, central processing unit (CPU) information, graphics processing unit (GPU) information, semiconductor specifications indicated by the customer 11, an operation speed, or conditions specified with the target stability. The first to third user devices 120, 130, and 140 may provide the server 200, as a response, with semiconductor information corresponding to the proposal together with price information.

As described above, the customer 11 may not be an entity limited to a certain field but may include all those who develop a product using a semiconductor. The examples described above are merely some examples of the types of the customer 11 and the customer device 110, which may participate in the network system 10A. A case where a new device using a semiconductor is embodied according to the development of technology may be included.

According to an embodiment, the server 200 of the network system 10A may provide the customer 11 with classification information regarding semiconductors associated with product production. For example, when the customer 11 wants to produce a product, such as a smartphone, which includes a plurality of semiconductor chips, the server 200 may provide the customer device 110 with semiconductor classification information specified for product production. According to an embodiment, the semiconductor classification information may include a semiconductor for an image sensor, a semiconductor for a memory device, a semiconductor for a processor, or a semiconductor for a graphics card, but the type of semiconductors is not limited thereto. The server 200 may variously provide semiconductor classification information corresponding to a proposal received from the customer device 110.

For example, the server 200 may provide, as semiconductor classification information, dynamic random access memory (DRAM), flash memory, emerging memory, other memory, an 8-bit microcontroller, a 16-bit microcontroller, a 32-bit microcontroller, a digital signal processor, a general-purpose logic, a field-programmable gate array (FGPA)/programmable logic device (PLD), a display driver, a liquid-crystal display (LCD) display driver integrated circuit (DDIC), an organic light-emitting diode (OLED) DDIC, a logic driver, a data converter, a switch, a multiplexer, a voltage regulator, an analog semiconductor, a diode, a transistor, an optoelectronic device, an LED, a coupler, an image sensor, a charge-coupled device (CCD) image sensor, a complementary metal-oxide semiconductor (CMOS) image sensor, a laser diode, a photo sensor, an application specific integrated circuit (ASIC), an application specific standard product (ASSP), a functional semiconductor, a multimedia processor, a discrete cellular baseband, a GPU, a CPU, an integrated baseband, an application processor, a radio frequency (RF) front-end, a transceiver, wired connectivity, wireless connectivity, power management, and touch and display driver integration (TDDI), but the semiconductor classification information is not limited thereto.

According to an embodiment, the network system 10A may obtain the information or parameters requested by the customer 11, which are received from the customer device 110, by using an artificial intelligence (AI) engine implemented in the server 200. According to an embodiment, the network system 10A may train the AI engine in the server 200 based on a semiconductor type, performance, or production capacity, which is included in information or parameters received from the first user device 120, the second user device 130, and/or the third user device 140, and previous semiconductor classification information. The network system 10A may then provide the customer device 110 with semiconductor classification information using the trained AI engine in the server 200. For example, the network system 10A may receive information or parameters from the customer device 110, input the received information or parameters into the trained AI engine in the server 200, and obtain, as output from the AI engine in the server 200, semiconductor classification information.

According to an embodiment, the first user 12 may correspond to a semiconductor design company. A semiconductor design company may refer to a company that optimizes a combination of semiconductors associated with a product that the customer 11 wants to be produced, according to a proposal received from the customer device 110, without having a semiconductor production facility. For example, when the customer device 110 inputs semiconductor design information specified for a product to be produced, the first user device 120 may provide the customer device 110 with optimized semiconductor design information with respect to information requested by the customer device 110. The optimized semiconductor design information may be determined considering a price for manufacturing a designed semiconductor product or device, power consumption, stability, a use, or an association with a foundry company. The first user device 120 may not only provide a single piece of optimized semiconductor design information but may also provide a plurality of pieces of semiconductor design information, based on the characteristics of a product to be produced, wherein the characteristics of the product are received from the customer device 110. According to an embodiment, the semiconductor design information of the first user device 120 may be determined based on a preset criterion received from the customer device 110.

For example, when a criterion that prioritizes the price of a product over the operation speed of the product is set in a proposal received from the customer device 110, the first user device 120 may provide the customer device 110 with semiconductor design information prioritizing the price as a first proposal and semiconductor design information prioritizing the operation speed as a second proposal. According to an embodiment, when a criterion that prioritizes the physical stability level of a semiconductor is set in a proposal received from the customer device 110, the first user device 120 may provide the customer device 110 with semiconductor design information that satisfies a stability condition received from the customer device 110.

According to an embodiment, the first user device 120 may provide the customer device 110 with semiconductor design information together with semiconductor foundry company information. For example, the first user device 120 may provide foundry company information optimized to a proposal received from the customer device 110, based on information on a designed semiconductor device. A semiconductor foundry company may refer to a company that produces semiconductors based on semiconductor design information. Optimized foundry company information may be determined based on a history of participating in related design and based on semiconductor design information provided from the first user device 120. For example, when a proposal received from the customer device 110 is for manufacturing a smartphone, the first user device 120 may provide the customer device 110 with semiconductor design information for a smartphone and information on a foundry company having the most history of production of a semiconductor specified for the smartphone. For example, when a proposal received from the customer device 110 is for manufacturing a satellite, the first user device 120 may provide the customer device 110 with semiconductor design information for a satellite and information on a foundry company having technology for ensuring the stability level of a semiconductor associated with the satellite.

The first user device 120 may also input alliance information indicating an alliance foundry company to the server 200. When a signal for selecting the first user 12 as an entity performing a semiconductor design task is received from the customer device 110, the server 200 may recommend, as the second user 13, a foundry company registered as an alliance foundry company of the first user 12. The second user 13 may be presented to the customer device 110 regardless of the recommendation of the first user 12. For example, when there is no recommendation of the first user 12 for foundry companies or it is determined that recommended users do not match a proposal received from the customer device 110, the server 200 may recommend the second user 13 independently of the first user 12.

As described above, the first user 12 may correspond to an entity that provides semiconductor design information to the customer 11 in the network system 10A, and information provided by the first user device 120 may correspond to semiconductor design information that is determined based on a preset criterion received from the customer device 110. The first user device 120 may provide semiconductor foundry company information to the customer device 110. According to an embodiment, the first user 12 may include a plurality of entities and each of the entities may access the server 200 through the first user device 120 thereof.

According to an embodiment, the second user 13 may correspond to a semiconductor foundry company. As described above, a semiconductor foundry company may correspond to a semiconductor manufacturer. According to an embodiment, the second user device 130 may receive a proposal including semiconductor design information from the customer device 110 and may provide semiconductor production information corresponding to the proposal received from the customer device 110. According to an embodiment, the semiconductor production information may include information, such as semiconductor production capacity, production process information, yield, price information, a production period, or a delivery method, but is not limited thereto. The semiconductor production information may include any information related to semiconductor production.

For example, when a proposal received from the customer device 110 is about memory device development, the second user device 130 may provide semiconductor production information to the customer device 110 through the server 200 based on the specification or performance of a memory device, which is received from the customer device 110. The customer device 110 may determine whether to transmit a semiconductor production request message to the second user device 130 based on the semiconductor production information provided by the second user device 130.

For example, when a proposal received from the customer device 110 is about satellite development, the second user device 130 may provide semiconductor production information to the customer device 110 through the server 200 based on the specification or performance of a semiconductor to be used in a satellite, which is received from the customer device 110. The customer device 110 may determine whether to transmit a semiconductor production request message to the second user device 130 based on the semiconductor production information provided by the second user device 130.

For example, when a proposal received from the customer device 110 indicates that semiconductors are to be delivered by a preset time limit, the second user device 130 may provide a semiconductor production period to the server 200 through the network 100 based on the proposal received from the customer device 110. The customer device 110 may determine whether to transmit a semiconductor production request message to the second user device 130 based on the semiconductor production period provided by the second user device 130.

According to an embodiment, there may be a plurality of second users 13. When the quantity of semiconductors according to a proposal received from the customer device 110 cannot be accommodated by a single second user 13 alone, a plurality of second user devices 130 may jointly provide response information to the customer device 110. For example, when the quantity of semiconductors corresponding to the proposal received from the customer device 110 exceeds the ability of a single second user 13 to produce, the server 200 may recommend a plurality of second users 13, which match the proposal received from the customer device 110, to the customer device 110. When semiconductor performance corresponding to the proposal received from the customer device 110 exceeds the ability of a single second user 13 to produce, the server 200 may recommend a combination of a plurality of second users 13, which meet the proposal received from the customer device 110, to the customer device 110. When paying a single foundry company is more cost-effective than paying a combination of a plurality of foundry companies in terms of the cost to be paid by the customer 11 in connection with semiconductor production, the server 200 may recommend a combination of a plurality of second users 13 to the customer device 110. According to an embodiment, the server 200 may store a semiconductor production capacity or price data of each of a plurality of foundry companies so as to recommend a single second user 13 or a combination of multiple second users 13.

According to an embodiment, information of the second user 13 may be provided on the recommendation of the first user 12. For example, the second user device 130 may provide semiconductor production information to the first user device 120 in advance and the first user device 120 may provide the information of the second user 13 to the customer device 110 based on semiconductor design information according to a proposal received from the customer device 110.

According to an embodiment, the third user 14 may correspond to a semiconductor post-processing company. A semiconductor post-processing company may include a semiconductor packaging company or a semiconductor test company. The semiconductor packaging company may be defined as a company that mounts semiconductor chip on a semiconductor product requested by a customer, which is produced by a foundry company in wafer units, to produce a product requested by the customer 11. The semiconductor test company may be defined as a company that tests the reliability and quality of semiconductor chips mounted on a device.

For example, the third user device 140 may provide packaging information or test information, each corresponding to a proposal received from the customer device 110, to the server 200 through the network 100 based on semiconductor design information received from the first user device 120 or semiconductor production information received from the second user device 130. According to an embodiment, the packaging information may include, but is not limited to, a packaging price, a work time, reliability, or device information used for circuit implementation. The packaging information may include any information that may influence semiconductor packaging. The test information may include, but is not limited to, wafer test information of a semiconductor designed by the first user 12 or produced by the second user 13, package test information, temperature test information, speed test information, power test information, test price information, or a failure rate. The test information may include any information that may influence the quality or reliability of a semiconductor.

As described above, when the customer device 110 provides the server 200 with a proposal for a product to be produced, the first user device 120, the second user device 130, or the third user device 140 may participate in bidding by providing semiconductor design information, semiconductor production information, or semiconductor post-processing information, which corresponds to the proposal. According to an embodiment, when the first user device 120, the second user device 130, or the third user device 140 participates in bidding in the network system 10A, the customer device 110 may select an appropriate first user 12 as a semiconductor design company and may allow payment to be made. The customer device 110 may also select an appropriate second user 13 as a semiconductor manufacturer and may allow payment to be made. The customer device 110 may also select an appropriate third user 14 as a semiconductor post-processing company and may allow payment to be made.

Information on a payment to be made by the customer 11 may be individually generated by each user or by a combination of the first user 12, the second user 13, and the third user 14 and transmitted to the customer device 110. For example, when providing response information associated with bidding, the first user device 120, the second user device 130, or the third user device 140 may also provide the customer device 110 with an offer in which the first user device 120, the second user device 130, and/or the third user device 140 participates, and payment information generated by a combination of the first user device 120, the second user device 130, and the third user device 140 may be provided to the customer device 110.

According to an embodiment, the server 200 may generate a combination of the first user device 120, the second user device 130, and the third user device 140 according to selection information received from the customer device 110. According to an embodiment, the server 200 may provide payment information to the customer device 110 according to selection information received from the first user device 120, the second user device 130, or the third user device 140. In other words, because the network system 10A allows a user of the first user device 120, the second user device 130, or the third user device 140 to send another user a message for selecting another user, the user of the first user device 120, the second user device 130, or the third user device 140 may present a combination of semiconductor companies for product production to the customer device 110 while maintaining an existing business relationship. When it is determined that the second user 13 has semiconductor inventory based on information received from the second user device 130, the server 200 may preferentially recommend the second user 13, which has a high inventory rate, to the customer device 110.

Referring to FIG. 1B, the fourth user device 150 and the fifth user device 160 may also participate in the network system 10A. Hereinafter, the concept of each of the fourth user 15 and the fifth user 16 includes a plurality of semiconductor companies.

According to an embodiment, the fourth user 15 may correspond to an electronic design automation (EDA) company or an intellectual property (IP) provider. The EDA company may refer to a company that designs a semiconductor circuit of a device according to a proposal received from the customer device 110. The IP provider may refer to a company that provides a semiconductor circuit design and design asset of a device according to the proposal received from the customer device 110, without having a semiconductor production facility. Here, for convenience of description, response information presented by the fourth user 15 may be referred to as fourth response information.

According to an embodiment, based on receiving a proposal for a product to be produced from the customer device 110, the fourth user device 150 may provide the customer device 110 with semiconductor circuit design information corresponding to the proposal. According to an embodiment, the semiconductor circuit design information may include, but is not limited to, the type of semiconductor applicable to circuit configuration, a circuit diagram, a circuit design cost, or information on a foundry company producing a semiconductor applicable to the circuit configuration. For example, in response to the proposal received from the customer device 110, the fourth user device 150 may provide the cost of designing a semiconductor circuit and foundry company information to the customer device 110 through the server 200.

According to an embodiment, the fourth user 15 may design a semiconductor circuit independently of or in association with the second user 13. For example, the fourth user device 150 may provide design information for a semiconductor circuit corresponding to the proposal received from the customer device 110 and may recommend a second user 13 optimized for the production of a semiconductor used in the semiconductor circuit.

For example, the fourth user 15 may be in a cooperative relationship with the second user 13. When the fourth user 15 is in a cooperative relationship with the second user 13, the fourth user device 150 may recommend an optimal foundry company, compare the cost of using a semiconductor produced by a foundry company that is not recommended with the cost of using a semiconductor produced by the recommended foundry company, and present a necessary cost to the customer device 110. In other words, the fourth user device 150 may design a semiconductor circuit, which corresponds and satisfies the proposal received from the customer device 110, recommend a foundry company appropriate for the semiconductor circuit to the customer device 110, and present a cost to the customer device 110.

According to an embodiment, the fifth user 16 may correspond to a semiconductor forwarder. According to an embodiment, the fifth user 16 may correspond to an entity included in the second user 13. According to an embodiment, the fifth user device 160 may provide the customer device 110 with semiconductor forwarder information, which meets a proposal received from the customer device 110, through the server 200. Here, for convenience of description, response information presented by the fifth user device 160 may be referred to as fifth response information.

As described above with reference to FIGS. 1A and 1B, when the customer 11 inputs a production proposal to the server 200 through the customer device 110, at least one of the first to fifth users 12, 13, 14, 15, and 16 may present response information to the server 200 through the network 100 by using its corresponding user device among the first to fifth user devices 120, 130, 140, 150, and 160. The customer device 110 may transmit, to the server 200 through the network 100, information for selecting at least one of the first to fifth users 12, 13, 14, 15, and 16 based on the received response information and may make a payment through the network 100. For example, by using information stored in the server 200, the network system 10A may provide a bidding system, in which the customer device 110 is provided with response information of at least one selected from the group consisting of a semiconductor design company, a foundry company, a semiconductor post-processing company, an EDA company, and a memory semiconductor manufacturer.

Referring back to FIGS. 1A and 1B, according to an embodiment, the network system 10A may allow a semiconductor transaction request to be received by at least one of the first to third user devices 120, 130, and 140.

For example, when a proposal received from the customer device 110 is related to the production of a semiconductor-related intermediate product, the customer device 110 may input a request to make a semiconductor-related transaction only for the first user device 120 and the network system 10A may conduct semiconductor-related bidding allowing only the first user device 120 to participate.

According to an embodiment, the network system 10A may have the first user 12, the second user 13, or the third user 14 as a new customer and perform a semiconductor transaction. For example, when the customer 11 corresponds to a semiconductor design house, the server of the network system 10A may receive only a transaction request related to semiconductor chip production from the customer device 110 and conduct semiconductor-related bidding allowing only the second user device 130 to participate. According to an embodiment, when a proposal received by the customer device 110 is related to simply a semiconductor packaging work, the network system 10A may be configured to conduct semiconductor-related bidding allowing only the third user device 140 to participate.

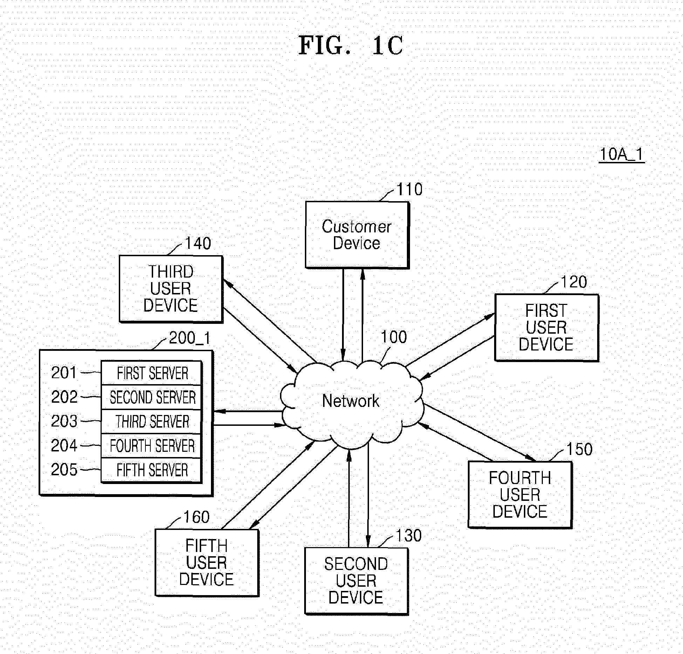

FIG. 1C illustrates that a semiconductor transaction is managed by a plurality of servers in a network system 10A_1, according to an embodiment.

Referring to FIG. 1C, according to an embodiment, a server 200_1 may include a first server 201, a second server 202, a third server 203, a fourth server 204, and/or a fifth server 205 and may independently manage semiconductor transactions among the customer device 110 and the first to fifth user devices 120, 130, 140, 150, and 160.

According to an embodiment, the first server 201 may manage semiconductor transactions between the customer device 110 and the first user device 120. For example, the first server 201 may receive a proposal related to semiconductor design from the customer device 110 and may store the proposal. According to an embodiment, the first server 201 may transmit a proposal related to semiconductor design to the first user device 120.

According to an embodiment, the second server 202 may manage semiconductor transactions between the customer device 110 and the second user device 130 or semiconductor transactions between the first user device 120 and the second user device 130. For example, the second server 202 may receive a proposal related to semiconductor chip production from the customer device 110 or the first user device 120 and may store the proposal. According to an embodiment, the second server 202 may transmit the proposal which is related to semiconductor chip production and received from the customer device 110 or the first user device 120, to the second user device 130.

According to an embodiment, the third server 203 may manage semiconductor transactions between the customer device 110 and the third user device 140, semiconductor transactions between the first user device 120 and the third user device 140, or semiconductor transactions between the second user device 130 and the third user device 140. For example, the third server 203 may receive a proposal related to semiconductor chip post-processing from the customer device 110, the first user device 120, or the second user device 130 and may store the proposal. According to an embodiment, the third server 203 may transmit a proposal related to semiconductor chip post-processing to the third user device 140.

According to an embodiment, the fourth server 204 may manage semiconductor transactions between the customer device 110 and the fourth user device 150, semiconductor transactions between the first user device 120 and the fourth user device 150, or semiconductor transactions between the second user device 130 and the fourth user device 150. For example, the fourth server 204 may receive a proposal related to semiconductor chip design asset provision from the customer device 110, the first user device 120, or the second user device 130 and may store the proposal. According to an embodiment, the fourth server 204 may also transmit a proposal related to semiconductor chip post-processing to the fourth user device 150.

According to an embodiment, the fifth server 205 may manage semiconductor transactions between the customer device 110 and the fifth user device 160, semiconductor transactions between the first user device 120 and the fifth user device 160, or semiconductor transactions between the second user device 130 and the fifth user device 160. For example, the fifth server 205 may receive a proposal related to semiconductor provision from the customer device 110, the first user device 120, or the second user device 130 and may store the proposal. According to an embodiment, the fifth server 205 may also transmit a proposal related to semiconductor forwarding to the fifth user device 160.

As described above with reference to FIG. 1C, semiconductor transactions may be independently managed by a plurality of servers, according to an embodiment. According to an embodiment, because semiconductor transactions are managed by a plurality of independent servers, the network system 10A_1 may provide a network platform capable of maintaining security of semiconductor-related companies.

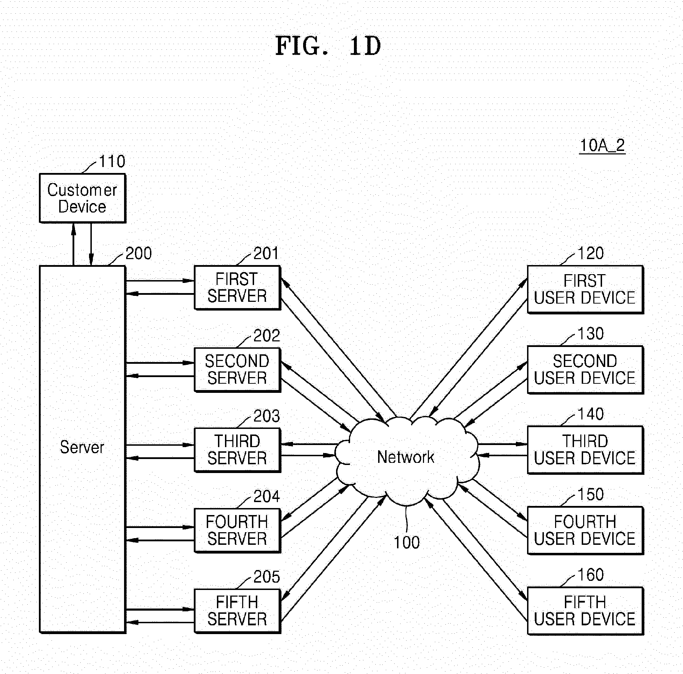

Referring to FIG. 1D, according to an embodiment, first to fifth servers 201, 202, 203, 204, and 205 of a network system 10A_2 may independently mediate, through the network 100, the provision of information, data, or messages related to semiconductor transactions among the first to fifth user devices 120, 130, 140, 150, and 160 and the customer device 110. The server 200 may be independent of the first to fifth servers 201, 202, 203, 204, and 205 and may manage communication between each of the first to fifth servers 201, 202, 203, 204, and 205 and the customer device 110.

According to an embodiment, the first server 201 may independently manage semiconductor transactions between the customer device 110 and the first user device 120. For example, the first server 201 may receive a semiconductor design-related proposal of the customer device 110 from the server 200 and may store the proposal. According to an embodiment, the first server 201 may be activated by the first user device 120 and may transmit specifications related to semiconductor design from the customer device 110 to the first user device 120.

According to an embodiment, the second server 202 may independently manage semiconductor transactions between the customer device 110 and the second user device 130 or semiconductor transactions between the first user device 120 and the second user device 130. For example, the second server 202 may receive a semiconductor chip production-related proposal of the customer device 110 or the first user device 120 from the server 200 and may store the proposal. According to an embodiment, the second server 202 may be activated by the second user device 130 and may transmit the semiconductor chip production-related proposal of the customer device 110 or the first user device 120 to the second user device 130.

According to an embodiment, the third server 203 may independently manage semiconductor transactions between the customer device 110 and the third user device 140, semiconductor transactions between the first user device 120 and the third user device 140, or semiconductor transactions between the second user device 130 and the third user device 140. For example, the third server 203 may receive a semiconductor chip post-processing-related proposal of the customer device 110, the first user device 120, or the second user device 130 from the server 200 and may store the semiconductor chip post-processing-related proposal. According to an embodiment, the third server 203 may be activated by the third user device 140 and may transmit a proposal related to semiconductor chip post-processing to the third user device 140.

According to an embodiment, the fourth server 204 may independently manage semiconductor transactions between the customer device 110 and the fourth user device 150, semiconductor transactions between the first user device 120 and the fourth user device 150, or semiconductor transactions between the second user device 130 and the fourth user device 150. For example, the fourth server 204 may receive a semiconductor chip design asset provision-related proposal of the customer device 110, the first user device 120, or the second user device 130 from the server 200 and may store the semiconductor chip design asset provision-related proposal. According to an embodiment, the fourth server 204 may be activated by the fourth user device 150 and may also transmit a proposal related to semiconductor chip design asset provision to the fourth user device 150.

According to an embodiment, the fifth server 205 may independently manage semiconductor transactions between the customer device 110 and the fifth user device 160, semiconductor transactions between the first user device 120 and the fifth user device 160, or semiconductor transactions between the second user device 130 and the fifth user device 160. For example, the fifth server 205 may receive a semiconductor provision-related proposal of the customer device 110, the first user device 120, or the second user device 130 from the server 200 and may store the semiconductor provision-related proposal. According to an embodiment, the fifth server 205 may be activated by the fifth user device 160 and may also transmit semiconductor forwarding-related specifications from the customer device 110, the first user device 120, or the second user device 130 to the fifth user device 160.

According to an embodiment, the first to fifth servers 201, 202, 203, 204, and 205 may communicate with each other through the network 100 and the first to fifth user devices 120, 130, 140, 150, and 160 may also communicate with each other through the network 100. For example, each user may request not to disclose provided information to a specific user and a server communicating with the user may not disclose the provided information to the specific user to which information disclosure is prohibited.

The customer device 110 may independently access the first to fifth user devices 120, 130, 140, 150, and 160 through the server 200 and thus proceed with a bidding process only for a necessary work.

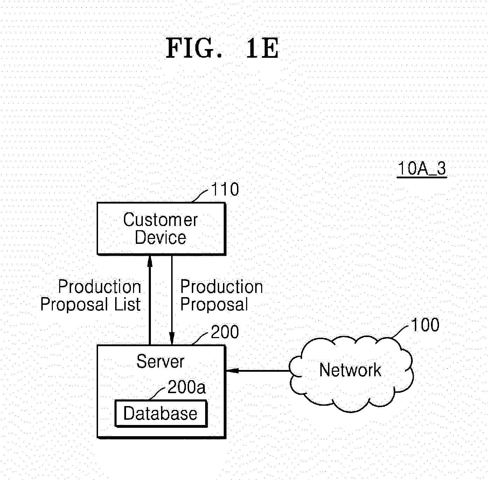

Referring to FIG. 1E, according to an embodiment, the server 200 of a network system 10A_3 may receive a production proposal from the customer device 110 and provide the customer device 110 with a production proposal list based on user information prestored therein. According to an embodiment, the server 200 may turn user information received from the network 100 into big data and store the big data. According to an embodiment, the user information may include production capacity information or inventory rate information, as described below, but is not limited thereto.

According to an embodiment, the server 200 may automatically classify semiconductor-related work based on a production proposal received from the customer device 110 and may generate at least one production proposal list. The server 200 may also provide at least one production proposal list to the customer device 110. According to an embodiment, a production proposal list may be generated based on first response information input by a first user, second response information input by a second user, and/or third response information input by a third user. According to some embodiments, a production proposal list may be generated based on at least one selected from the group consisting of first response information input by a first user, second response information input by a second user, and third response information input by a third user.

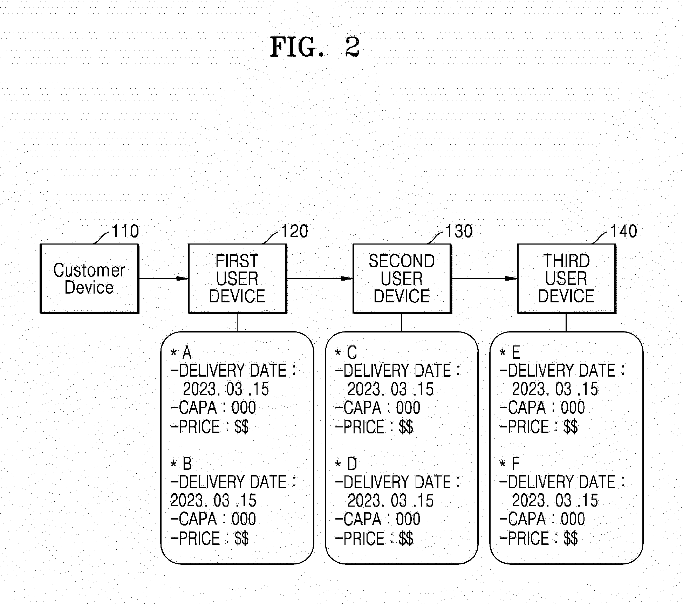

FIG. 2 illustrates the provision of user information in a network system, according to an embodiment.

As described above with reference to FIG. 1A, the customer device 110 may provide a proposal for a product to be produced to the first user device 120, the second user device 130, and the third user device 140 and each of the first to third user devices 120, 130, and 140 may provide response information to the customer device 110. In a network system according to an embodiment, the response information provided by the first user device 120 may include semiconductor circuit design information, the response information provided by the second user device 130 may include foundry company information, and the response information provided by the third user device 140 may include semiconductor post-processing company information.

For example, in a network system, company A or company B may provide response information to the first user device 120 and participate in bidding.

According to an embodiment, response information provided by the first user device 120 may include semiconductor design information. For example, the response information may include, but is not limited to, delivery date information, design capacity information (CAPA), or price information. According to an embodiment, the customer device 110 may determine at least one of company A and company B to be a first user based on the response information provided by company A and the response information provided by company B. Although one first user device 120 is illustrated in FIG. 2, company A and company B may provide response information by using their respective user devices.

In a network system according to an embodiment, company C or company D may provide response information to the second user device 130 and participate in bidding. According to an embodiment, response information provided by the second user device 130 may include semiconductor production information. For example, the response information may include, but is not limited to, delivery date information, production CAPA, or price information. According to an embodiment, the customer device 110 may determine at least one of company C and company D to be a second user based on the response information provided by company C and the response information provided by company D. According to an embodiment, company C and company D may independently participate in the bidding conducted in the network system and the customer device 110 may select both company C and company D as successful bidders. Alternatively, company C and company D may jointly participate in bidding by jointly providing a single piece of response information. Although one second user device 130 is illustrated in FIG. 2, company C and company D may provide response information by using their respective user devices.

In a network system according to an embodiment, company E or company F may provide response information to the third user device 140 and participate in bidding. According to an embodiment, response information provided by the third user device 140 may include semiconductor post-processing information. For example, the response information may include, but is not limited to, delivery date information, test CAPA, or price information. According to an embodiment, the customer device 110 may determine at least one of company E and company F to be a third user based on the response information provided by company E and the response information provided by company F. Although one third user device 140 is illustrated in FIG. 2, company E and company F may provide response information by using their respective user devices.

It is illustrated in FIG. 2 that two entities participate in the bidding for selection of each of the first to third users, but embodiments are not limited thereto and, in some embodiments, more than two entities may participate in the bidding.

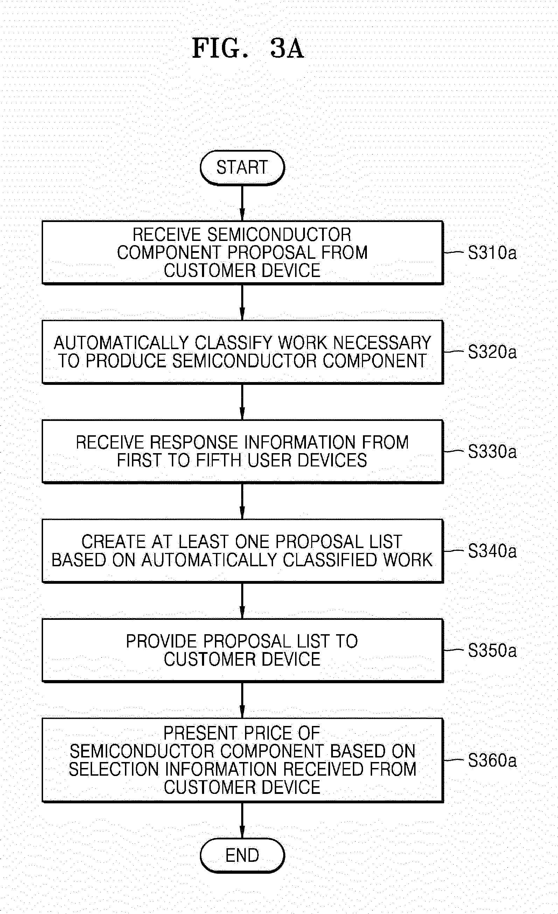

FIG. 3A is a flowchart of a semiconductor transaction method according to an embodiment. For example, the semiconductor transaction method of FIG. 3A may be performed by the network system 10A of FIG. 1B.

Referring to FIGS. 1B and 3A, according to an embodiment, the server 200 may receive a semiconductor component proposal from the customer device 110 in operation S310a.

For example, the customer 11 may access the server 200 of the network system 10A through the customer device 110 and may input information on a product to be produced. According to an embodiment, the type of customer 11 is not limited and may include any entity that produces a product by using a semiconductor. The examples described above are merely some of the types of the customer 11 and the customer device 110, which may participate in the network system 10A. A case where a new device using a semiconductor is embodied according to the development of technology may be included.

For example, when a proposal received from the customer device 110 is about smartphone manufacturing, the customer device 110 may provide a smartphone manufacturing cost, specific semiconductor information, power consumption, graphic specifications, storage capacity, or semiconductor specifications indicated by the customer 11 to the server 200 through the network 100. The first to third user devices 120, 130, and 140 may provide the customer device 110 with, as a response, semiconductor information corresponding to the proposal together with price information.

For example, when a proposal received from the customer device 110 corresponds to the manufacture of a satellite, the customer device 110 may provide the server 200 with a satellite manufacturing price, specific semiconductor information, power consumption, graphic specifications, storage capacity, semiconductor specifications indicated by the customer 11, or conditions specified with the target stability. The first to third user devices 120, 130, and 140 may provide the customer device 110, as a response, with semiconductor information corresponding to the proposal together with price information.

For example, when a proposal received from the customer device 110 is about manufacturing of a camera or an image sensing device, the customer device 110 may provide the server 200 with a manufacturing price of a camera or an image sensing device, specific semiconductor information, power consumption, light-gathering ability, semiconductor specifications indicated by the customer 11, or conditions specified with the target stability. The first to third user devices 120, 130, and 140 may provide the customer device 110, as a response, with semiconductor information corresponding to the proposal together with price information.

For example, when a proposal received from the customer device 110 is about manufacturing of a server for providing an AI application, the customer device 110 may provide the server 200 with a manufacturing price indicated by the customer 11, specific semiconductor information, power consumption, CPU information, GPU information, semiconductor specifications indicated by the customer 11, an operation speed, or conditions specified with the target stability. The first to third user devices 120, 130, and 140 may provide the customer device 110, as a response, with semiconductor information corresponding to the proposal together with price information.

According to an embodiment, when the semiconductor component proposal is received from the customer device 110, the server 200 may automatically classify work associated with produce a semiconductor component in operation S320a.

According to an embodiment, semiconductor-related work may include, but is not limited to, semiconductor circuit design, automatic designing of an electronic circuit using a semiconductor, provision of design assets associated with design a semiconductor circuit, semiconductor production, memory device production, or semiconductor post-processing. For example, the server 300 may classify semiconductor circuit design information, semiconductor production information, or semiconductor post-processing information based on the proposal received from the customer device 110.

The necessary work may be different according to the proposal received from the customer device 110. According to an embodiment, a semiconductor product may include a semiconductor chip, a device using a semiconductor, and a semiconductor device. According to an embodiment, the server of the network system 10A may classify the types of semiconductors according to proposal received from the customer device 110.

For example, when the proposal received from the customer device 110 is about manufacturing of a mobile camera module, the server 200 may classify semiconductor work information into work of designing, manufacturing, and assembling an imaging lens module suitable for an image sensor, unlike the case of manufacturing a fingerprint sensor module. According to an embodiment, classification of work information may be based on outsourcing units individually performed by general customers. For example, work information may be classified into, but is not limited to, work of a semiconductor design house, work of a semiconductor foundry company, work of a semiconductor post-processing company, work of an EDA company, work of a memory device manufacturer, and work of a forwarder.

According to an embodiment, the server 200 may provide the customer device 110 with semiconductor classification information associated with product production. For example, when the proposal received from the customer device 110 is about producing a product, such as a smartphone, using a plurality of semiconductor chips, the server 200 may provide the customer device 110 with semiconductor classification information associated with product production. According to an embodiment, the semiconductor classification information may include a semiconductor for an image sensor, a semiconductor for a memory device, a semiconductor for a processor, or a semiconductor for a graphics card, but the type of semiconductors is not limited thereto. The server 200 may variously provide semiconductor classification information corresponding to a proposal received from the customer device 110.

For example, the server 200 may provide, as semiconductor classification information, DRAM, flash memory, emerging memory, other memory, an 8-bit microcontroller, a 16-bit microcontroller, a 32-bit microcontroller, a digital signal processor, a general-purpose logic, an FGPA/PLD, a display driver, an LCD DDIC, an OLED DDIC, a logic driver, a data converter, a switch, a multiplexer, a voltage regulator, an analog semiconductor, a diode, a transistor, an optoelectronic device, an LED, a coupler, an image sensor, a CCD image sensor, a CMOS image sensor, a laser diode, a photo sensor, an ASIC, an ASSP, a functional semiconductor, a multimedia processor, a discrete cellular baseband, a GPU, a CPU, an integrated baseband, an application processor, an RF front-end, a transceiver, wired connectivity, wireless connectivity, power management, and TDDI, but the semiconductor classification information is not limited thereto.

According to an embodiment, the server 200 of the network system 10A may receive and learn the proposal from the customer device 110. According to an embodiment, the network system 10A may learn information of a product to be produced by using AI, wherein the server 200 may receive the information from the customer device 110, may classify the type of customer 11, and may recommend an appropriate semiconductor company to the customer device 110. For example, the server 200 may classify the customer 11 into a smartphone manufacturer, a satellite developer, an AI developer, a sensor manufacturer, a camera manufacturer, or a buyer and may select and recommend one of the first to fifth users as an appropriate semiconductor company. However, the type of customer 11 is not limited to those mentioned above.

For example, the server 200 may learn product specifications or requirements, which are received from a plurality of customers, and specifications or requirements, which have been received from a plurality of customers before. According to an embodiment, the server 200 may learn a company selected by a plurality of customers and may recommend a company that has been selected many times to a customer, which requests product specification and requirements similar to those that have been received before, based on a result of the learning. The server 200 may also store an externally trained algorithm and may recommend a semiconductor company to a customer based on the algorithm. For example, the server 200 may store an algorithm, which has been trained in an external super computer, classify semiconductor work at the request of a customer, and recommend an appropriate semiconductor company to the customer.

According to an embodiment, after the work associated with produce the semiconductor component is classified, the server 200 may receive response information from each of the first to fifth user devices 120, 130, 140, 150, and 160 in operation S330a. For example, the server 200 may classify semiconductor-related work, select users capable of performing classified work, and propose a bid to the users. According to an embodiment, when the semiconductor-related works include only semiconductor manufacturing and packaging, the server 200 may provide semiconductor bidding information only to the second user device 130 and the third user device 140.

According to an embodiment, the semiconductor bidding information may include the proposal received from the customer device 110 or the price information proposed by the customer 11. According to an embodiment, each of the first to fifth user devices 120, 130, 140, 150, and 160 may include a plurality of candidate users. Each user may participate in a bidding process for a semiconductor design house, a semiconductor foundry company, or a semiconductor post-processing company, which is included in the semiconductor bidding information.

According to an embodiment, the first user 12 may correspond to a semiconductor design company. The semiconductor design company may refer to a company that optimizes a combination of semiconductors associated with a product that the customer 11 wants to be produced, according to a proposal received from the customer device 110, without having a semiconductor production facility. According to an embodiment, the second user 13 may correspond to a semiconductor foundry company. The semiconductor foundry company may be defined as a semiconductor manufacturer. According to an embodiment, the third user 14 may correspond to a semiconductor post-processing company. A semiconductor post-processing company may include a semiconductor packaging company or a semiconductor test company. The semiconductor packaging company may be defined as a company that mounts semiconductor chip on a semiconductor product requested by a customer, which is produced by a foundry company in wafer units, to produce a product corresponding to the proposal received from the customer device 110. The semiconductor test company may be defined as a company that tests the reliability and quality of semiconductor chips mounted on a device.

According to an embodiment, the fourth user 15 may correspond to an EDA company or an IP provider. The EDA company may refer to a company that designs a semiconductor circuit of a device according to the request of the customer 11. The IP provider may refer to a company that provides a semiconductor circuit design and design asset of a device according to the request of the customer 11, without having a semiconductor production facility. According to an embodiment, the fifth user 16 may correspond to a semiconductor forwarder.

According to an embodiment, response information may include, but is not limited to, delivery date information, CAPA, or price information. According to an embodiment, response information provided by the first user device 120 may include semiconductor design information, response information provided by the second user device 130 may include semiconductor production information, and response information provided by the third user device 140 may include semiconductor post-processing information. According to an embodiment, response information provided by the fourth user device 150 may include information on an electronic circuit including a semiconductor. The information on an electronic circuit including a semiconductor may include, but is not limited to, power consumption of the electronic circuit, a design cost, related design asset information, or information on a semiconductor used in the electronic circuit. According to an embodiment, response information provided by the fifth user device 160 may include information about semiconductor forwarding. Information on a memory device including a semiconductor may include, but is not limited to, the capacity or speed of memory, standard information related to memory, the type of memory, the power consumption of memory, or price information.

According to an embodiment, based on receiving the response information, the server 200 may create at least one proposal list based on the automatically classified work in operation S340a.

According to an embodiment, a proposal list may be generated based on the first response information received from the first user device 120, the second response information received from the second user device 130, and/or the third response information received from the third user device 140. According to some embodiments, the proposal list may be generated based on at least one selected from the group consisting of the first response information received from the first user device 120, the second response information received from the second user device 130, and the third response information received from the third user device 140.

According to an embodiment, after generating the proposal list, the server 200 may provide the proposal list to the customer device 110 in operation S350a. According to an embodiment, there may be a plurality of proposal lists. The proposal lists may be prioritized based on a preset criterion received from the customer device 110.

According to an embodiment, the server 200 may provide the customer device 110 with the response information received from each of the first to fifth user devices 120, 130, 140, 150, and 160 and may receive a selection message from the customer device 110 with respect to a semiconductor company. For example, the server 200 of the network system 10A may receive a preset criterion from the customer 11 and may recommend appropriate first to fifth users 12, 13, 14, 15, and 16 based on the preset criterion. According to an embodiment, when the preset criterion of the customer 11 corresponds to price information, the server 200 may recommend the first to fifth users 12, 13, 14, 15, and 16 in ascending order of price based on the response information provided by the first to fifth users 12, 13, 14, 15, and 16.

According to an embodiment, the server 200 may independently provide the respective pieces of response information of the first to fifth users 12, 13, 14, 15, and 16 to the customer 11 or may provide an optimal user combination to the customer 11 by combining the respective pieces of response information of the first to fifth users 12, 13, 14, 15, and 16. For example, when the preset criterion of the customer 11 is to maintain stability at a certain temperature and pressure, the server 200 may recommend a combination of the first to fifth users 12, 13, 14, 15, and 16, which meets stability information request by the customer 11, based on the response information provided by each of the first to fifth users 12, 13, 14, 15, and 16.

According to an embodiment, when the proposal list is provided, the server 200 may present the price of the semiconductor component based on the selection information received from the customer device 110 in operation S360a.

According to an embodiment, the server 200 may estimate a cost for the product to be produced, based on the selection information received from the customer device 110, and may provide a payment system to the customer device 110.

According to an embodiment, the server 200 may provide the response information of one or more of a semiconductor design company, a foundry company, a semiconductor post-processing company, an EDA company, and a memory semiconductor manufacturer, thereby allowing a semiconductor transaction to be conducted online instead of offline. According to some embodiments, the server 200 may provide the response information of at least one selected from the group consisting of a semiconductor design company, a foundry company, a semiconductor post-processing company, an EDA company, and a memory semiconductor manufacturer, thereby allowing a semiconductor transaction to be conducted online instead of offline. In some embodiments, a semiconductor design company, a foundry company, a semiconductor post-processing company, an EDA company, and/or a memory semiconductor manufacturer may be allowed to freely participate in bidding conducted in the network system 10A, and accordingly, semiconductors may be traded in a fair competition order. Customers that have difficulty in accessing a semiconductor design company, a foundry company, a semiconductor post-processing company, an EDA company, and/or a memory semiconductor manufacturer according to the related art may be enabled to easily access semiconductor companies, and accordingly, technology indicated by the customers may be implemented. In some embodiments, the product may be manufactured according to the proposal list and the presented price. For example, in response to receiving a confirmation or approval of the proposal list and the price from the customer device 110, for example, a confirmation or approval of the proposal list and confirmation of payment through the payment system, the product may be manufactured according to the proposal list, for example, using the semiconductor design company, the foundry company, the semiconductor post-processing company, the EDA company, and/or the memory semiconductor manufacturer indicating in the proposal list.

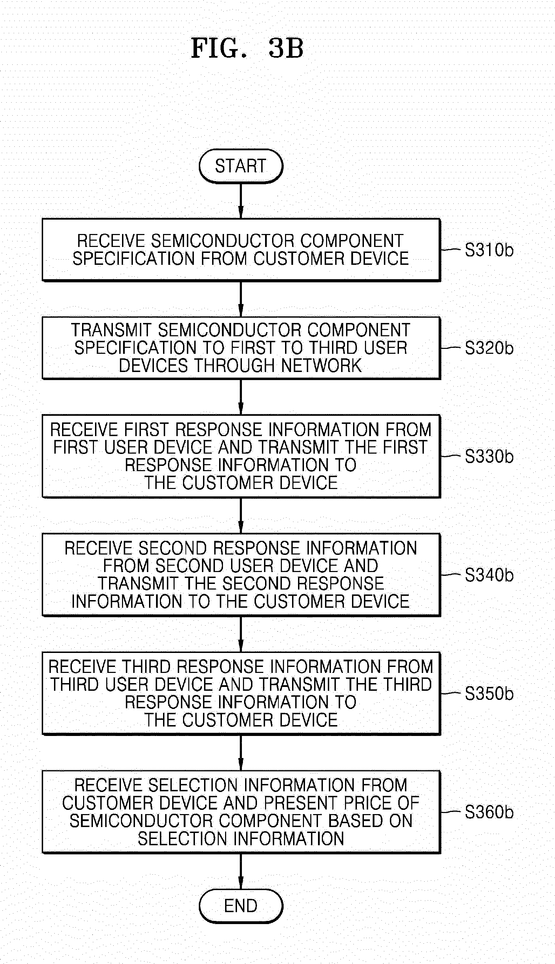

FIG. 3B is a flowchart of a semiconductor transaction method according to an embodiment. For example, the semiconductor transaction method of FIG. 3B may be performed by the network system 10A of FIGS. 1A and 1B.

Referring to FIGS. 1A, 1B, and 3B, according to an embodiment, the server 200 may receive the specification of a semiconductor component from the customer device 110 in operation S310b.

According to an embodiment, the semiconductor component specification may be set without limitation according to the type of customer 11. For example, the semiconductor component specification may include, but is not limited to, the purpose of a device, an environmental condition under which the device is used, budget for manufacturing of the device, or the type of semiconductor indicated by the customer 11.

According to an embodiment, after receiving the semiconductor component specification, the server 200 may transmit the semiconductor component specification to the first to third user devices 120, 130, and 140 through the network 100 in operation S320b.

According to an embodiment, when the server 200 transmits the specification of a product to be manufactured to the first to third user devices 120, 130, and 140, the server 200 may also transmit semiconductor bidding information to the first to third user devices 120, 130, and 140. For example, the server 200 may classify semiconductor work associated with the product to be manufactured, which is provided by the customer device 110, and may provide semiconductor bidding information to the first to third user devices 120, 130, and 140 so as to select a company to perform the classified work.

When the semiconductor component specification is received, according to an embodiment, the server 200 may receive first response information from the first user device 120 and transmit the first response information to the customer device 110 in operation S330b. According to an embodiment, the first response information may include design CAPA. For example, the first response information may include, but is not limited to, delivery date information, design CAPA, or price information.

When the semiconductor component specification is received, according to an embodiment, the server 200 may receive second response information from the second user device 130 and transmit the second response information to the customer device 110 in operation S340b. According to an embodiment, the second response information may include production information. For example, the second response information may include, but is not limited to, delivery date information, production CAPA, or price information.

When the semiconductor component specification is received, according to an embodiment, the server 200 may receive third response information from the third user device 140 and transmit the third response information to the customer device 110 in operation S350b. According to an embodiment, the third response information may include post-processing information. For example, the third response information may include, but is not limited to, delivery date information, test CAPA, or price information.

According to an embodiment, after receiving the first to third response information, the server 200 may receive selection information from the customer device and present a price of the semiconductor component based on the selection information received from the customer device 110 in operation S360b. According to an embodiment, the price of the semiconductor component may be determined based on the price information included in each of the first to third response information. For example, the price of the semiconductor component may correspond to the sum of a first price included in the first response information, a second price included in the second response information, and a third price included in the third response information. In some embodiments, the product may be manufactured according to the selection information from the customer and the price. For example, in response to receiving the selection information from the customer device 110, the product may be manufactured according to the selection information.

According to an embodiment, the server 200 may also provide the semiconductor bidding information to the fourth user device 150 and/or the fifth user device 160 as well as the first to third user devices 120, 130, and 140 and the fourth user device 150 and/or the fifth user device 160 may participate in the semiconductor bidding.

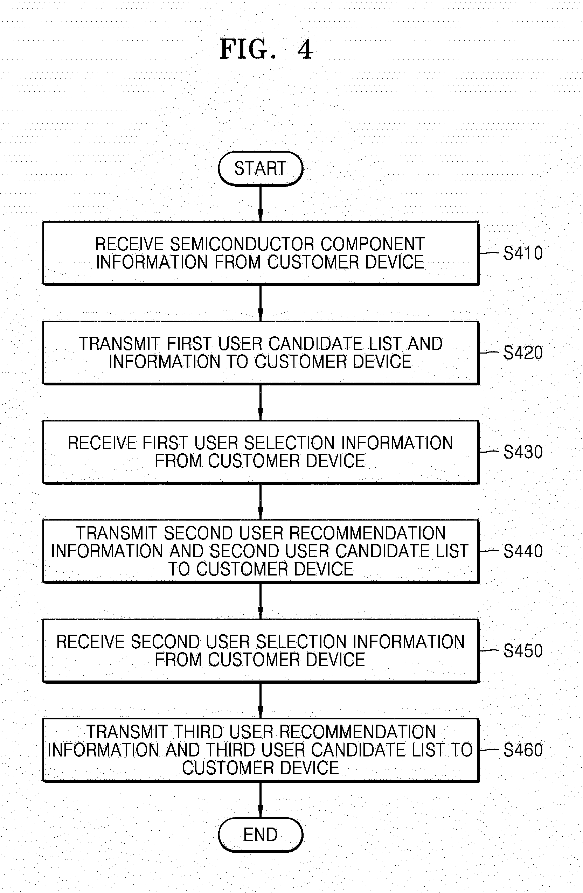

FIG. 4 is a flowchart of a process of conducting a transaction according to recommendations of users, according to an embodiment. For example, the semiconductor transaction method of FIG. 4 may be performed by the network system 10A of FIG. 1A.

There are cases where companies cooperate with each other in semiconductor design, manufacturing, and post-processing industries. When a semiconductor design company, a semiconductor manufacturer, and a semiconductor post-processing company have cooperated with one another, the customer 11 may specify that compatibility among a semiconductor design stage, a manufacturing stage, and/or a post-processing stage meet certain standards or lower limits. According to an embodiment, to improve the compatibility among the semiconductor design stage, the manufacturing stage, and/or the post-processing stage, the server 200 may allow a semiconductor transaction to be made according to the recommendations of users.

Referring to FIGS. 1A and 4, according to an embodiment, the server 200 may receive semiconductor component information or a semiconductor component parameter from the customer device 110 in operation S410. According to an embodiment, the semiconductor component information or the semiconductor component parameter may include, but is not limited to, the type of product to be produced by the customer 11, a production period, budget set for development, or semiconductor information associated with the development.

For example, when a smartphone manufacturing proposal is received from the customer device 110, the customer device 110 may input, to the network system 10A, a smartphone manufacturing cost, specific semiconductor information, power consumption, graphic specifications, storage capacity, or semiconductor specifications indicated by the customer 11 For example, when a satellite manufacturing proposal is received from the customer device 110, the customer device 110 may input, to the network system 10A, a satellite manufacturing price, specific semiconductor information, power consumption, graphic specifications, storage capacity, semiconductor specifications indicated by the customer 11, or conditions specified with the target stability. For example, when a camera or image sensing device manufacturing proposal is received from the customer device 110, the customer device 110 may input, to the network system 10A, a manufacturing price of a camera or an image sensing device, specific semiconductor information, power consumption, light-gathering ability, semiconductor specifications indicated by the customer 11, or conditions specified with the target stability. For example, when a proposal for manufacturing of a server for providing an AI application is received from the customer device 110, the customer device 110 may input, to the network system 10A, a manufacturing price indicated by the customer 11, specific semiconductor information, power consumption, CPU information, GPU information, semiconductor specifications indicated by the customer 11, an operation speed, or conditions specified with the target stability.

According to an embodiment, after receiving the semiconductor component information, the server 200 may provide the customer device 110 with a first user candidate list and first user candidate information in operation S420. According to an embodiment, first user candidates in the first user candidate list may correspond to semiconductor design companies. As described above with reference to FIGS. 1 to 1E, a semiconductor design company may refer to a company that optimizes a combination of semiconductors associated with a product that the customer 11 wants to be produced, according to a proposal received from the customer device 110, without having a semiconductor production facility. According to an embodiment, the first user candidate information may include, but is not limited to, delivery date information, design CAPA, or price information regarding semiconductor circuit design.

According to an embodiment, after providing the first user candidate list and the first user candidate information to the customer device 110, the server 200 may receive first user selection information from the customer device 110 in operation S430.

According to an embodiment, the customer 11 may access the server 200 through the customer device 110 and may select, as the first user 12, at least one candidate in the first user candidate list provided by the network system 10A.

According to an embodiment, after receiving the first user selection information, the server 200 may transmit second user recommendation information and a second user candidate list from the first user device 120 to the customer device 110 in operation S440.

According to an embodiment, second user candidates in the second user candidate list may correspond to semiconductor foundry companies. A semiconductor foundry company may be defined as a semiconductor manufacturer. The first user may recommend second user candidates based on the work history of each second user or the requirements of the customer 11.

According to an embodiment, after providing the second user candidate list to the customer device 110, the server 200 may receive second user selection information from the customer device 110 in operation S450.

According to an embodiment, the customer 11 may access the server 200 through the customer device 110 and may select, as the second user 13, at least one candidate in the second user candidate list provided by the network system 10A.

According to an embodiment, after receiving the second user selection information, the server 200 may transmit third user recommendation information and a third user candidate list from the second user device 130 to the customer device 110 in operation S460.

According to an embodiment, third user candidates in the third user candidate list may correspond to semiconductor post-processing companies. A semiconductor post-processing company may include a semiconductor packaging company or a semiconductor test company. The semiconductor packaging company may be defined as a company that mounts semiconductor chip on a semiconductor product requested by a customer, which is produced by a foundry company in wafer units, to produce a product or device requested by the customer 11. The semiconductor test company may be defined as a company that tests the reliability and quality of semiconductor chips mounted on a product or a device.

As described above with reference to FIG. 4, according to an embodiment, the first user 12 may recommend the second user 13 and the second user 13 may recommend the third user 14, and accordingly, the server 200 may provide information of optimal semiconductor companies meeting the request of the customer 11.

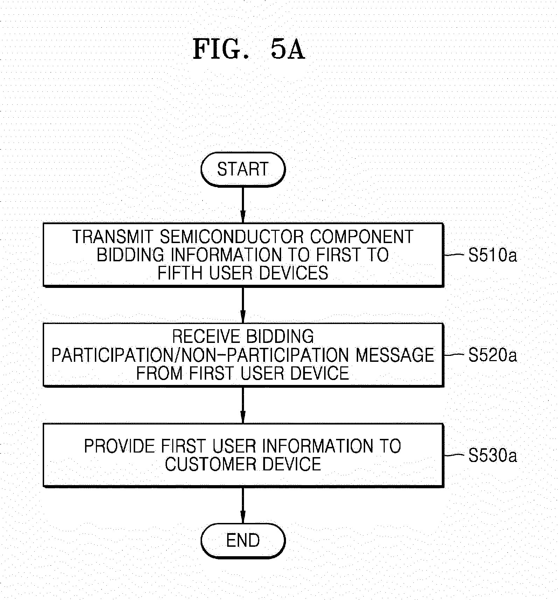

FIGS. 5A to 5C are flowcharts of an operation of providing user information in semiconductor transaction methods, according to various embodiments. For example, the semiconductor transaction methods of FIGS. 5A to 5C may be performed by the network system 10A of FIG. 1B.

Referring to FIGS. 1B and 5A, according to an embodiment, the server 200 may transmit semiconductor component bidding information to the first to fifth user devices 120, 130, 140, 150, and 160 in operation S510a.

According to an embodiment, the semiconductor component bidding information may include a production proposal for a product using a semiconductor and a bidding schedule for a semiconductor component. According to an embodiment, the semiconductor component specification may be set without limitation according to the type of customer 11. For example, the semiconductor component specification may include, but is not limited to, the purpose of a product, an environmental condition under which the product is used, budget for manufacturing of the product, or the type of semiconductor indicated by the customer 11.

When bidding information about the semiconductor component is transmitted, according to an embodiment, the server 200 may receive, from the first user device 120, a message (referred to as a bidding participation/non-participation message) indicating whether to participate in bidding in operation S520a.

According to an embodiment, first user candidates may correspond to semiconductor design companies. According to an embodiment, the first user candidates may access the server 200 of the network system 10A by using their respective user devices and may input, to their respective user devices, response information regarding whether to participate in the bidding, and the user devices may transmit the response information to the server 200. According to an embodiment, the response information may include, but is not limited to, delivery date information, design CAPA, or price information.

According to an embodiment, after receiving the bidding participation/non-participation message from the first user device 120, the server 200 may provide first user information to the customer device 110 in operation S530a.

For example, the first user device 120 may transmit the first user information to the customer device 110. According to an embodiment, the first user information may include, but is not limited to, company information of a first user candidate, response information, or linkage with a foundry company.

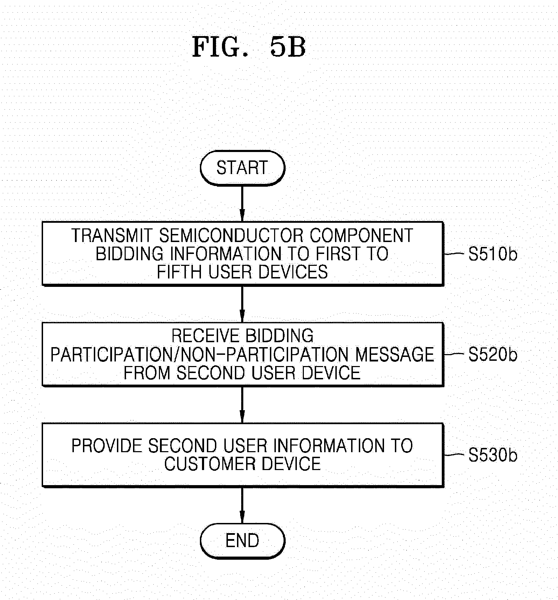

Referring to FIGS. 1B and 5B, according to an embodiment, the server 200 may transmit semiconductor component bidding information to the first to fifth user devices 120, 130, 140, 150, and 160 in operation S510b. According to an embodiment, the semiconductor component bidding information may include a production proposal for a product using a semiconductor and a bidding schedule for a semiconductor component. According to an embodiment, the semiconductor component specification may be set without limitation according to the type of customer 11. For example, the semiconductor component specification may include, but is not limited to, the purpose of a product, an environmental condition under which the product is used, budget for manufacturing of the product, or the type of semiconductor indicated by the customer 11.

When bidding information about the semiconductor component specification is transmitted, according to an embodiment, the server 200 may receive, from the first user device 120, a bidding participation/non-participation message indicating whether to participate in bidding in operation S520b.

According to an embodiment, second user candidates may correspond to semiconductor foundry companies. According to an embodiment, the second user candidates may access the server 200 of the network system 10A by using their respective user devices and provide the server 200 with response information regarding whether to participate in the bidding. According to an embodiment, the response information may include, but is not limited to, delivery date information, production CAPA, or price information.

According to an embodiment, after receiving the bidding participation/non-participation message from the second user device 130, the server 200 may provide second user information to the customer device 110 in operation S530b.

For example, the server 200 may receive second response information from the second user device 130 and provide the second response information to the customer device 110. According to an embodiment, the second user information may include, but is not limited to, company information of a second user candidate, response information, linkage with a design company, or linkage with a semiconductor post-processing company.

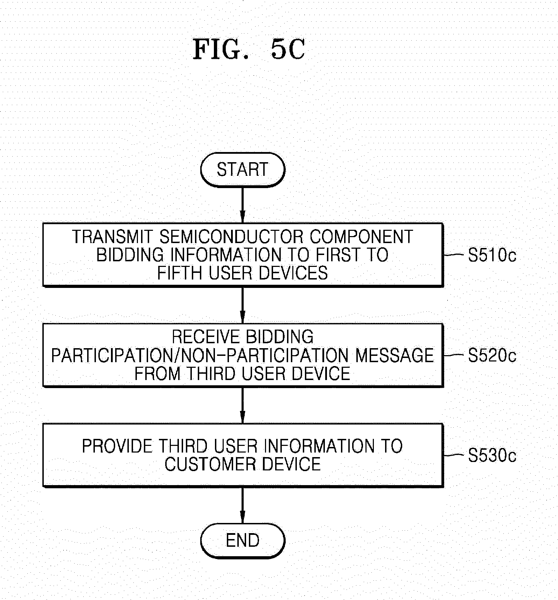

Referring to FIGS. 1B and 5C, according to an embodiment, the server 200 may transmit semiconductor component bidding information to the first to fifth user devices 120, 130, 140, 150, and 160 in operation S510c.

According to an embodiment, the semiconductor component bidding information may include a production proposal for a product using a semiconductor and a bidding schedule for a semiconductor component. According to an embodiment, the semiconductor component specification may be set without limitation according to the type of customer 11. For example, the semiconductor component specification may include, but is not limited to, the use of a product, an environmental condition under which the product is used, budget for manufacturing of the product, or the type of semiconductor indicated by the customer 11.

When bidding information about the semiconductor component specification is transmitted, according to an embodiment, the server 200 may receive, from the third user device 140, a bidding participation/non-participation message indicating whether to participate in bidding in operation S520c.

According to an embodiment, third user candidates may correspond to semiconductor post-processing companies. According to an embodiment, the third user candidates may access the server 200 of the network system 10A by using their respective user devices and provide the server 200 with response information regarding whether to participate in the bidding. According to an embodiment, the response information may include, but is not limited to, delivery date information, semiconductor test CAPA, or price information.

According to an embodiment, after receiving the bidding participation/non-participation message from the third user device 140, the server 200 may provide third user information to the customer device 110 in operation S530c.

According to an embodiment, the third user information may include, but is not limited to, company information of a third user candidate, response information, linkage with a design company, or linkage with a foundry company.

According to the embodiments described with reference to FIGS. 5A to 5C, the network system 10A may allow the customer 11 to compare a plurality of semiconductor design houses with each other, a plurality of semiconductor foundry companies with each other, or a plurality of semiconductor post-processing companies with each other so that the customer 11 may select an optimal combination thereof.

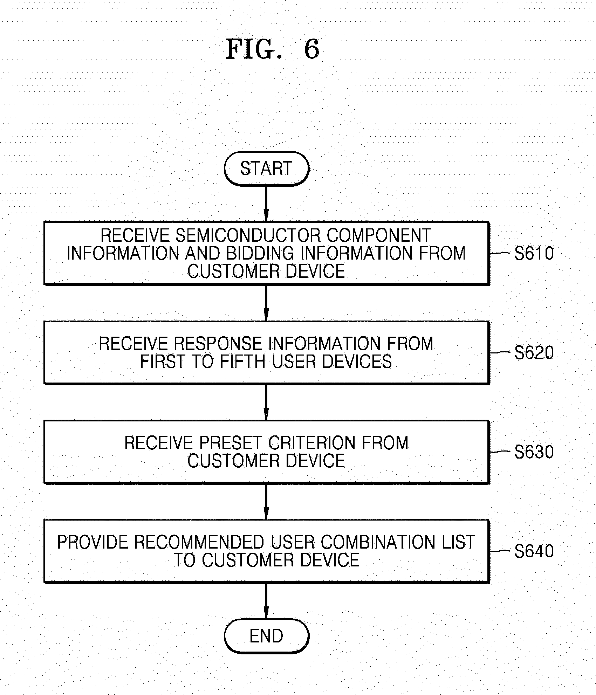

FIG. 6 is a flowchart of a process of providing a recommended user list to a customer in the network system 10A, according to an embodiment. For example, a semiconductor transaction method of FIG. 6 may be performed by the network system 10A of FIG. 1B.

Referring to FIGS. 1B and 6, according to an embodiment, the server 200 may receive semiconductor component information and bidding information from the customer device 110 in operation S610. According to an embodiment, the semiconductor component information may include a semiconductor component specification and the bidding information may include a bidding schedule.

According to an embodiment, after receiving the semiconductor component information and the bidding information, the server 200 may receive response information from the first to fifth user devices 120, 130, 140, 150, and 160 in operation S620.

According to an embodiment, the response information may include first to fifth user information. According to an embodiment, first user information may include semiconductor design house information, second user information may include semiconductor foundry company information, and the third user information may include semiconductor post-processing company information. The fourth user information may include EDA company information or IP provider information and the fifth user information may include semiconductor forwarder information.

For example, the first user information may include, but is not limited to, company information of a first user candidate, response information, or linkage with a foundry company. According to an embodiment, the second user information may include, but is not limited to, company information of a second user candidate, response information, linkage with a design company, or linkage with a semiconductor post-processing company. According to an embodiment, the third user information may include, but is not limited to, company information of a third user candidate, response information, linkage with a design company, or linkage with a foundry company.

According to an embodiment, the server 200 may receive a preset criterion from the customer device 110 in operation S630. For example, in some embodiments, based on receiving at least one of the first to fifth user information, the server 200 may receive the preset criterion from the customer device 110. According to an embodiment, the preset criterion may be set without limitation at the request of the customer 11.

For example, when the customer 11 inputs a criterion for designing a product at a low cost, the server 200 may receive the preset criterion input by the customer 11 from the customer device 110. For example, when the customer 11 inputs a criterion for maintaining stability at a certain temperature and pressure, the server 200 may receive the preset criterion from the customer device 110. For example, when the customer 11 inputs a criterion for at least a certain capacity of a memory device, the server 200 may receive the preset criterion from the customer device 110. For example, when the customer 11 inputs a criterion for light-gathering ability of a semiconductor device, the server 200 may receive the preset criterion from the customer device 110. For example, when the customer 11 inputs a criterion for the operation speed of a product, the server 200 may receive the preset criterion from the customer device 110. However, the preset criterion is not limited to those described above and may be variously set by the customer 11. A plurality of criteria may also be set. For example, the server 200 may receive, from the customer device 110, a criterion preset for at least a certain operation speed of a product and a criterion preset for at least a certain capacity of the product.

According to an embodiment, the server 200 may provide a recommended user combination list to the customer device 110 in operation S640. For example, in some embodiments, the server 200 may provide the recommended user combination list to the customer device 110 based on the preset criterion.

For example, the server 200 may transmit recommended user combination data to the customer device 110 and a recommended user combination may correspond to a combination of a semiconductor design company, a foundry company, and a semiconductor post-processing company. According to an embodiment, the server 200 may independently present first to fifth user candidates to the customer 11 or may derive optimal combinations and present recommended user combinations to the customer 11. According to an embodiment, a recommended user combination may be determined based on the present criterion received from the customer device 110.

For example, when the customer 11 presets a criterion for at least a certain operation speed of a product and a criterion for at least a certain capacity of the product, the server 200 may determine a design house, which is capable of design a semiconductor circuit having the at least certain speed, as the first user 12 and a foundry company, which manufactures a semiconductor used in a memory device having the at least certain capacity, as the second user 13 and may provide a result of the determination to the customer 11. According to an embodiment, when preset criteria received from the customer device 110 indicate that a product has at least a certain operation speed and at least a certain capacity and that the lowest price is recommended first, the server 200 may determine a design house, which is capable of design a semiconductor circuit having the at least certain speed, as the first user 12 and a foundry company, which manufactures a semiconductor used in a memory device having the at least certain capacity, as the second user 13 and may provide the customer device 110 with a plurality of user combinations in ascending order of bidding price.

According to the embodiment of FIG. 6, the server 200 may implement AI trained to find an optimal combination corresponding to the request of the customer 11. For example, the server 200 may learn first to fifth user candidates and recommend an optimal combination of first to fifth users to the customer 11 based on a result of the learning. The customer 11 may be provided with combinations of recommended semiconductor companies through the network system 10A and may compare the semiconductor companies with each other.

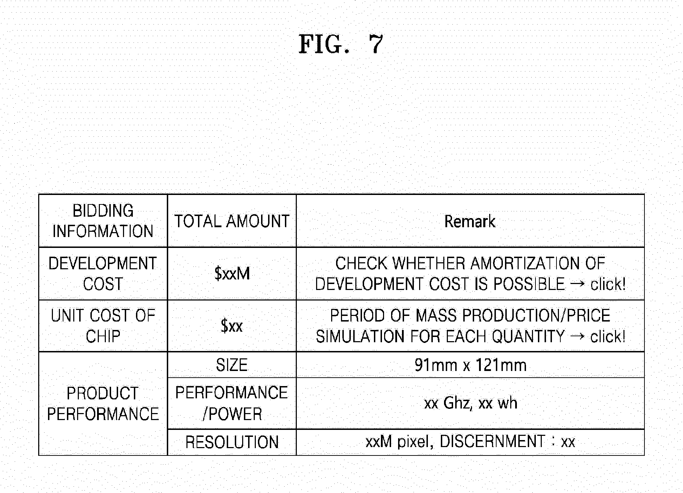

FIG. 7 illustrates information provided by a customer in the network system 10A of FIGS. 1A and 1B, according to an embodiment.

Referring to FIGS. 1A, 1B, and 7, according to an embodiment, the customer 11 may provide the network system 10A with a production proposal or selection information regarding a product to be produced. For example, the customer device 110 may transmit, to the server 200, the specification of a product to be produced, a development cost, the unit cost of a chip, and product performance (e.g., power or resolution).

According to an embodiment, based on receiving the development cost information from the customer device 110, the server 200 may allow a payment method, such as "check whether amortization of development cost is possible", to be selected. According to an embodiment, when chip unit cost information set by the customer 11 is received from the customer device 110, the server 200 may allow the customer device 110 to select an option for a mass production period of chips or price simulation for each quantity of chips.

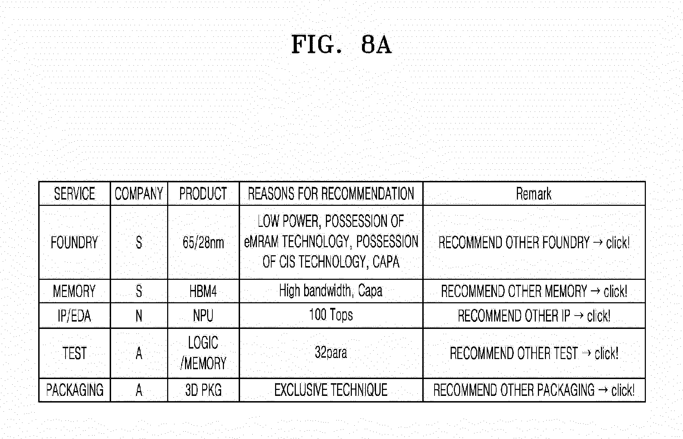

FIGS. 8A to 8D illustrate information provided to a customer in the network system 10A of FIGS. 1A and 1B, according to various embodiments.

Referring to FIGS. 1A, 1B, and 8A, according to an embodiment, the server 200 may provide the customer device 110 with response information of a semiconductor design house, a semiconductor design company, a design asset provider (or an IP provider), a foundry company, a semiconductor post-processing company, an EDA company, and/or a memory semiconductor manufacturer, or combination information of semiconductor companies satisfying the specification of a product to be produced. In some embodiments, the server 200 may provide the customer device 110 with response information of at least one selected from the group consisting of a semiconductor design house, a semiconductor design company, a design asset provider (or an IP provider), a foundry company, a semiconductor post-processing company, an EDA company, and/or a memory semiconductor manufacturer, or combination information of semiconductor companies satisfying the specification of a product to be produced.

For example, the server 200 may provide foundry company information to the customer device 110. The foundry company information may include the name (e.g., S) of a foundry company, product information (e.g., 65/28 nm), reasons for recommendation, or other foundry company recommendation information. For example, the server 200 may provide memory device company information to the customer device 110. The memory device company information may include the name (e.g., S) of a memory device manufacturer, product information (e.g., high bandwidth memory (HBM) 4), reasons for recommendation, or other memory device manufacturer recommendation information.

For example, the server 200 may provide EDA company information or IP provider information to the customer device 110. The EDA company information or the IP provider information may include the name (e.g., N) of an EDA company or an IP provider, product information (e.g., a neural processing unit (NPU)), reasons for recommendation, or other company recommendation information as illustrated in FIG. 8A. For example, the server 200 may provide semiconductor test company information to the customer device 110. The semiconductor test company information may include the name (e.g., A) of a semiconductor test company, the type of product (e.g., logic/memory), reasons for recommendation, or other company recommendation information. For example, the server 200 may provide semiconductor packaging company information to the customer device 110. The semiconductor packaging company information may include the name (e.g., A) of a semiconductor packaging company, the type of product (e.g., 3D PKG), reasons for recommendation, or other company recommendation information.

The embodiment described with reference to FIGS. 1A, 1B, and 8A is just an example of first to fifth user information provided to the network system 10A and may further include semiconductor information according to a proposal received from the customer device 110.

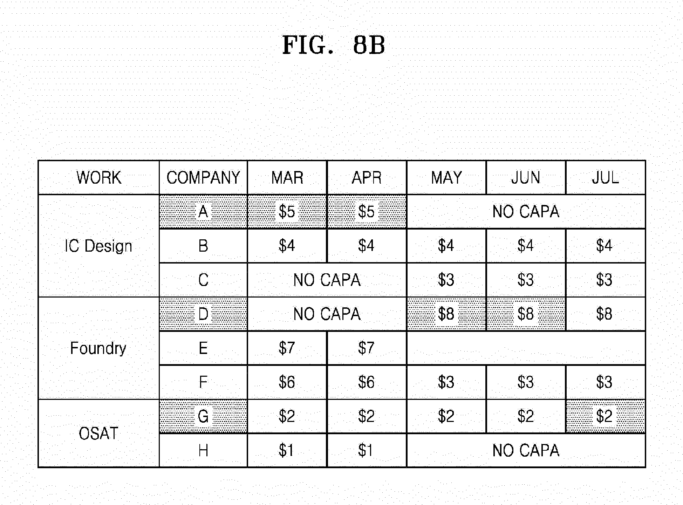

FIG. 8B illustrates semiconductor information that may be provided when the preset criterion received from the customer device 110 refers to quality-first recommendation, according to an embodiment.

Referring to FIGS. 1A, 1B, and 8B, according to an embodiment, the server 200 may recommend a semiconductor company regardless of price information when the preset criterion received from the customer device 110 refers to a quality-first approach.

For example, in the case of providing semiconductor design house information, the server 200 may recommend company A, company B, and company C in order when the server 200 has learned that the level of quality satisfaction is in the order of company A, company B, and company C.

For example, in the case of providing semiconductor foundry company information, the server 200 may recommend company D, company E, and company F in order when the server 200 has learned that the level of quality satisfaction is in the order of company D, company E, and company F.

For example, in the case of providing semiconductor post-processing (or outsourced semiconductor assembly and test (OSAT)) company information, the server 200 may recommend company G and company H in order when the server 200 has learned that the level of quality satisfaction is in the order of company G and company H. It is noted that FIG. 8B illustrates an example in which company A, company D and company G are recommended in response to the preset criterion received from the customer device 110 indicating a quality-first approach.

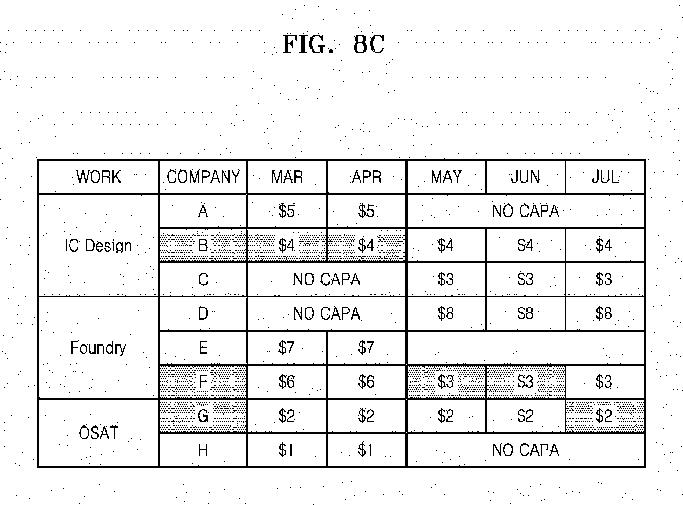

FIG. 8C illustrates semiconductor information that may be provided when the preset criterion received from the customer device 110 refers to price-first recommendation, according to an embodiment.

Referring to FIGS. 1A, 1B, and 8C, according to an embodiment, the server 200 may determine price information and recommend a semiconductor company when the preset criterion received from the customer device 110 refers to a price-first approach.

For example, in the case of providing semiconductor design house information, the server 200 may recommend company B, company A, and company C in order when the server 200 has learned that prices from the lowest are in the order of company B, company A, and company C.

For example, in the case of providing semiconductor foundry company information, the server 200 may recommend company F, company E, and company D in order when the server 200 has learned that prices from the lowest are in the order of company F, company E, and company D.

For example, in the case of providing semiconductor post-processing (or OSAT) company information, the server 200 may recommend company G and company H in order when the server 200 has learned that prices from the lowest are in the order of company G and company H. It is noted that FIG. 8C illustrates an example in which company B, company F and company G are recommended in response to the preset criterion received from the customer device 110 indicating a price-first recommendation.

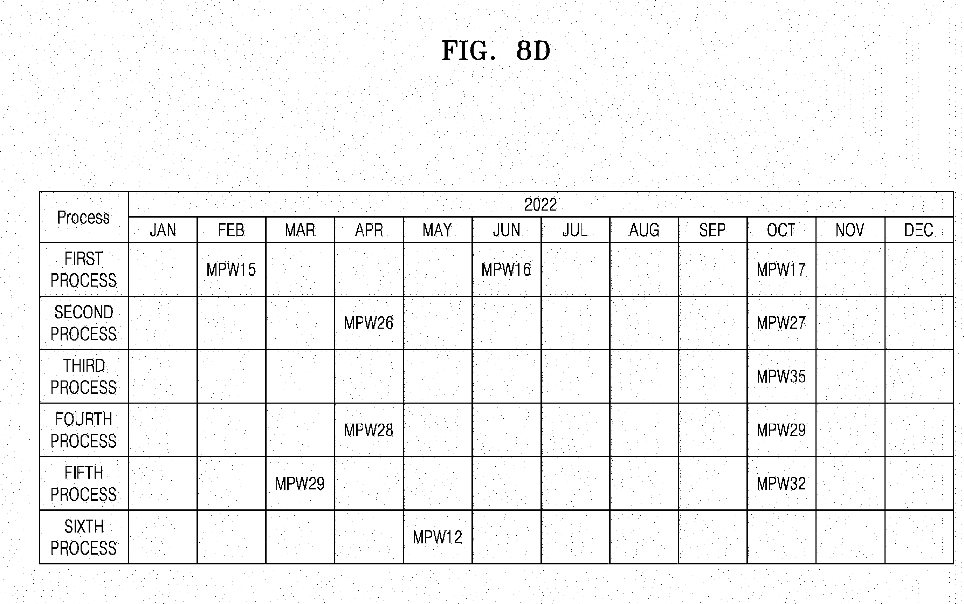

FIG. 8D illustrates an embodiment, in which the second user 13 presents producible semiconductors with respect to each process and period.

Referring to FIGS. 1A, 1B, and 8D, the second user device 130 may transmit, to the server 200, quantity and process information of producible semiconductors by periods. For example, the second user device 130 may propose that first to sixth processes include at least one of an LPE (Low Power Early) process, an LPP (Low Power Performance) process, and an FDS (Fully Depleted-Silicon on Insulator) process and may transmit the proposal to the server 200. The quantity of semiconductors producible by the second user 13 may be presented in multi-project wafer (MPW) units but is not limited thereto. The quantity of semiconductors may be presented in units representing various production methods.

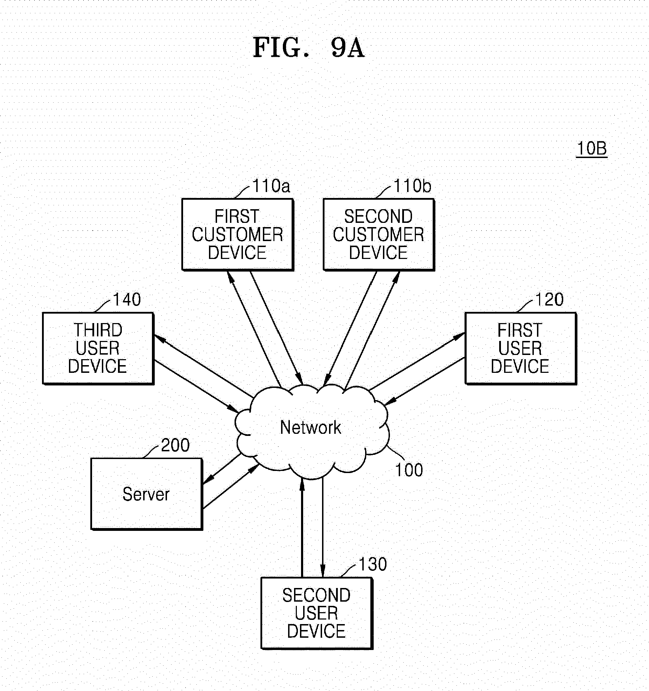

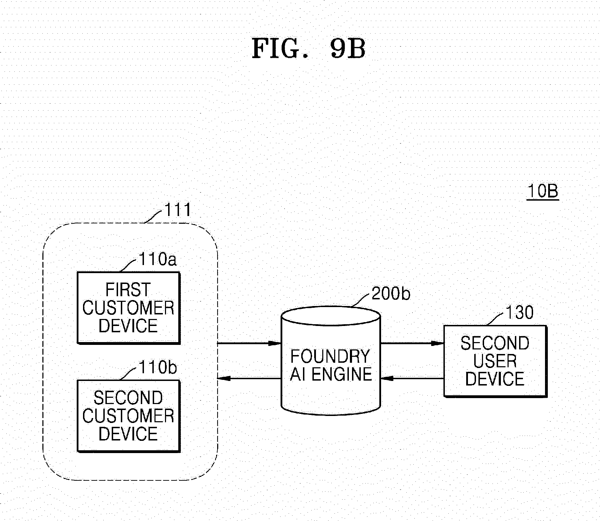

FIGS. 9A and 9B are diagrams of a network system 10B, in which a plurality of customers participate, according to an embodiment.

In the embodiment described below with reference to FIGS. 9A and 9B, the descriptions of a first user and a first user device 120, a second user and a second user device 130, and a third user and a third user device 140 are the same as those given with reference to FIG. 1A and thus repeated description thereof it omitted for conciseness. An embodiment of the network system 10B, in which a plurality of customers participate, is different from the embodiment of FIG. 1A and is described below with reference to FIGS. 9A and 9B.

Referring to FIG. 9A, according to an embodiment, a first customer device 110a and a second customer device 110b may simultaneously participate in the network system 10B. According to an embodiment, a first customer and a second customer may be entities that develop the same product as or different products from each other.

According to an embodiment, when the first customer device 110a and the second customer device 110b respectively provide the server 200 with proposals for a semiconductor component, the server 200 may provide the proposals to the first user device 120, the second user device 130, and the third user device 140. For example, when both the proposals respectively received from the first customer device 110a and the second customer device 110b propose to conduct bidding for a semiconductor to be used in a smartphone, the server 200 may provide the proposals to the first user device 120, the second user device 130, and the third user device 140 and may request a response regarding the participation in the bidding from the first to third user devices 120, 130, and 140.

According to an embodiment, the proposals respectively provided by the first customer device 110a and the second customer device 110b may include the specification of a product to be produced, a development cost, the unit cost of a chip, and product performance (e.g., power or resolution).

The first to third user devices 120, 130, and 140 may participate in the bidding based on the proposals respectively provided by the first customer device 110a and the second customer device 110b. The first to third user devices 120, 130, and 140 may participate in the bidding in a reverse auction manner based on the proposals respectively provided by the first customer device 110a and the second customer device 110b. For example, when a foundry company corresponding to the second user 13 may not meet both the proposals respectively provided by the first customer device 110a and the second customer device 110b, the second user device 130 may propose a semiconductor production contact to only one of the first customer device 110a and the second customer device 110b.

In other words, according to an embodiment, the server 200 may suggest that the first customer device 110a and the second customer device 110b select a configuration provided by one of the first to third user devices 120, 130, and 140 and may suggest that the first to third user devices 120, 130, and 140 select the first customer or the second customer.

Although it is illustrated in FIG. 9A that only the first customer device 110a and the second customer device 110b participate in the network system 10B, more than two customers may participate in the network system 10B.

According to an embodiment, the first customer device 110a and the second customer device 110b may transmit, to the server 200, evaluation information regarding a semiconductor product provided by a user. According to an embodiment, the server 200 may recommend appropriate users to future customers based on collected evaluation information. For example, after transactions with users and semiconductor production are finished, customers may store evaluation information on the users in the server 200. For example, customers may input delivery date compliance information, quality satisfaction, or other service satisfaction to the server 200, and the server 200 may recommend appropriate users to future customers taking into account the collected evaluation information from prior manufactured products by the users.

FIG. 9B illustrates that a plurality of customers make a semiconductor production contact with one foundry company in the network system 10B, according to an embodiment. The production process of semiconductors may have a period for semiconductor production after a production contact is made. For example, in some embodiments, the production contract may specify the period in which the semiconductor production process is to be performed. Accordingly, a foundry company manages a semiconductor inventory rate and, to enable a customer to receive indicated semiconductors at an indicated time, a semiconductor production contact needs to be made considering a semiconductor production period. FIG. 9B illustrates an embodiment of the network system 10B, in which the semiconductor inventory or production capacity of a foundry company is learned by foundry AI and a plurality of customers may make a contact considering the production capacity of the foundry company.

Referring to FIG. 9B, according to an embodiment, when a proposal of the first customer device 110a is the same as a proposal of the second customer device 110b, the server 200 may classify the first customer and the second customer into a customer combination 111, group the first customer device 110a and the second customer device 110b together, and match the group of the first customer device 110a and the second customer device 110b with a second user. According to an embodiment, the server 200 may enable the semiconductor transaction between the second user device 130 and each of the first customer device 110a and the second customer device 110b through a foundry AI engine 200b.

For example, the foundry AI engine 200b may determine that the proposal received from the first customer device 110a and the second customer device 110b may be satisfied as a result of considering the semiconductor inventory and production capacity of the second user, may determine the second user as an appropriate foundry company, and may provide second user information to the first customer device 110a and the second customer device 110b.

According to an embodiment, second user candidate devices may access the foundry AI engine 200b at any time and input current or future semiconductor inventory and production capacity into the foundry AI engine 200b. According to an embodiment, when semiconductor inventory and production capacities of a plurality of foundry companies are input to the foundry AI engine 200b, the foundry AI engine 200b may learn the semiconductor inventory and production capacities of the foundry companies participating in the network system 10B and may provide semiconductor inventory and production capacity information to customers, and accordingly, the second user may efficiently manage a semiconductor inventory rate.

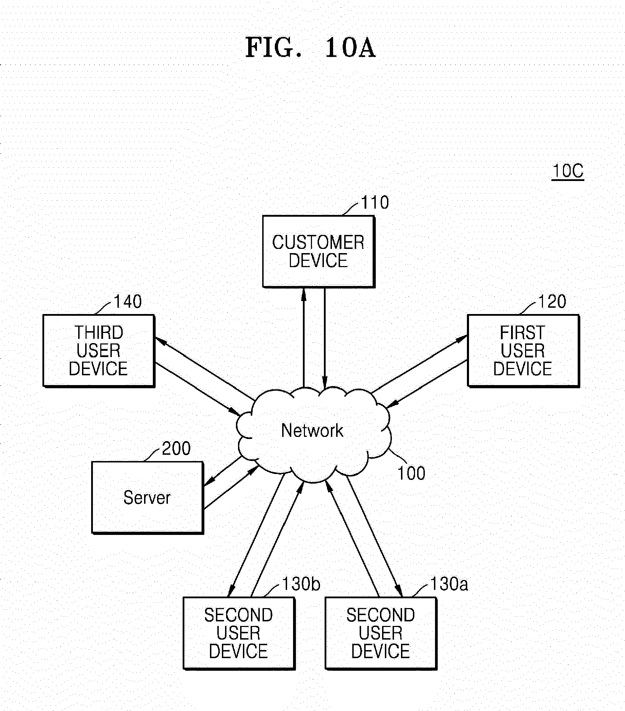

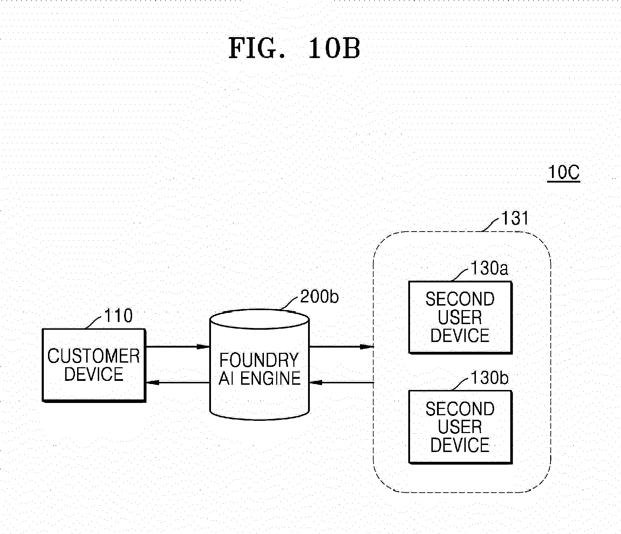

FIGS. 10A and 10B are diagrams of a network system 10C, in which a plurality of second users participate, according to an embodiment.

In the embodiment described with reference to FIGS. 10A and 10B, the descriptions of the customer device 110, the first user device 120, and the third user device 140 are the same as those in the embodiment of FIG. 1A and thus repeated descriptions thereof are omitted for conciseness. The embodiment of FIGS. 10A and 10B is different from the embodiment of FIG. 1A in that a plurality of second users participate in the network system 10C and is described below.

Referring to FIG. 10A, according to an embodiment, when a proposal for semiconductors exceeding the quantity that can be produced by a single foundry company is received from the customer device 110, the server 200 may allow a plurality of foundry companies to participate in semiconductor bidding. For example, when a proposal received from the customer device 110 requests semiconductors exceeding the quantity that can be produced by a single second user, the server 200 may provide the proposal received from the customer device 110 to a plurality of second user devices 130a and 130b and may allow the second user devices 130a and 130b to jointly participate in the semiconductor bidding conducted in the network system 10C. According to an embodiment, each of the second users may correspond to a foundry company.

FIG. 10A illustrates that a plurality of second users make a semiconductor production contact with a single customer device 110 respectively through the second user devices 130a and 130b in the semiconductor system 10C, according to an embodiment. When a single second user is proposed to make a bid in a situation where the second user fails to manage an inventory rate and has no inventory or when a proposal received from the customer device 110 includes a request for semiconductors exceeding the quantity that can be produced by a single second user, the second user devices 130a and 130b may form a second user combination 131 and jointly participate in bidding conducted in the network system 10C.

FIG. 10B illustrates an embodiment of the network system 10C, in which the semiconductor inventory or production capacity of a foundry company is learned by foundry AI and a plurality of foundry companies make a semiconductor transaction with a single customer.

Referring to FIG. 10B, according to an embodiment, when it is determined that the second user devices 130a and 130b produce the same type of semiconductors based on information received from the second user devices 130a and 130b, the server 200 may receive a proposal from the customer device 110 and match the second user devices 130a and 130b with the customer device 110 through the foundry AI engine 200b included therein. According to an embodiment, the server 200 may enable the semiconductor transaction between the second user devices 130a and 130b and the customer device 110 through the foundry AI engine 200b.

For example, the foundry AI engine 200b may determine that the proposal received from the customer device 110 may be satisfied as a result of considering the semiconductor inventory and production capacities of a plurality of second users, may determine the second user combination 131 as an appropriate foundry company, and may provide the second user combination 131 to the customer device 110.

According to an embodiment, second user candidates may access the foundry AI engine 200b at any time and input current semiconductor inventory and production capacity into the foundry AI engine 200b. According to an embodiment, when semiconductor inventory and production capacities of a plurality of foundry companies are input to the foundry AI engine 200b, the foundry AI engine 200b may learn the semiconductor inventory and production capacities of the foundry companies participating in the network system 10C and may provide semiconductor inventory and production capacity information to a customer, and accordingly, the second user combination 131 may efficiently manage a semiconductor inventory rate.

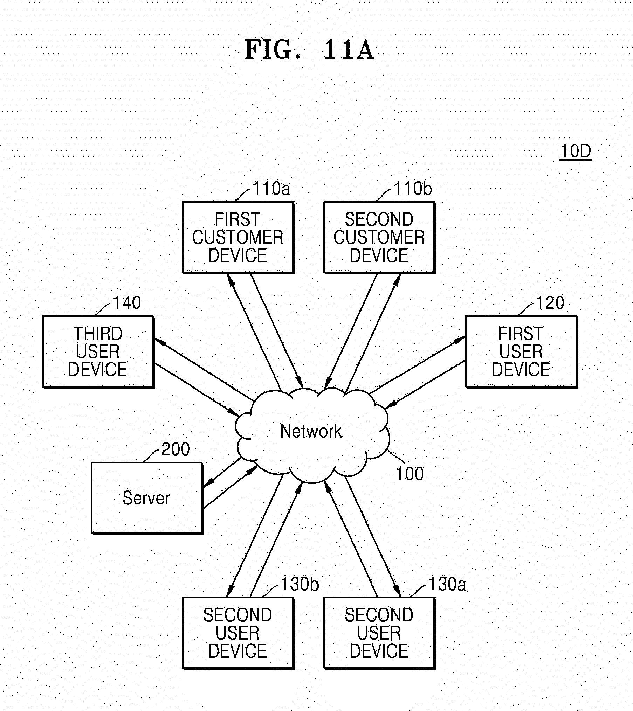

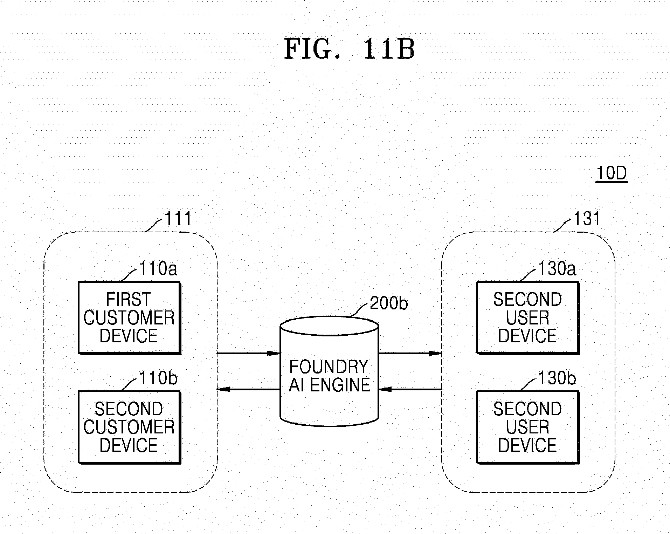

FIGS. 11A and 11B are diagrams of a network system 10D, in which a plurality of customers and a plurality of second users participate, according to an embodiment.

In the embodiment described with reference to FIGS. 11A and 11B, the descriptions of the customer device 110, the first user device 120, the third user device 140 are the same as those in the embodiment of FIG. 1A and thus a repeated description thereof is omitted for conciseness. An embodiment of the network system 10D, in which a plurality of second users and a plurality of customers participate, is different from the embodiment of FIG. 1A and is described below with reference to FIGS. 11A and 11B.

Referring to FIG. 11A, according to an embodiment, the first customer device 110a, the second customer device 110b, and the second user devices 130a and 130b may simultaneously participate in the network system 10D.

According to an embodiment, when each of the first customer device 110a and the second customer device 110b provide the server 200 with a proposal on a semiconductor component, the server 200 may provide the proposal provided by each of the first customer device 110a and the second customer device 110b to the first user device 120, the second user devices 130a and 130b, and the third user device 140. According to an embodiment, the first customer device 110a and the second customer device 110b may make a joint purchase of semiconductors.

For example, when the sum of the semiconductor quantities respectively proposed by the first customer device 110a and the second customer device 110b exceeds the quantity of semiconductors that can be produced by a single second user, the server 200 may provide respective proposals of the first customer device 110a and the second customer device 110b to the second user devices 130a and 130b and may allow the second user devices 130a and 130b to jointly participate in semiconductor bidding conducted in the network system 10D. According to an embodiment, each of the second users may correspond to a foundry company.

Referring to FIG. 11B, according to an embodiment, when a proposal of the first customer device 110a is the same as a proposal of the second customer device 110b, the server 200 may classify the first customer device 110a and the second customer device 110b into the customer combination 111 and may match the first customer device 110a and the second customer device 110b with the second user devices 130a and 130b. Referring to FIG. 11B, according to an embodiment, when it is determined that the second user devices 130a and 130b produce the same type of semiconductors based on information received from the second user devices 130a and 130b, the second user devices 130a and 130b may form a second user combination 131 and jointly participate in bidding, and the server 200 may receive proposals respectively from the first customer device 110a and the second customer device 110b and may match the second user devices 130a and 130b (i.e., the second user combination 131) with the first customer device 110a and the second customer device 110b. According to an embodiment, the server 200 may enable the semiconductor transaction between the second user combination 131 and the customer combination 111 through the foundry AI engine 200b.

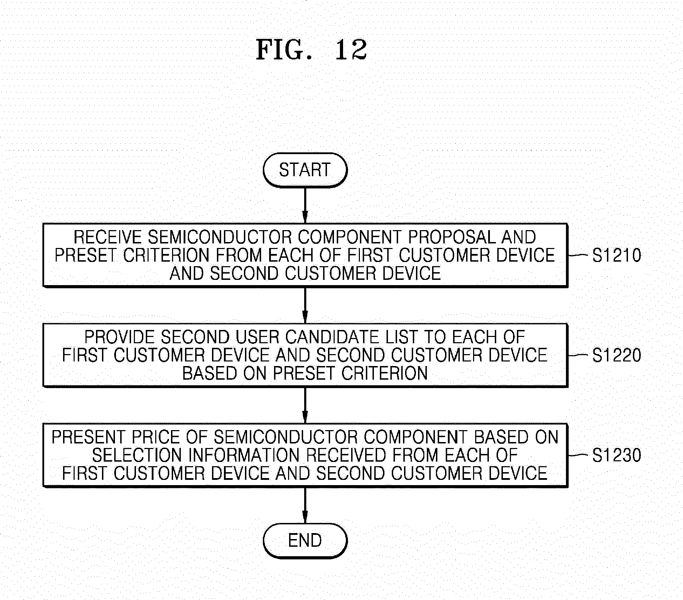

FIG. 12 is a flowchart of a process, in which a plurality of customers participate in the network system 10B of FIG. 9A, according to an embodiment. For example, when a plurality of customers participate in the network system 10A of FIG. 1A, a semiconductor transaction method may be performed by the network system 10B of FIG. 9A, in which proposals are respectively received from the customers.

Referring to FIGS. 9A and 12, according to an embodiment, the server 200 may receive a semiconductor component proposal and a preset criterion from each of the first customer device 110a and the second customer device 110b in operation S1210.

According to an embodiment, a semiconductor component proposal may be set without limitation according to the type of customer. For example, the semiconductor component proposal may include, but is not limited to, the use of a product, environmental conditions under which the product is used, budget for manufacturing of the product, or the type of semiconductor indicated by a customer. For example, a customer may input the specification of a product to be produced, a development cost, the unit cost of a chip, and product performance (e.g., power or resolution).

According to an embodiment, the preset criterion may be set without limitation according to a proposal received from each of the first customer device 110a and the second customer device 110b. For example, when the first customer device 110a and the second customer device 110b input a preset criterion for designing a product at a low cost, the server 200 may receive and store the preset criterion from the first customer device 110a and the second customer device 110b. For example, when the first customer device 110a and the second customer device 110b input a preset criterion for maintaining stability at a certain temperature and pressure, the server 200 may receive and store the preset criterion from the first customer device 110a and the second customer device 110b. For example, when the first customer device 110a and the second customer device 110b input a preset criterion for at least a certain capacity of a memory device, the server 200 may receive and store the preset criterion from the first customer device 110a and the second customer device 110b. For example, when the first customer device 110a and the second customer device 110b input a preset criterion for light-gathering ability of a semiconductor device, the server 200 may receive and store the preset criterion from the first customer device 110a and the second customer device 110b. For example, when the first customer device 110a and the second customer device 110b input a preset criterion for the operation speed of a product, the server 200 may receive and store the preset criterion from the first customer device 110a and the second customer device 110b.

However, the preset criterion is not limited to those described above and may be variously set by the customer 11. A plurality of criteria may also be set. For example, each of a first customer and a second customer may preset a criterion for at least a certain operation speed of a product and a criterion for at least a certain capacity of the product. According to an embodiment, the server 200 may determine a preset criterion based on data received from the first customer device 110a and the second customer device 110b.

According to an embodiment, after receiving the semiconductor component proposal and the preset criterion from each of the first customer device 110a and the second customer device 110b, the server 200 may provide a second user candidate list to the first customer device 110a and the second customer device 110b based on the preset criterion in operation S1220.

According to an embodiment, a second user candidate may correspond to a semiconductor foundry company. The semiconductor foundry company may be defined as a semiconductor manufacturer. For example, the server 200 may determine that the proposals received from the first customer device 110a and the second customer device 110b may be satisfied as a result of considering the semiconductor inventory and production capacities of second user candidates and may provide second user candidate information and list to the first customer device 110a and the second customer device 110b.

According to an embodiment, after providing the second user candidate list to the first customer device 110a and the second customer device 1 10b, the server 200 may present a price of a semiconductor component based on selection information, which is received from the first customer device 110a and the second customer device 110b, in operation S1230.

As described above with reference to FIGS. 9A and 12, the server 200 may group second users. For example, the server 200 may store second user information in a database and may recommend second users based on information on grouped second users when there is a request from the customer device 110. According to an embodiment, grouping of second users may be performed based on characteristics related to semiconductor production. For example, when a grouping criterion is production capacity, the server 200 may group second user candidates based on the available quantity of each second user candidate and may recommend second users to the customer device 110 in descending order of inventory rate. According to an embodiment, when a grouping criterion is performance, the server 200 may group second user candidates based on an error rate and may recommend second users to the customer device 110 in ascending order of error rate. According to an embodiment, when a grouping criterion is price, the server 200 may group second user candidates based on the price and may recommend second users to the customer device 110 in ascending order of price.

According to an embodiment, when a plurality of customer devices propose bidding, the server 200 may perform grouping of customers. For example, the server 200 may perform weight learning with respect to customers by using the AI engine 200b. As a specific example, the server 200 may collect data on customers' purchase histories and input the data into the AI engine 200b to learn the purchasing capability of each customer. The AI engine 200b may determine the weights of customers by quantifying the purchasing capability of each customer. According to an embodiment, the server 200 may group customers based on the purchasing capability of each customer according to a result of the learning. For example, a customer that purchases a certain quantity of semiconductors each year may be evaluated as having a high purchasing capability and determined to be preferentially recommended. However, a customer that delays payment or occasionally purchases a small quantity of semiconductors may be evaluated as having a low purchasing capability and excluded from recommendation.

According to an embodiment, grouping may be implemented by a grouping AI model. As a specific example, the server 200 may group customers using the grouping AI model. The server 200 may process bids received from a plurality of customer devices into data, input the data into the grouping AI model, and obtain an optimal customer group from the grouping AI model. The grouping AI model may be trained based on the weights for each customer, which are the output results of the AI engine 200b described above. As a result, the grouping AI model may be associated with the AI engine 200b. According to an embodiment, the grouping AI model may be constituted of a plurality of neural network layers. Each of the neural network layers may have a plurality of weight values and perform a neural network operation by performing an operation on the operation result of a previous layer and the weight values. The weight values of each of the neural network layers may be optimized by the learning result of the AI model. For example, the weight values may be updated during the learning such that a loss value or a cost value obtained by the AI model is decreased or minimized. An artificial neural network may include a deep neural network (DNN). For example, the artificial neural network may include, but is not limited to, a convolutional neural network (CNN), a DNN, a recurrent neural network (RNN), a restricted Boltzmann machine (RBM), a deep belief network (DBN), a bidirectional recurrent DNN (BRDNN), or a deep Q-network.

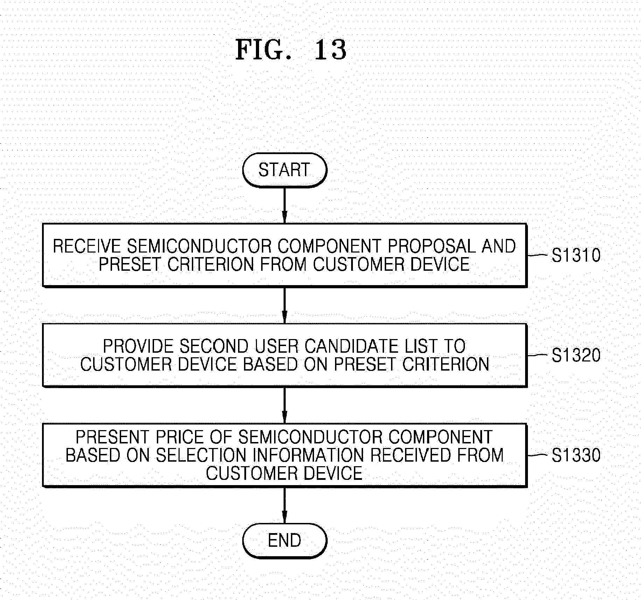

FIG. 13 is a flowchart of a process of providing foundry company information by using AI in the network system 10C of FIG. 10A, according to an embodiment. For example, when a plurality of second users participate in the network system 10A of FIG. 1A, a semiconductor transaction method may be performed by the network system 10C of FIG. 10A, in which response information is received from a plurality of second user devices.

Referring to FIGS. 10A and 13, according to an embodiment, the server 200 may receive a semiconductor component proposal and a preset criterion from the customer device 110 in operation S 1310.

According to an embodiment, a semiconductor component proposal may be set without limitation according to the type of customer. For example, the semiconductor component proposal may include, but is not limited to, the use of a product, environmental conditions under which the product is used, budget for manufacturing of the product, or the type of semiconductor indicated by a customer. For example, a customer may input the specification of a product to be produced, a development cost, the unit cost of a chip, and product performance (e.g., power or resolution).

According to an embodiment, after receiving the semiconductor component proposal and the preset criterion, the server 200 may provide a second user candidate list to the customer device 110 based on the preset criterion in operation S1320.

According to an embodiment, a second user candidate may correspond to a semiconductor foundry company. The semiconductor foundry company may be defined as a semiconductor manufacturer. For example, the server 200 may determine that the proposal received from the customer device 110 may be satisfied as a result of considering the semiconductor inventory and production capacities of second user candidates and may provide second user candidate information and list to the customer device 110.

According to an embodiment, after providing the second user candidate list to the customer device 110 and receiving second user selection information from the customer device 110, the server 200 may present a price of a semiconductor component based on the second user selection information, which is received from the customer device 110, in operation S1330.

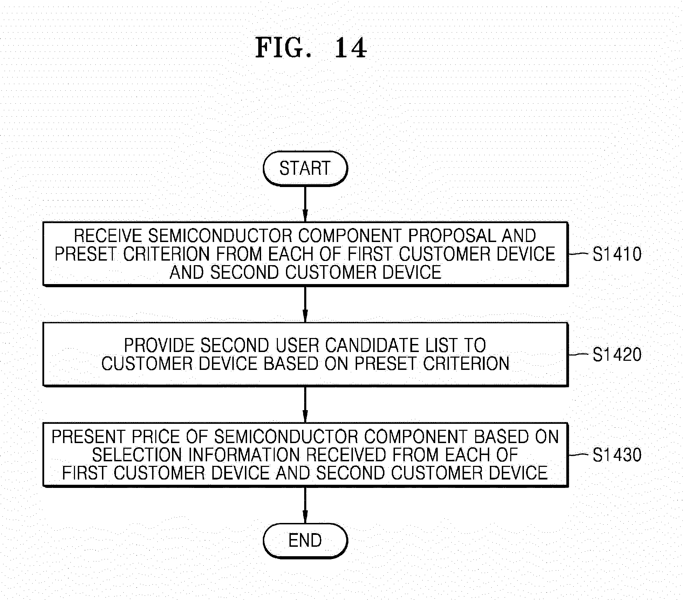

FIG. 14 is a flowchart of a process, in which a plurality of customers and a plurality of second users participate in the network system 10D of FIG. 11A, according to an embodiment. For example, when a plurality of customers and a plurality of second users participate in the network system 10A of FIG. 1A, a semiconductor transaction method may be performed by the network system 10D of FIG. 11A, in which a proposal is received from each of a plurality of customer devices and response information is received from each of a plurality of second user devices.

Referring to FIGS. 11A and 14, according to an embodiment, the server 200 may receive a semiconductor component proposal and a preset criterion from each of the first customer device 110a and the second customer device 110b in operation S1410.

According to an embodiment, a semiconductor component proposal may be set without limitation according to the type of customer 11. For example, the semiconductor component proposal may include, but is not limited to, the use of a product, environmental conditions under which the product is used, budget for manufacturing of the product, or the type of semiconductor indicated by the customer 11. For example, the customer 11 may input the specification of a product to be produced, a development cost, the unit cost of a chip, and product performance (e.g., power or resolution).

According to an embodiment, after receiving the semiconductor component proposal and the preset criterion, the server 200 may provide a second user candidate list to a customer device based on the preset criterion in operation S1420. According to an embodiment, the customer device may include at least one of the first customer device 110a and the second customer device 110b.

According to an embodiment, a second user candidate may correspond to a semiconductor foundry company. The semiconductor foundry company may be defined as a semiconductor manufacturer.

For example, the server 200 may determine that the proposals received from the first customer device 110a and the second customer device 110b may be satisfied as a result of considering the semiconductor inventory and production capacities of second user candidates and may provide second user candidate information and list to the first customer device 110a and the second customer device 110b.

According to an embodiment, after providing the second user candidate list to the first customer device 110a and the second customer device 110b and receiving second user selection information from the first customer device 110a and the second customer device 110b, the server 200 may present a price of a semiconductor component based on the second user selection information, which is received from the first customer device 110a and the second customer device 110b, in operation S1430.

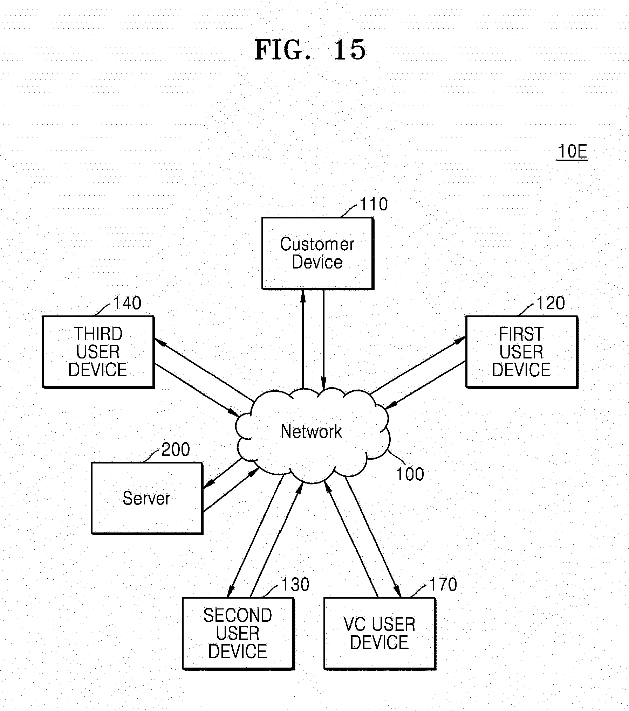

FIG. 15 is a diagram illustrating that customer information is provided to an investment entity in a network system 10E, according to an embodiment.

In the embodiment described with reference to FIG. 15, the descriptions of the customer device 110, the first user device 120, the second user device 130, and the third user device 140 are the same as those in the embodiment of FIG. 1A. Differently from the embodiment of FIG. 1A, an embodiment of the network system 10E, in which an investment entity (e.g., a venture capital (VC) entity) participates, is described below.

Referring to FIG. 15, in the network system 10E according to an embodiment, a venture capital (VC) user device 170 may check a product proposal received from the customer device 110 may make an investment proposal on product production according to the proposal received from the customer device 110. For example, when it is determined that the value of a semiconductor component to be produced according to the proposal received from the customer device 110 will increase in the future, the VC user device 170 may transmit an investment proposal on the semiconductor component production to the server 200. According to an embodiment, the investment proposal may include, but is not limited to, the amount of investment, the method of investment, acquisition or non-acquisition of shares, or provision or non-provision of consulting.

In the network system 10E according to an embodiment, the first user device 120, the second user device 130, and the third user device 140 may also participate in the investment proposal on the semiconductor component production. For example, in the network system 10E, the customer device 110 may transmit investment information, which includes a share offer, technology transfer, or an investment offer instead of payment for the cost of work of each user, to the first user device 120, the second user device 130, and the third user device 140. For example, according to the investment information provided by the customer device 110, a first user may transfer semiconductor design technology to a customer and receive the customer's share. For example, a second user may produce semiconductors for a customer and receive the customer' share.

According to an embodiment, an investment entity may be extracted based on foundry company information stored in the server 200. For example, the server 200 may store production capacity or inventory rate of each foundry company in a database and may recommend an investment entity considering the production capacity or inventory rate of the foundry company. According to an embodiment, the server 200 may recommend a foundry company, which has a high inventory rate or a sufficient production capacity, as a second user and an investment entity. According to an embodiment, the server 200 may recommend a foundry company selected as an investment entity to make a semiconductor transaction with a customer by way of technology transfer or share offer. According to an embodiment, the server 200 may recommend a foundry company having a high inventory rate as a second user and an investment entity, thereby decreasing the inventory rate of the foundry company and decreasing the customer's burden on semiconductor production costs.

However, a method of allowing a first user, a second user, a third user, or an investment entity to invest a customer is not limited to those described above. An investment and a transaction may be carried out in various manners, such as investment in kind, transfer of ideas, and investment in cash.

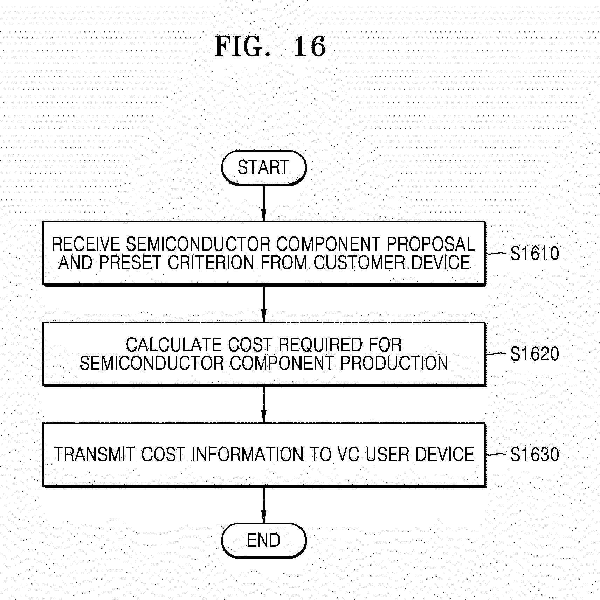

FIG. 16 is a flowchart that customer information is provided to an investment entity in the network system 10E of FIG. 15, according to an embodiment.

Referring to FIGS. 15 and 16, according to an embodiment, the server 200 may receive a semiconductor component proposal and a preset criterion from the customer device 110 in operation S1610.

According to an embodiment, a semiconductor component proposal may be set without limitation according to the type of customer. For example, the semiconductor component proposal may include, but is not limited to, the use of a product, environmental conditions under which the product is used, budget for manufacturing of the product, or the type of semiconductor indicated by a customer. For example, a customer may input the specification of a product to be produced, a development cost, the unit cost of a chip, and product performance (e.g., power or resolution).

According to an embodiment, after receiving the semiconductor component proposal and the preset criterion, the server 200 may calculate a cost associated with the semiconductor component production in operation S1620.

According to an embodiment, the cost associated with the semiconductor component production may correspond to a final price calculated according to the sum of proposed prices respectively received from the first to fifth user devices 120, 130, 140, 150, and 160.

According to an embodiment, when the cost associated with semiconductor component production is calculated, the server 200 may transmit cost information to the VC user device 170 in operation S1630.

According to an embodiment, a VC user may correspond to an investment entity. In the network system 10E according to an embodiment, an investment entity may check semiconductor component information and proposed product development cost information, which are provided from the customer device 110, and may invest in a customer's semiconductor component development. For example, when the value of a semiconductor component to be developed by a customer is determined to increase in the future, an investment entity may transmit an investment proposal to the server 200 through the VC user device 170. In some embodiments, in response to the VC user device 170 approving the investment proposal, the semiconductor component may be produced/manufactured according to the semiconductor component proposal and calculated cost.

According to an embodiment, the server 200 may store information of customers inputting product development plans. For example, the server 200 may store company information of each customer and transmit the company information including a product development plan to the VC user device 170.

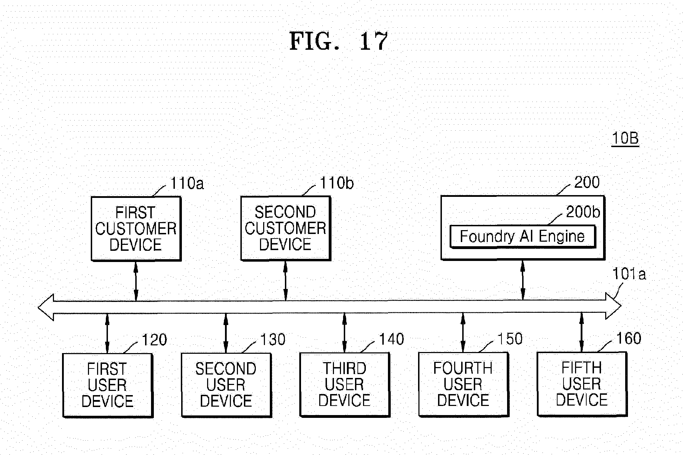

FIG. 17 is a block diagram illustrating that the network system 10B of FIGS. 9A and 9B is implemented by AI, according to an embodiment.

Referring to FIGS. 9A and 17, in the network system 10B according to an embodiment, the first customer device 110a, the second customer device 110b, the first user device 120, the second user device 130, the third user device 140, the fourth user device 150, and/or the fifth user device 160 may individually participate in semiconductor bidding. A foundry AI engine bus 101a may transfer, to the foundry AI engine 200b, information input to the first customer device 110a by a first customer, information input to the second customer device 110b by a second customer, information input to the first user device 120 by a first user, information input to the second user device 130 by a second user, information input to the third user device 140 by a third user, information input to the fourth user device 150 by a fourth user, and/or information input to the fifth user device 160 by a fifth user. The foundry AI engine 200b may learn the received information.

For example, the foundry AI engine 200b may learn and turn the information input to the first customer device 110a by the first customer, the information input to the second customer device 110b by the second customer, the information input to the first user device 120 by the first user, the information input to the second user device 130 by the second user, the information input to the third user device 140 by the third user, the information input to the fourth user device 150 by the fourth user, and/or the information input to the fifth user device 160 by the fifth user into big data. For example, the foundry AI engine 200b in FIG. 9B, FIG. 10B, and/or FIG. 11B may store a result of the learning in the server 200.

As a result of learning product development information received from the first customer device 110a or the second customer device 110b, the server 200 may identify and turn the latest trends in semiconductor-related products into big data. According to an embodiment, after identifying the latest trends in semiconductor-related products, the server 200 may recommend an optimal semiconductor company, which is derived according to the learning result, to the first customer device 110a and/or the second customer device 110b when bidding information regarding products using similar technology is input to the server 200.

The server 200 may also learn first to fifth user candidates and may recommend an optimal combination of first to fifth users to the first customer device 110a or the second customer device 110b based on a result of the learning.

Although the embodiment of only the network system 10B of FIGS. 9A and 9B is illustrated in FIG. 17, the foundry AI engine 200b may operate in the same manner in the network system 10C of FIGS. 10A and 10B or the network system 10D of FIGS. 11A and 11B. For example, when semiconductor inventories and production capacities are input by a plurality of foundry companies, the foundry AI engine 200b in FIG. 9B, FIG. 10B, and/or FIG. 11B may learn the semiconductor inventories and the production capacities of the foundry companies participating in the network system 10C or 10D and may provide semiconductor inventory and production capacity information to the first customer device 110a or the second customer device 110b, and accordingly, second users may efficiently manage semiconductor inventory rate.

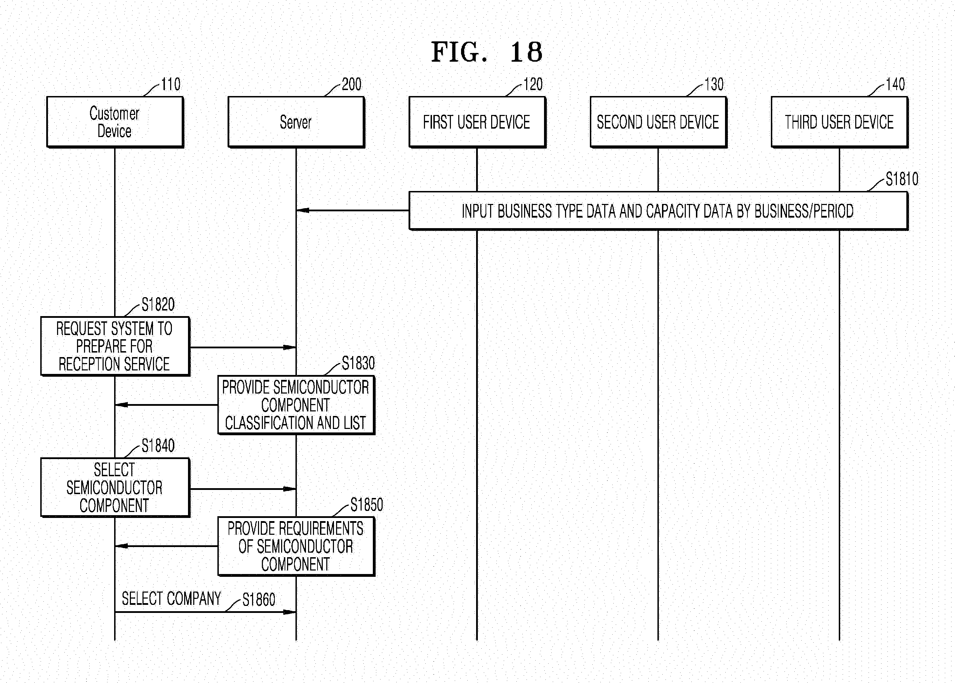

FIG. 18 is a flowchart of a process, in which a semiconductor transaction is made in the network system 10A of FIG. 1A, according to an embodiment.

Referring to FIGS. 1A and 18, according to an embodiment, each of the first user device 120, the second user device 130, and the third user device 140 may input, to the server 200, business type data and capacity data by business/period in operation S1810. According to an embodiment, the server 200 may be configured to operate as a semiconductor transaction platform in the network system 10A. According to an embodiment, the first user device 120 may transmit information input by a semiconductor design house to the server 200, the second user device 130 may transmit information input by a semiconductor foundry company to the server 200, and the third user device 140 may transmit information input by a semiconductor post-processing company to the server 200.

In the network system 10A according to an embodiment, a customer may request a transaction system to prepare for service reception through the customer device 110 in operation S1820.

According to an embodiment, based on receiving the request from the customer device 110, the server 200 may provide a semiconductor component classification and list in operation S1830.

In the network system 10A according to an embodiment, the server 200 may provide the customer device 110 with semiconductor classification information for product production. For example, For example, when the customer produces a product, such as a smartphone, using a plurality of semiconductor chips, the server 200 may provide the customer device 110 with semiconductor classification information associated with product production. According to an embodiment, the semiconductor classification information may include a semiconductor for an image sensor, a semiconductor for a memory device, a semiconductor for a processor, or a semiconductor for a graphics card, but the type of semiconductors is not limited thereto. The server 200 may variously provide semiconductor classification information corresponding to a proposal received from the customer device 110.

For example, the server 200 may provide, as the semiconductor classification information, DRAM, flash memory, emerging memory, other memory, an 8-bit microcontroller, a 16-bit microcontroller, a 32-bit microcontroller, a digital signal processor, a general-purpose logic, an FGPA/PLD, a display driver, an LCD DDIC, an OLED DDIC, a logic driver, a data converter, a switch, a multiplexer, a voltage regulator, an analog semiconductor, a diode, a transistor, an optoelectronic device, an LED, a coupler, an image sensor, a CCD image sensor, a CMOS image sensor, a laser diode, a photo sensor, an ASIC, an ASSP, a functional semiconductor, a multimedia processor, a discrete cellular baseband, a GPU, a CPU, an integrated baseband, an application processor, an RF front-end, a transceiver, wired connectivity, wireless connectivity, power management, and TDDI, but the semiconductor classification information is not limited thereto.

According to an embodiment, after receiving the semiconductor classification information, the customer device 110 may select a semiconductor component in operation S1840. For example, the server 200 may receive selection information selecting a semiconductor component from the customer device 110.

Based on receiving the selection information selecting at least one semiconductor component from the customer device 110, the server 200 may provide requirements related to the semiconductor component in operation S1850. For example, the server 200 of the network system 10A may provide the customer device 110 with requirements (e.g., resolution and wavelength band) of a mobile camera module and semiconductor manufacturer information.

Based on receiving the requirements related to the semiconductor component, the customer device 110 may transmit company selection information to the server 200 together with information provided for product production, in operation S1860. For example, the server 200 may receive the selection information selecting a company from the customer device 110. According to an embodiment, based on receiving the company selection information, the at least one semiconductor component may be manufactured according to the company selection information and the requirements.

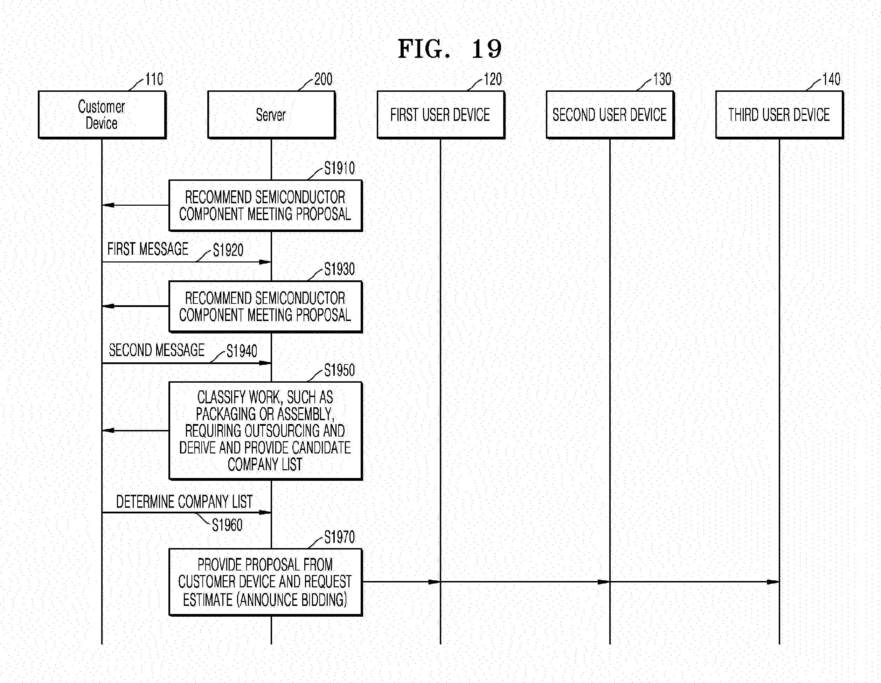

FIG. 19 is a flowchart of a process of providing information in the network system 10A of FIG. 1A, according to an embodiment.

Referring to FIGS. 1A and 19, according to an embodiment, the server 200 may recommend to the customer device 110 a semiconductor component meeting a proposal of a customer in operation S1910.

When there is no product corresponding to the proposal in the network system 10A according to an embodiment, the customer device 110 may transmit a first message to the server 200 in operation S1920. According to an embodiment, the first message may indicate "not applicable". For example, when transmitting a message indicating "not applicable", the customer device 110 may also transmit an indicated product specification to the server 200 or the first to third user devices 120, 130, and 140 through a network.

According to an embodiment, the server 200 may receive the first message from the customer device 110 and may recommend to the customer device 110 a semiconductor component meeting the proposal in operation S1930. According to an embodiment, the server 200 may continuously receive the proposal from the customer device 110 and provide the customer device 110 with a response together with semiconductor classification information.

When there is a product corresponding to the proposal in the network system 10A according to an embodiment, the customer device 110 may transmit a second message to the server 200 in operation S1940. According to an embodiment, the first message may indicate "applicable". For example, when transmitting a message indicating "applicable", the customer device 110 may also transmit the proposal to the server 200 or the first to third user devices 120, 130, and 140 through the network.

According to an embodiment, the server 200 may receive the second message from the customer device 110, may classify work, such as semiconductor packaging or assembly, requiring outsourcing, may derive a company list, and may provide the classified work information and the company list to the customer device 110 in operation S1950. According to an embodiment, the server 200 may provide the customer device 110 with the classified work information and the company list together with the semiconductor classification information.

In the network system 10A according to an embodiment, the customer device 110 may determine a company list and transmit the company list to the server 200 in operation S1960. For example, the customer device 110 may determine a semiconductor design house, a foundry company, and a packaging company and may transmit the determined company list to the server 200 or user devices through the network.

According to an embodiment, based on receiving the determined company list from the customer device 110, the server 200 may provide the proposal received from the customer device 110 to the first user device 120, the second user device 130, and/or the third user device 140 and may announce semiconductor bidding by requesting an estimate in operation S1970. According to an embodiment, when the semiconductor bidding is announced, the server 200 may receive company information from at least one of the first to third user devices 120, 130, and 140. According to an embodiment, the company information may include response information. For example, the company information may include, but is not limited to, redelivery date information, production CAPA, or price information.

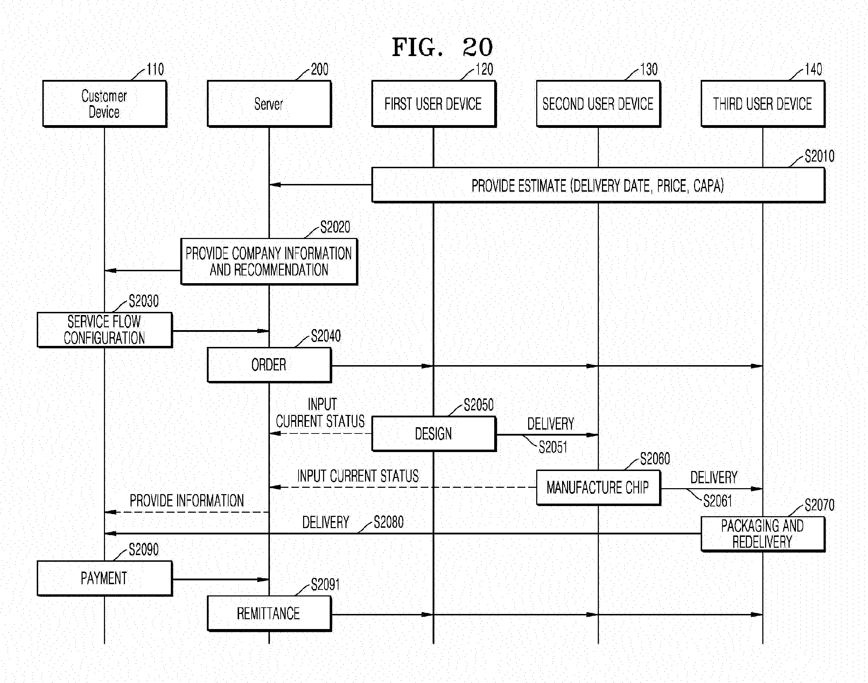

FIG. 20 is a flowchart of a process of performing a transaction according to information provision in the network system 10A of FIG. 1A, according to an embodiment.

Referring to FIGS. 1A and 20, according to an embodiment, each of the first user device 120, the second user device 130, and the third user device 140 may provide an estimate in response to a bidding announcement in the network system 10A in operation S2010. According to an embodiment, the estimate may include company information. For example, each of the first user device 120, the second user device 130, and the third user device 140 may send an estimate including delivery date information, production CAPA, or price information, but the company information is not limited thereto.

According to an embodiment, based on receiving the estimate, the server 200 may transmit the company information and a recommendation message to the customer device 110 through the network 100 in operation S2020. For example, the server 200 may transmit, to the customer device 110 stored therein, client satisfaction information, alliance group information, or company recommendation information for each work.

According to an embodiment, based on receiving the company information and the recommendation message, the customer device 110 may transmit a service flow configuration to the server 200 in operation S2030. For example, the customer device 110 may determine a company for outsourcing of product manufacturing from the company list and may configure a service flow according to a product manufacturing period. According to an embodiment, the service flow may include semiconductor work process information associated with the product manufacturing. According to an embodiment, the customer device 110 may transmit determined service flow information to the server 200 and the server 200 may transmit an order message to the first user device 120, the second user device 130, and the third user device 140 in operation S2040.

Based on receiving the order message, each of the first user 12, the second user 13, and the third user 14 may perform its work and each of the first user device 120, the second user device 130, and the third user device 140 may provide semiconductor product delivery information generated based on the service flow received from the customer device 110. For example, the first user device 120 may design a semiconductor product corresponding to the proposal received from the customer device 110 in operation S2050 and provide delivery information to the second user device 130 in operation S2051.

According to an embodiment, based on the delivery of the result of designing the semiconductor product being completed (i.e., the delivery information being provided to the second user device 130), the second user device 130 may provide manufacturing information of a semiconductor chip corresponding to the proposal received from the customer device 110 in operation S2060. For example, the second user 13 may manufacture the semiconductor chip based on the design of the first user 12 and the second user device 130 may provide delivery information of the manufactured semiconductor chip to the third user device 140 in operation S2061.

According to an embodiment, based on the delivery of the manufactured semiconductor chip being completed (i.e., the delivery information being provided to the third user device 140), the third user 14 may perform packaging work on the semiconductor chip and the third user device 140 may provide delivery information to the customer device 110 in operations S2070 and S2080, respectively. For example, the third user 14 may complete the packaging of a semiconductor product corresponding to the proposal and deliver the completed semiconductor product to the customer 11, and the third user device 140 may transmit the delivery information to the customer device 110.

According to an embodiment, when the delivery of the ordered semiconductor product to the customer 11 is completed, the customer 11 may make payment to the first user device 120, the second user device 130, and the third user device 140 in operation S2090. According to an embodiment, the payment may be made through the server 200. For example, when the payment is completed, the customer device 110 may transmit payment completion information to the server 200.

According to an embodiment, when the payment of the customer 11 is completed, the server 200 may provide remittance information to each of the first user device 120, the second user device 130, and the third user device 140 through the network 100 in operation S2091. For example, the server 200 may create remittance information based on the price information presented in the estimate and may complete remittance. When the remittance is completed, the server 200 may provide remittance completion information to the first user device 120, the second user device 130, and the third user device 140 through the network 100.

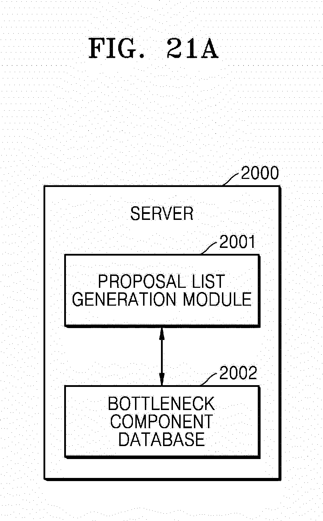

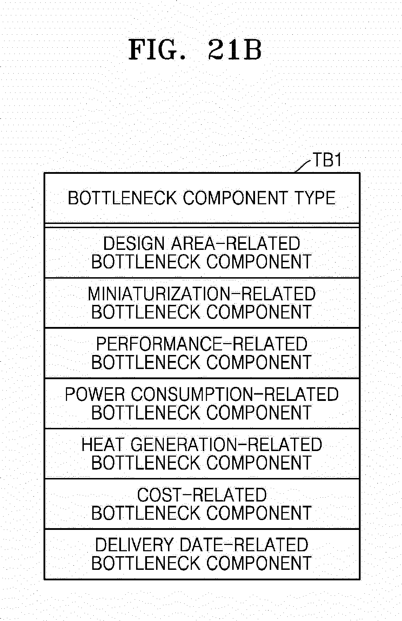

FIG. 21A is a block diagram of a server 2000 according to an embodiment. FIG. 21B is a table diagram of types of bottleneck components.

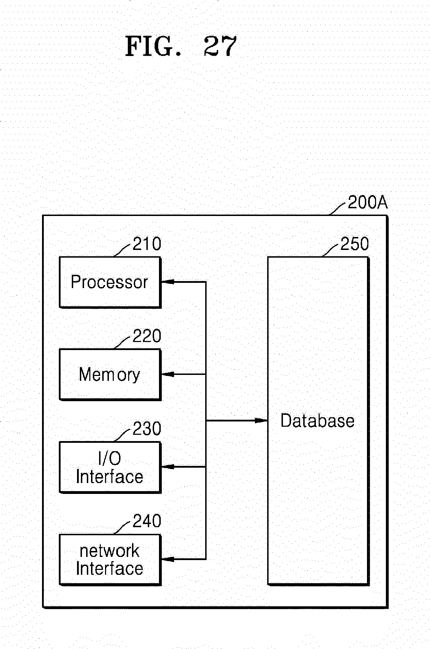

Referring to FIG. 21A, the server 2000 may include a proposal list generation module 2001 and a bottleneck component database 2002. The proposal list generation module 2001 and the bottleneck component database 2002 may be implemented by at least one processor in conjunction with one or more memories (for example, by the processor 210 in conjunction with the memory 220 described below with respect to FIG. 27). For example, the one or more memories may store computer code for implementing the proposal list generation module 2001 and the bottleneck component database 2002. At least one of the at least one processor may access the computer code and execute the computer code to implement the proposal list generation module 2001. Similarly, at least one of the at least one processor may access the computer code and execute the computer code to implement the bottleneck component database 2002. In some embodiments, the proposal list generation module 2001 may be implemented as a dedicated hardware proposal list generation circuit (for example, an application specific integrated circuit (ASIC), in which the proposal list generation circuit is specifically fabricated to perform the functions of the proposal list generation module 2001 described herein. According to an embodiment, the at least one processor implementing the proposal list generation module 2001 may collect, from users, component information associated with produce a product requested by a customer and may determine at least one bottleneck component based on the collected component information. The at least one processor implementing the proposal list generation module 2001 may create at least one proposal list based on the determined bottleneck component and provide the proposal list to the customer. Here, a component may relate to a unit of parts of a product or a unit of combinations of parts of a product, wherein the unit may be proposed by users for the creation or the production of the product. Here, a bottleneck component may be defined as a component that hinders the application of the best specifications of other components due to the limit of, for example, the current technology level.

Referring to table TB1 of FIG. 21B, the type of bottleneck component may be a design area-related bottleneck component, a miniaturization-related bottleneck component, a performance-related bottleneck component, a power consumption-related bottleneck component, a heat generation-related bottleneck component, a cost-related bottleneck component, and a delivery date-related bottleneck component.

For example, the design area-related bottleneck component may limit the design area of other components at the current level of technology. For example, the miniaturization-related bottleneck component may limit the miniaturization of other components at the current level of technology. For example, the performance-related bottleneck component may limit the performance of other components at the current level of technology. For example, the heat generation-related bottleneck component may have a high degree of heat generation that limits the heat generation-related specifications of other components at the current level of technology. For example, the cost area-related bottleneck component may have a high production cost that limits the production cost of other components at the current level of technology. However, the bottleneck component types disclosed in FIG. 21B are just examples, and more bottleneck component types may be defined.

Referring back to FIG. 21A, the at least one processor implementing the proposal list generation module 2001 may create at least one proposal list based on the bottleneck component by using a neural network model. The neural network model may be trained using a plurality of training production proposals and a plurality of pieces of training component information. According to an embodiment, the at least one processor implementing the proposal list generation module 2001 may receive a production proposal on a product from a customer and component information meeting the production proposal from users and may determine at least one bottleneck component of the product.

According to an embodiment, the at least one processor implementing the proposal list generation module 2001 may store and manage bottleneck components of products, which are requested by customers for production, in the bottleneck component database 2002 by categories. In some embodiments, the at least one processor implementing the proposal list generation module 2001 may quickly identify at least one bottleneck component of a product, which is requested by a customer for production, by referring to the bottleneck component database 2002 and may create at least one proposal list based on the identified bottleneck component.

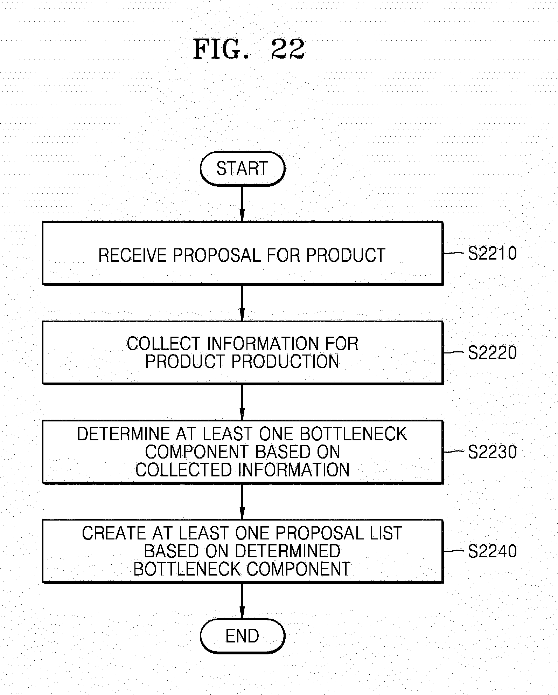

FIG. 22 is a flowchart of an operating method of the server 2000 of FIG. 21A.

Referring to FIGS. 21A and 22, the server 2000 may receive a production proposal for a product from a customer in operation S2210. The server 2000 may provide users with the production proposal as is or may process the production proposal and provide a processed production proposal to the users. The server 2000 may collect component information for the production of the product from the users in operation S2220. For example, a user may check the production proposal received from the server 2000 and provide the server 2000 with component information regarding a production service providable for the product. As described above, the user may check the production proposal through a user device matched with the server 2000 and provide the component information to the server 2000. The server 2000 may determine at least one bottleneck component based on the collected information in operation S2230. For example, the server 2000 may determine a bottleneck component that hinders the application of the best specifications of other components. The server 2000 may create at least one proposal list based on the determined bottleneck component in operation S2240. The server 2000 may provide the proposal list to the customer. In some embodiments, the product may be manufactured based on the proposal list.

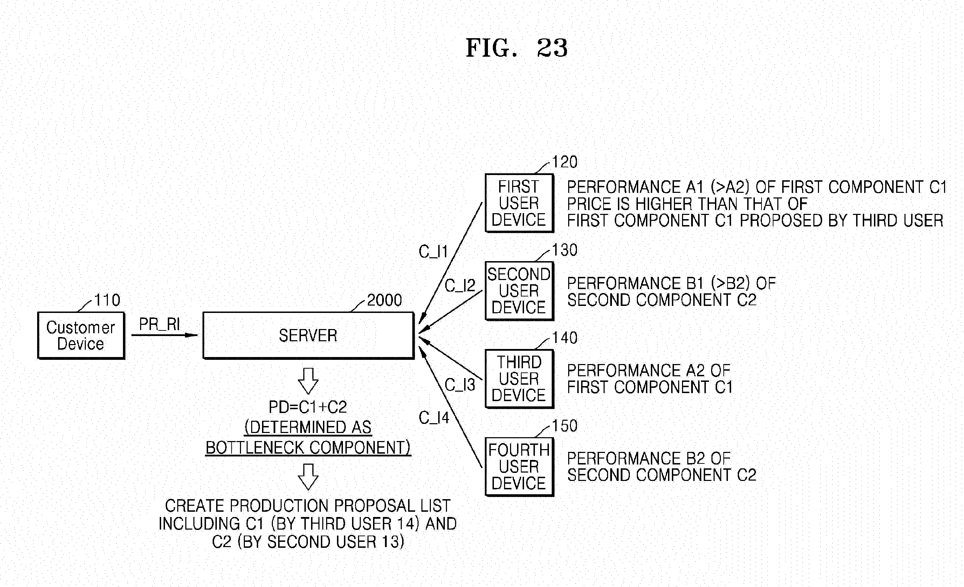

FIG. 23 is a diagram illustrating an example of operation of the server 2000 of FIG. 21A.

Referring to FIGS. 21A and 23, the server 2000 may receive a production proposal PR_RI for a product PD from the customer 11 and receive first to fourth component information C_I1, C_I2, C_I3, and C_I4 meeting the production proposal PR_RI from the first to fourth user devices 120, 130, 140, and 150.

For example, the product PD may include a first component C1 and a second component C2. The first component C1 and the second component C2 may refer to parts configured to be connected to each other and perform an operation. For example, the first component C1 may correspond to a data bus and the second component C2 may correspond to a processor that processes data transmitted through the data bus, which is assumed in the description below. The first to fourth users 12, 13, 14, and 15 described below may correspond to those described above with reference to FIGS. 1A and 1B.

For example, the first user 12 may provide the server 2000 with the first component information C_I1 indicating that the first user 12 is able to produce the first component C1 capable of supporting performance A1. The second user 13 may provide the server 2000 with the second component information C_I2 indicating that the second user 13 is able to produce the second component C2 capable of supporting performance B1. The third user 14 may provide the server 2000 with the third component information C_I3 indicating that the third user 14 is able to produce the first component C1 capable of supporting performance A2. The fourth user 15 may provide the server 2000 with the fourth component information C_I4 indicating that the fourth user 14 is able to produce the second component C2 capable of supporting performance B2. The performance A1 may be better than the performance A2 and the performance B1 may be better than the performance B2. For example, the first component C1 producible by the first user 12 may support a faster data transmission/reception speed than the first component C1 producible by the third user 14 and the second component C2 producible by the second user 13 may support a faster data processing speed than the second component C2 producible by the fourth user 15.

For example, the server 2000 may determine a bottleneck component based on the first to fourth component information C_I1, C_I2, C_I3, and C_I4. In detail, because of the limit of the data processing speed of the second component C2 corresponding to the processor, it may be unassociated with the data transmission/reception speed of the first component C1 corresponding to the data bus to be higher than a certain value. Accordingly, the server 2000 may determine the second component C2 as a bottleneck component.

For example, considering the bottleneck component, the server 2000 may create a proposal list including the third user 14, which produces the first component C1 having the performance A2, and the second user 13, which produces the second component C2 having the best performance.

In some embodiments, the server 2000 may store and manage information on the second component C2, which is determined as the bottleneck component of the product PD, in the bottleneck component database 2002. In some embodiments, the server 2000 may control to manufacture the product PD according to the production proposal list that takes into account the bottleneck component C2.

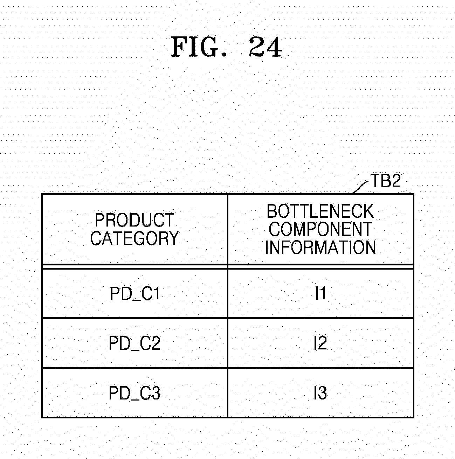

FIG. 24 is a table diagram of data stored in the bottleneck component database 2002 in FIG. 21A.

Referring to FIG. 21A and table TB2 of FIG. 24, bottleneck component information I1, I2, and I3 may be stored in the bottleneck component database 2002 by product categories PD_C1, PD_C2, and PD_C3. The at least one processor implementing the proposal list generation module 2001 of the server 2000 may obtain bottleneck component information from a product category including a product, which is requested by a customer, by referring to the table TB2. The at least one processor implementing the proposal list generation module 2001 may create at least one proposal list by using the obtained bottleneck component information.

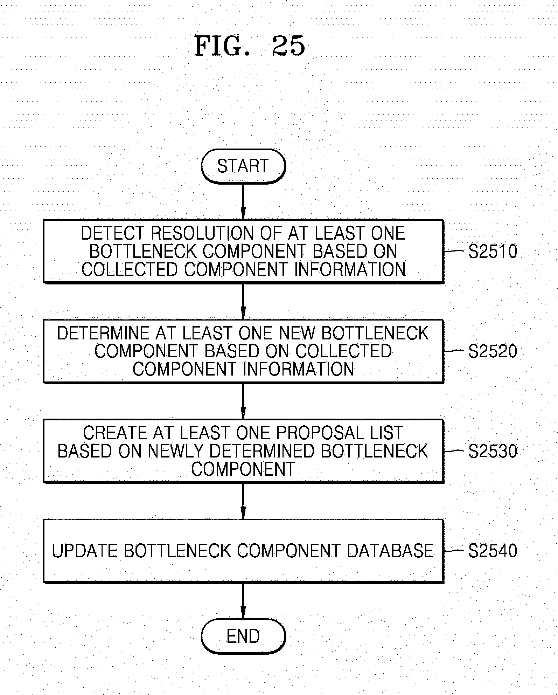

FIG. 25 is a flowchart of an operating method of the server 2000 of FIG. 21A, according to an embodiment.

Referring to FIGS. 21A and 25, the server 2000 may detect resolution of at least one old bottleneck component based on collected component information in operation S2510. For example, due to the development of technology, a component that has been previously determined as a bottleneck component may be improved. The server 2000 may extract information on a bottleneck component from the component information collected from users and may determine whether the bottleneck component has been improved. The server 2000 may determine at least one new bottleneck component based on the collected component information in operation S2520. The server 2000 may also release at least one component having improved performance from a bottleneck component. In other words, if the at least one component is released from the bottleneck component, it may mean that the at least one component is not the bottleneck component. The server 2000 may create at least one proposal list based on the new bottleneck component in operation S2530. The server 2000 may update the bottleneck component database 2002 by removing an old bottleneck component or reflecting a new bottleneck component in the bottleneck component database 2002. In some embodiments, the product may be manufactured according to the at least one proposal list that have been updated to remove or release the old bottleneck component and/or add the new bottleneck component.

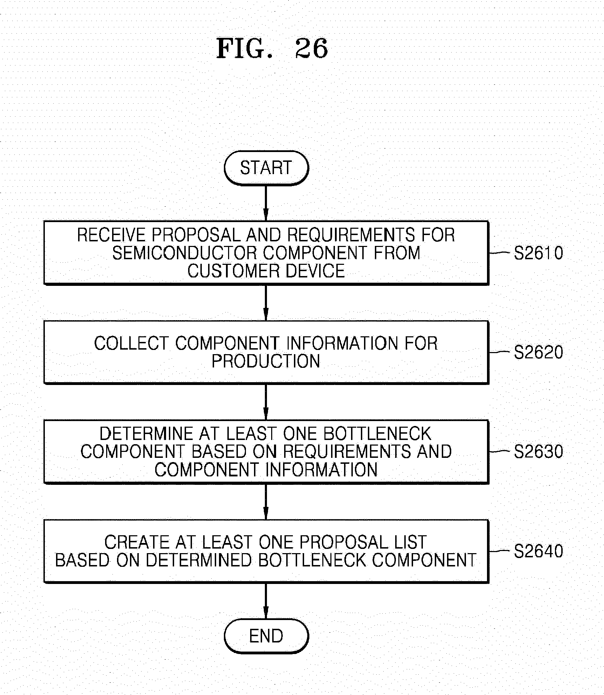

FIG. 26 is a flowchart of an operating method of the server 2000 of FIG. 21A, according to an embodiment.

Referring to FIGS. 21A and 26, the server 2000 may receive a production proposal and requirement information for a product from a customer in operation S2610. Here, requirement information for a product may include information indicating what a customer wants with respect to at least one of the components of the product. For example, requirement information may relate to the performance of a particular component of a product, a production cost of the product, the manufacturing lead time of the product, and/or the like. The server 2000 may collect component information for the production of the product from users in operation S2620. The server 2000 may determine at least one bottleneck component based on the requirement information and the component information in operation S2630. The server 2000 may create at least one proposal list based on the determined bottleneck component in operation S2640. In some embodiments, the product may be manufactured according to the at least one proposal list based on the determined bottleneck component.

FIG. 27 is a diagram illustrating an example configuration of a server 200A according to an embodiment. For example, the servers described above with reference to FIGS. 1A to 26 may be implemented as the server 200A of FIG. 27.

Referring to FIG. 27, according to an embodiment, the server 200A may be implemented by a hardware device including a plurality of hardware components. According to an embodiment, the server 200A may include a processor 210, a memory 220, an input/output (I/O) interface 230, a network interface 240, and a database 250.

According to an embodiment, the processor 210 may include an appropriate processing unit, wherein the processing unit may receive data, process the received data based on computer-executable instructions, and generate output data. For example, the computer-executable instructions may be stored in the memory 220. According to an embodiment, the processor 210 may execute a plurality of operating systems (OS) and application programs. The computer-executable instructions may be retrieved from the memory 220. According to an embodiment, the processor 210 may be configured to execute the computer-executable instructions such that various operations are performed. The processor 210 may include a CPU, a microprocessor, a microcontroller, a reduced instruction set computer (RISC) microprocessor, a complex instruction set computer (CISC) microprocessor, an application specific integrated circuit (ASIC), any type of processing unit including a system-on-chip (SoC), or a field-programmable gate array (FPGA).

According to an embodiment, the memory 220 may store a plurality of programs executed by the processor 210. According to an embodiment, the memory 220 may store program instructions, which may be loaded and executed by the processor 210, and data, which is operated and generated by the processor during the execution of program instructions. According to an embodiment, the memory 220 may include volatile memory, such as RAM, and/or non-volatile memory, such as read-only memory (ROM) or flash memory. According to an embodiment, the memory 220 may include various types of static RAM (SRAM), various types of DRAM, immutable ROM, and/or electrically erasable programmable ROM (EEPROM), or flash memory.

According to an embodiment, the I/O interface 230 may receive data input to the server 200A. For example, the I/O interface 230 may receive a proposal input by a customer. According to an embodiment, the proposal may include product plan information or requirements of the customer. The I/O interface 230 may receive response information of users. For example, the I/O interface 230 may receive semiconductor production capacity data, price data, or semiconductor type data from the users. However, the data received by the I/O interface 230 is not limited to those mentioned above.

According to an embodiment, the server 200A may include the network interface 240. According to an embodiment, the network interface 240 may receive data input through a network (e.g., the network 100 in FIG. 1A or 1B) and may transmit data to the network. For example, the network interface 240 may receive production capacity data, price data, or semiconductor type data from users and may transmit information on matching between a customer and a user. However, the data received by the network interface 240 is not limited to those mentioned above.

According to an embodiment, the database 250 may store data input to the server 200A. For example, the database 250 may store and learn a proposal received from the customer device 110 in FIG. 1A. According to an embodiment, the proposal may include information on a product, which is indicated by a customer to produce, or the customer's requirements. According to an embodiment, the database 250 may store response information received from the first to fifth users 12, 13, 14, 15, and 16 in FIG. 1B and may process the response information into training data. According to an embodiment, based on receiving a proposal for a semiconductor product or a semiconductor device from a customer or first to fifth users, the server 200A may retrieve information from the database 250 and transmit the information to the customer or the first to fifth users through a network.

According to an embodiment, the server 200A may perform grouping of foundry companies and store a result of the grouping in the database 250. For example, the server 200A may store foundry companies in the database 250 and may recommend a second user based on grouped foundry company information when there is a proposal from a customer device. According to an embodiment, grouping of foundry companies may be performed based on characteristics related to semiconductor production.

For example, when a grouping criterion is production capacity, the server 200A may group foundry companies based on the available quantity of each foundry company and may recommend foundry companies to a customer in descending order of inventory rate. According to an embodiment, when a grouping criterion is performance, the server 200A may group foundry companies based on an error rate and may recommend foundry companies to a customer in ascending order of error rate. According to an embodiment, when a grouping criterion is price, the server 200A may group foundry companies based on the price and may recommend foundry companies to a customer in ascending order of price.

According to an embodiment, when a plurality of customers propose bidding, the server 200A may perform grouping of the customers. For example, the server 200A may perform weight learning with respect to customers by using the AI engine 200b in FIG. 9B, 10B, or 11B. According to an embodiment, the server 200A may group customers based on the purchasing capability of each customer according to a result of the learning. For example, a customer that purchases a certain quantity of semiconductors each year may be evaluated as having a high purchasing capability and determined to be preferentially recommended. However, a customer that delays payment or occasionally purchases a small quantity of semiconductors may be evaluated as having a low purchasing capability and excluded from recommendation.

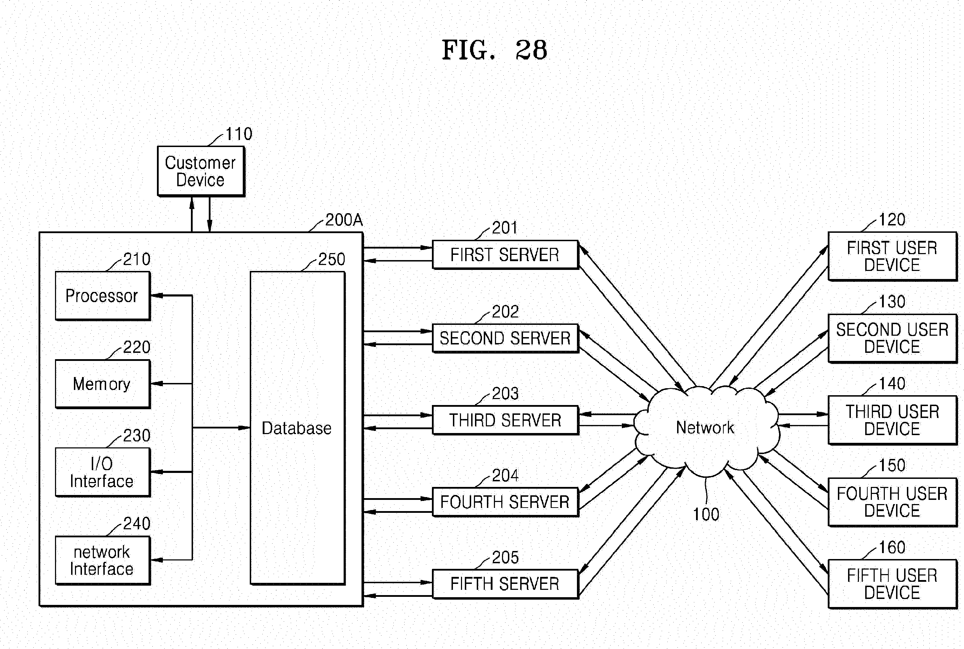

FIG. 28 illustrates a system including the server 200A, according to an embodiment.

Referring to FIG. 28, the server 200A may include the configuration described above with reference to FIG. 27 and may independently communicate with one or more of the customer device 110, the first user device 120, the second user device 130, the third user device 140, the fourth user device 150, and the fifth user device 160. In some embodiments, the server 200A may independently communicate with at least one selected from the group consisting of the customer device 110, the first user device 120, the second user device 130, the third user device 140, the fourth user device 150, and the fifth user device 160.

According to an embodiment, the first to fifth servers 201, 202, 203, 204, and 205 may independently perform communication related to the mediation of a semiconductor transaction among the first to fifth user devices 120, 130, 140, 150, and 160 and the customer device 110.

According to an embodiment, the first server 201 may independently manage semiconductor transactions between the customer device 110 and the first user device 120. For example, the first server 201 may receive a semiconductor design-related proposal of the customer device 110 from the server 200A and may store the proposal. According to an embodiment, the second server 202 may independently manage semiconductor transactions between the customer device 110 and the second user device 130 or semiconductor transactions between the first user device 120 and the second user device 130. For example, the second server 202 may receive a semiconductor chip production-related proposal of the customer device 110 or the first user device 120 from the server 200A and may store the proposal. According to an embodiment, the third server 203 may independently manage semiconductor transactions between the customer device 110 and the third user device 140, semiconductor transactions between the first user device 120 and the third user device 140, or semiconductor transactions between the second user device 130 and the third user device 140. For example, the third server 203 may receive a semiconductor chip post-processing-related proposal of the customer device 110, the first user device 120, or the second user device 130 from the server 200A and may store the semiconductor chip post-processing-related proposal.

According to an embodiment, the fourth server 204 may independently manage semiconductor transactions between the customer device 110 and the fourth user device 150, semiconductor transactions between the first user device 120 and the fourth user device 150, or semiconductor transactions between the second user device 130 and the fourth user device 150. For example, the fourth server 204 may receive a semiconductor chip design asset provision-related proposal of the customer device 110, the first user device 120, or the second user device 130 from the server 200A and may store the semiconductor chip design asset provision-related proposal. According to an embodiment, the fifth server 205 may independently manage semiconductor transactions between the customer device 110 and the fifth user device 160, semiconductor transactions between the first user device 120 and the fifth user device 160, or semiconductor transactions between the second user device 130 and the fifth user device 160. For example, the fifth server 205 may receive a memory semiconductor provision-related proposal of the customer device 110, the first user device 120, or the second user device 130 from the server 200A and may store the semiconductor provision-related proposal.

According to an embodiment, the first to fifth servers 201, 202, 203, 204, and 205 may communicate with each other through the network 100 and the first to fifth user devices 120, 130, 140, 150, and 160 may also communicate with each other through the network 100. For example, each user may request the server 200A not to disclose provided information to a specific user and the server 200A may not disclose the provided information to the specific user to which information disclosure is prohibited. The methods according to the various embodiments described above may be implemented as a program (or an application) to be executed in combination with hardware, i.e., a server, and stored in a medium.

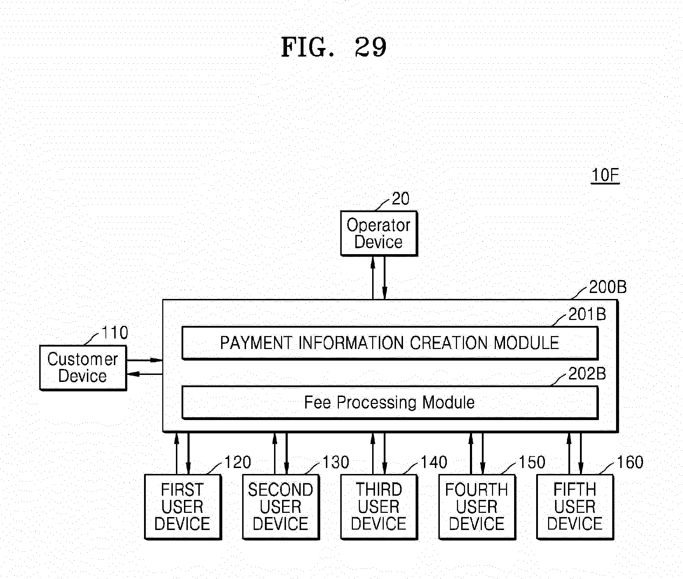

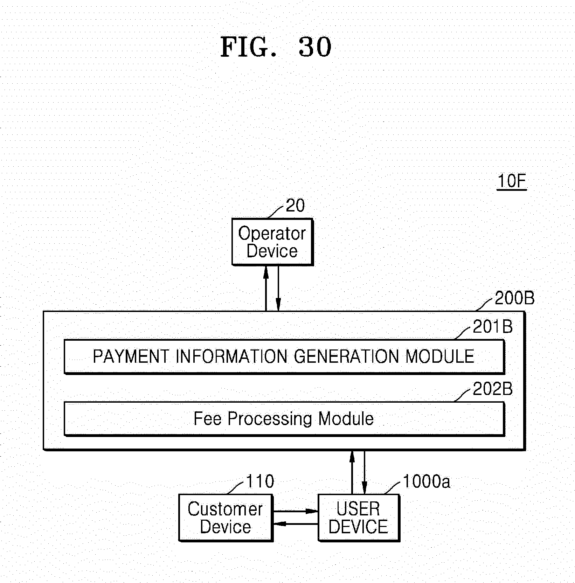

FIGS. 29 and 30 are block diagrams illustrating a fee model according an embodiment.

FIG. 29 is a block diagram illustrating that fee information is transmitted to an operator device 20 when a customer makes a payment on a semiconductor transaction through a server 200B in a network system 10F, according to an embodiment.

Referring to FIG. 29, according to an embodiment, the server 200B may include a payment information generation module 201B and a fee processing module 202B.

According to an embodiment, the payment information generation module 201B may receive payment information from each of the first to fifth user devices 120, 130, 140, 150, and 160 and create final payment information by combining the received payment information. For example, the payment information generation module 201B may receive, from the customer device 110, combination information of users selected from the first to fifth users by a customer and may create final payment information based on payment information received from the combined users. According to an embodiment, payment information may correspond to the sum of payments respectively received from the first user device 120, the second user device 130, the third user device 140, the fourth user device 150, and the fifth user device 160. According to an embodiment, final payment information may reflect discount information proposed by users.

According to an embodiment, when final payment information is generated, the server 200B may transmit the final payment information to the customer device 110. According to an embodiment, the customer device 110 may display the final payment information and a customer may make a payment for semiconductors based on the final payment information. For example, the customer may access an external payment server (not shown) through the customer device 110 and may make a payment for the semiconductors. According to an embodiment, the external payment server may include a server of a payment agency or a server of a financial company. For example, a payment server may correspond to a server of a bank designated by a user but is not limited thereto. According to an embodiment, when the payment for semiconductors is completed, the customer device 110 may generate and transmit payment completion information to the server 200B.

According to an embodiment, the fee processing module 202B may determine a fee paid to an operator. For example, the fee processing module 202B may calculate a fee paid to an operator and transmit fee processing information to the operator device 20. According to an embodiment, a fee may refer to a payment made to an operator.

For example, a fee may refer to a usage fee of the server 200B, which is imposed on a customer, a first user, a second user, a third user, a fourth user, and a fifth user. According to an embodiment, the server 200B may receive usage fee information for the server 200B from the operator device 20. The fee processing module 202B may create information on a fee to be paid by each of the customer, the first user, the second user, the third user, the fourth user, and the fifth user based on the usage fee information. According to an embodiment, the server 200B may transmit the fee information to each of the customer device 110, the first user device 120, the second user device 130, the third user device 140, the fourth user device 150, and the fifth user device 160.

According to an embodiment, the fee processing module 202B may create a plurality of pieces of usage fee information based on information provided by the server 200B. For example, based on receiving a request to recommend a combination of users from the customer device 110, the fee processing module 202B may calculate a usage fee further taking into account a quotation fee for a recommended combination of users. However, the calculation of a usage fee is not limited to those described above. The fee processing module 202B may differently determine a usage fee according to information or additional services provided by the server 200B.

According to an embodiment, the server 200B may transmit usage fee information to the customer device 110 or the first to fifth user devices 120, 130, 140, 150, and 160 at preset time intervals. For example, when subscription information for using a network system is received from the customer device 110 or the first to fifth user devices 120, 130, 140, 150, and 160, the fee processing module 202B may transmit a usage fee of the server 200B to the customer device 110 or the first to fifth user devices 120, 130, 140, 150, and 160 at preset time intervals.

According to an embodiment, the server 200B may calculate a usage fee based on a time period during which the customer device 110 or the first to fifth user devices 120, 130, 140, 150, and 160 access the server 200B. For example, when a customer or users choose a pay-per-time model rather than a subscription model, the fee processing module 202B may measure a time period during which the customer device 110 or the first to fifth user devices 120, 130, 140, 150, and 160 access the server 200B and may transmit time-specific usage fee information to the customer device 110 or the first to fifth user devices 120, 130, 140, 150, and 160 on the basis of a preset time-specific usage fee rate. According to an embodiment, a time-specific usage fee rate may relate to a usage fee of the server 200B per unit time.

For example, a fee may refer to a brokerage fee for a customer, a first user, a second user, a third user, a fourth user, and a fifth user. According to an embodiment, the server 200B may determine a fee to be paid by each of the customer, the first user, the second user, the third user, the fourth user, and the fifth user, based on a brokerage fee rate input from the operator device 20 in advance. For example, the fee processing module 202B may calculate a brokerage fee to be paid by each of the customer, the first user, the second user, the third user, the fourth user, and the fifth user, based on a first rate preset with respect to a semiconductor payment amount. According to an embodiment, the first rate may be a criterion for determining a final brokerage fee to be paid to an operator. For example, the fee processing module 202B may determine 1 % of the semiconductor payment amount as the brokerage fee. However, the first rate is not limited thereto, and various criteria may be input from the operator device 20. Alternatively, the brokerage fee may be set to a fixed amount.

According to an embodiment, the server 200B may transmit fee information to the operator device 20 and an operator may be paid a fee calculated based on the fee information.

FIG. 30 is a block diagram illustrating the transmission of fee information to the operator device 20 when a customer makes a payment on a semiconductor transaction without using the server 200B in the network system 10F, according to an embodiment.

Referring to FIG. 30, according to an embodiment, the customer may directly make a semiconductor transaction with a user. For example, the customer may use only information on the user stored in the server 200B and may make a payment via a direct transaction with the user. According to an embodiment, when the customer uses a direct transaction, the server 200B may notify a user device 1000a of the user that user information has been utilized. For example, when there is a record of the user information being transmitted to the customer device 110, the server 200B may transmit a user information inquiry notification message to the user device 1000a and the user device 1000a may inform the server 200B of a transaction with the customer.

According to an embodiment, based on receiving transaction completion information from the user device 1000a, the fee processing module 202B may determine a fee to be paid to an operator and transmit fee information to the operator device 20. As described above with reference to FIG. 29, the fee may refer to, but is not limited to, a usage fee of the server 200B, a brokerage fee, a subscription fee, an information usage fee, or an additional service fee.

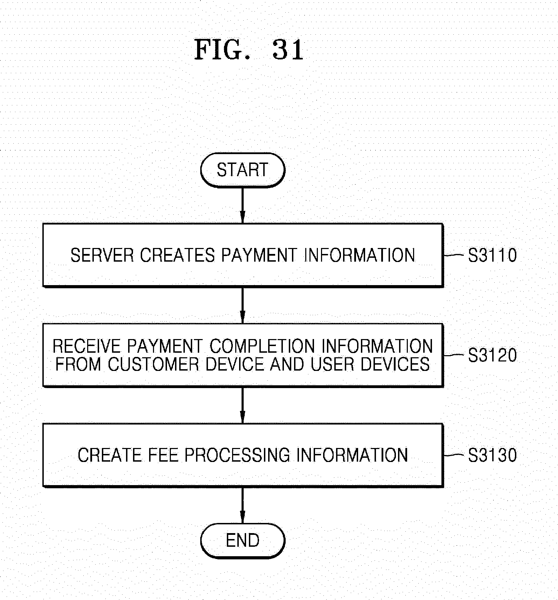

FIG. 31 is a flowchart of a process of transmitting fee information to the operator device 20 when a customer makes a payment on a semiconductor transaction through the server 200B in FIG. 29.

Referring to FIGS. 29 and 31, according to an embodiment, the server 200B may create payment information related to a semiconductor transaction in operation S3110.

According to an embodiment, the server 200B may receive payment information from each of the first to fifth user devices 120, 130, 140, 150, and 160 and create final payment information by combining the received payment information. For example, the payment information generation module 201B may receive, from the customer device 110, combination information of users selected from the first to fifth users by a customer and may create final payment information based on payment information received from the combined users. According to an embodiment, payment information may correspond to the sum of payments respectively received from the first user device 120, the second user device 130, the third user device 140, the fourth user device 150, and the fifth user device 160. According to an embodiment, final payment information may reflect discount information proposed by users.

According to an embodiment, when final payment information is generated, the server 200B may transmit the final payment information to the customer device 110. According to an embodiment, the customer device 110 may display the final payment information and a customer may make a payment for semiconductors based on the final payment information. For example, the customer may access an external payment server (not shown) through the customer device 110 and may make a payment for the semiconductors. According to an embodiment, the external payment server may include a server of a payment agency or a server of a financial company. For example, a payment server may correspond to a server of a bank designated by a user but is not limited thereto.

According to an embodiment, based on the payment based on the payment information being completed, the server 200B may receive payment completion information from the customer device 110 and the first to fifth user devices 120, 130, 140, 150, and 160 in operation S3120. According to an embodiment, when the payment for semiconductors is completed, the customer device 110 may generate and transmit payment completion information to the server 200B.

According to an embodiment, based on receiving the payment completion information, the server 200B may generate fee processing information in operation S3130. According to an embodiment, the fee processing information may refer to, but is not limited to, a usage fee of the server 200B, a brokerage fee for matching between the customer device 110 and the first to fifth user devices 120, 130, 140, 150, and 160, a subscription fee, an information usage fee, or an additional service fee, wherein the fee processing information is transmitted to the operator device 20.

For example, a fee may refer to a usage fee of the server 200B, which is imposed on the customer 11, the first user 12, the second user 13, the third user 14, the fourth user 15, and the fifth user 16 in FIGS. 1A and 1B. According to an embodiment, the server 200B may receive usage fee information for the server 200B from the operator device 20. The fee processing module 202B may generate information on a fee to be paid by each of the customer 11, the first user 12, the second user 13, the third user 14, the fourth user 15, and the fifth user 16 based on the usage fee information. According to an embodiment, the server 200B may transmit the fee information to each of the customer device 110, the first user device 120, the second user device 130, the third user device 140, the fourth user device 150, and the fifth user device 160.

According to an embodiment, the server 200B may generate a plurality of pieces of usage fee information based on information provided thereto. For example, based on receiving a request to recommend a combination of users from the customer device 110, the server 200B may calculate a usage fee further taking into account a quotation fee for a recommended combination of users. However, the usage fee is not limited to those described above and may be differently determined according to information or additional services provided by the server 200B.

According to an embodiment, the server 200B may transmit usage fee information to the customer device 110 or the first to fifth user devices 120, 130, 140, 150, and 160 at preset time intervals. For example, when subscription information for using a network system is received from the customer device 110 or the first to fifth user devices 120, 130, 140, 150, and 160, the fee processing module 202B may transmit a usage fee of the server 200B to the customer device 110 or the first to fifth user devices 120, 130, 140, 150, and 160 at preset time intervals.

According to an embodiment, the server 200B may calculate a usage fee based on a time period during which the customer device 110 or the first to fifth user devices 120, 130, 140, 150, and 160 access the server 200B. For example, when the customer 11 or the first to fifth users 12, 13, 14, 15, and 16 in FIGS. 1A and 1B choose a pay-per-time model rather than a subscription model, the fee processing module 202B may measure a time period during which the customer device 110 or the first to fifth user devices 120, 130, 140, 150, and 160 access the server 200B and may transmit time-specific usage fee information to the customer device 110 or the first to fifth user devices 120, 130, 140, 150, and 160 on the basis of a preset time-specific usage fee rate. According to an embodiment, a time-specific usage fee rate may relate to a usage fee of the server 200B per unit time.

For example, a fee may refer to a brokerage fee for the customer 11, the first user 12, the second user 13, the third user 14, the fourth user 15, and the fifth user 16 in FIGS. 1A and 1B. According to an embodiment, the server 200B may determine a fee to be paid by each of the customer 11, the first user 12, the second user 13, the third user 14, the fourth user 15, and the fifth user 16 in FIGS. 1A and 1B, based on a brokerage fee rate input from the operator device 20 in advance. For example, the fee processing module 202B may calculate a brokerage fee to be paid by each of the customer 11, the first user 12, the second user 13, the third user 14, the fourth user 15, and the fifth user 16, based on a first rate preset with respect to a semiconductor payment amount. According to an embodiment, the first rate may be a criterion for determining a final brokerage fee to be paid to an operator. For example, the fee processing module 202B may determine 1 % of the semiconductor payment amount as the brokerage fee. However, the first rate is not limited thereto, and various criteria may be input from the operator device 20. Alternatively, the brokerage fee may be set to a fixed amount.

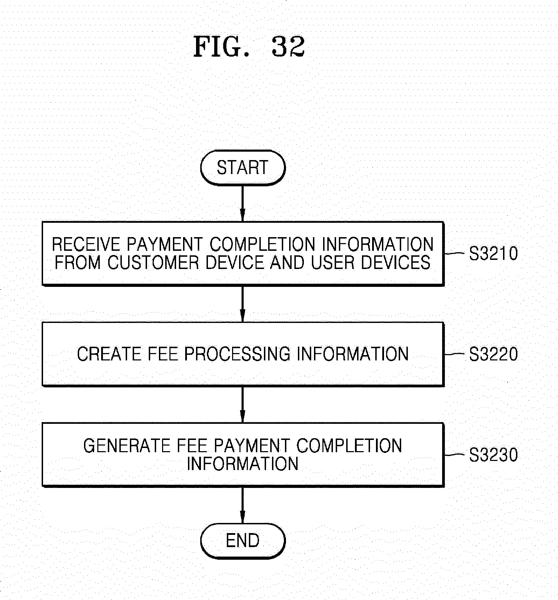

FIG. 32 is a flowchart of a process of transmitting fee information to the operator device 20 when a customer makes a payment on a semiconductor transaction without using the server 200B in the network system 10F of FIG. 30.

Referring to FIGS. 30 and 32, according to an embodiment, when a payment on a semiconductor transaction between a customer and a user is not made through the server 200B and a direct transaction is performed based on information provided by the server 200B, the server 200B may transmit fee information according to the information provision to the customer device 110 and fee information according to semiconductor transaction mediation to the user device 1000a.

When the semiconductor transaction between the customer and the user is completed, the server 200B may receive payment completion information from the customer device 110 and the user device 1000a in operation S3210.

For example, the customer may directly make a semiconductor transaction with the user. For example, the customer may use only information on the user stored in the server 200B and may make a payment via a direct transaction with the user. According to an embodiment, the customer may access an external payment server through the customer device 110 and make a payment on the semiconductor transaction. When the payment is completed, the customer device 110 and the user device 1000a may transmit payment completion information to the server 200B.

According to an embodiment, based on receiving the payment completion information, the server 200B may generate fee processing information in operation S3220. According to an embodiment, based on receiving the payment completion information from the user device 1000a, the server 200B may determine a fee to be paid to an operator and transmit fee information to the operator device 20. According to an embodiment, the fee may refer to, but is not limited to, a usage fee of the server 200B, a brokerage fee, a subscription fee, an information usage fee, or an additional service fee.

According to an embodiment, based on fee processing being completed according to the fee processing information, the operator device 20 may generate fee payment completion information in operation S3230. According to an embodiment, when the fee payment completion information is generated, the operator device 20 may transmit the fee payment completion information to the server 200B and the server 200B may terminate the semiconductor transaction.

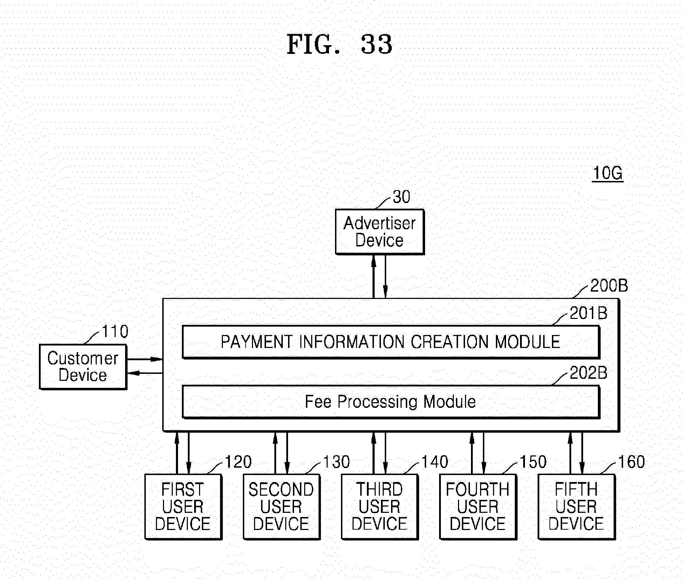

FIG. 33 is a block diagram of an advertising fee payment model 10G according to an embodiment.

Referring to FIG. 33, according to an embodiment, an advertiser device 30 may store advertising information in the server 200B and control the server 200B to transmit the advertising information to the customer device 110 or the first to fifth user devices 120, 130, 140, 150, and 160. For example, the server 200B may receive the advertising information from the advertiser device 30 and may transmit the advertising information to the customer device 110 or the first to fifth user devices 120, 130, 140, 150, and 160.

According to an embodiment, an advertiser may pay a usage fee of the server 200B for the provision of the advertising information when transmitting the advertising information to the server 200B. For example, the server 200B may receive the advertising information from the advertiser device 30 and the fee processing module 202B may calculate an advertising fee based on the advertising information. According to an embodiment, the advertising fee may be determined based on a period during which the advertising information is provided, the frequency of provision of the advertising information, the number of times the advertising information is provided, or the amount of advertising information but is not limited thereto.

The advertiser device 30 may receive advertising fee information from the server 200B and the advertiser may pay an operator the advertising fee corresponding to the advertising fee information received by the advertiser device 30. For example, according to an embodiment, the server 200B may receive and transmit advertising fee payment completion information from the advertiser device 30 to the operator device 20 in FIG. 29.

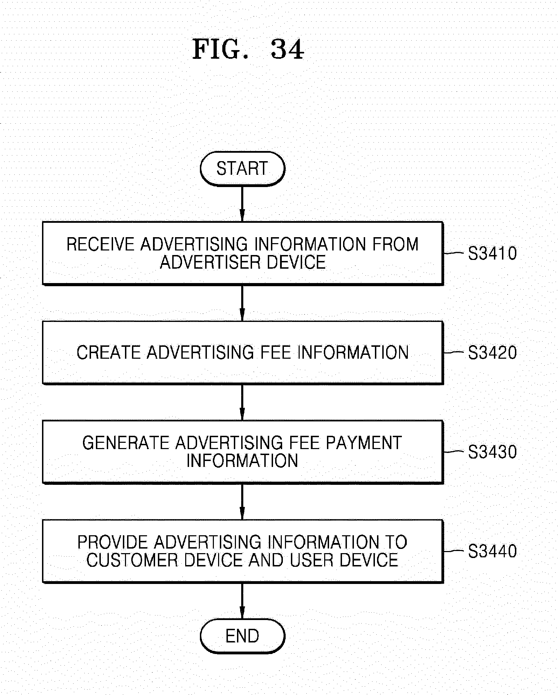

FIG. 34 is a flowchart of an advertising fee payment method in the advertising fee payment model 10G of FIG. 33, according to an embodiment.

Referring to FIGS. 33 and 34, according to an embodiment, the server 200B may receive advertising information from an advertiser in operation S3410. According to an embodiment, the advertiser may store the advertising information in the server 200B. According to an embodiment, based on receiving the advertising information, the server 200B may generate advertising fee information in operation S3420. For example, the server 200B may receive the advertising information from the advertiser device 30 and calculate an advertising fee based on the advertising information. According to an embodiment, the advertising fee may be determined based on a period during which the advertising information is provided, the frequency of provision of the advertising information, the number of times the advertising information is provided, or the amount of advertising information but is not limited thereto.

According to an embodiment, when the advertising fee is paid, the server 200B may generate advertising fee payment completion information in operation S3430. The advertiser device 30 may receive the advertising fee information from the server 200B and the advertiser may pay an operator the advertising fee corresponding to the advertising fee information received by the advertiser device 30. For example, according to an embodiment, the server 200B may receive and transmit the advertising fee payment completion information from the advertiser device 30 to the operator device 20 in FIG. 29.

According to an embodiment, when the advertising fee is paid, the server 200B may provide the advertising information to the customer device 110 and the first to fifth user devices 120, 130, 140, 150, and 160 in operation S3440.

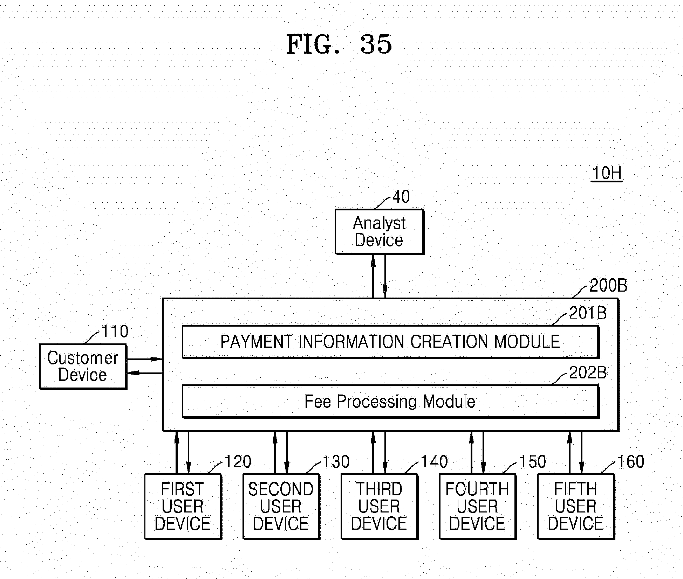

FIG. 35 is a block diagram illustrating a data fee payment model 10H according to an embodiment.

Referring to FIG. 35, according to an embodiment, an analyst device 40 may transmit a data provision request message to the server 200B and obtain data about a customer or users from the server 200B. For example, to analyze a semiconductor company, an analyst may input a data request message for a customer or users to the analyst device 40 and the analyst device 40 may transmit the data request message to the server 200B. According to an embodiment, the customer or the users may correspond to the customer 11 or the first to fifth users 12, 13, 14, 15, and 16 in FIGS. 1A and 1B. According to an embodiment, data may include, but is not limited to, response information of a semiconductor company, production capacity, a semiconductor production schedule, or company information. The data may include content information of various semiconductor companies.

For example, the data may include semiconductor design data. Based on the provision of semiconductor design data being requested by the analyst device 40, the server 200B may provide semiconductor design data stored therein. According to an embodiment, the server 200B may learn semiconductor design information received from the first user device 120 and may providing semiconductor design information to the analyst device 40 based on a result of the learning, thereby providing semiconductor design house information. For example, the server 200B may learn semiconductor circuits by using an AI engine and provide semiconductor design information to the analyst device 40 based on a result of the learning.

According to an embodiment, based on receiving the data request message, the server 200B may notify the customer device 110 or the first to fifth user devices 120, 130, 140, 150, and 160 that the data request message has been received. According to an embodiment, based on the customer or the users agreeing to provide data, the customer or the users may input a data provision consent message to the customer device 110 or the first to fifth user devices 120, 130, 140, 150, and 160 such that the data provision consent message may be transmitted to the server 200B.

According to an embodiment, based on the server 200B receiving the data provision consent message, the fee processing module 202B of the server 200B may generate and transmit data provision fee information to the analyst device 40. According to an embodiment, a data provision fee may be determined based on a request of a data provider, a data subscription fee, the number of times data is provided, the amount of data, or a preset data provision fee, but is not limited thereto.

The analyst device 40 may receive the data provision fee information from the server 200B and the analyst may pay an operator a data provision fee corresponding to the data provision fee information received by the analyst device 40. For example, according to an embodiment, the server 200B may receive a data provision fee payment completion message from the analyst device 40 and transmit data provision fee payment completion information to the operator device 20 in FIG. 29.

According to an embodiment, when data provision fee payment is completed, the server 200B may transmit the requested data to the analyst device 40.

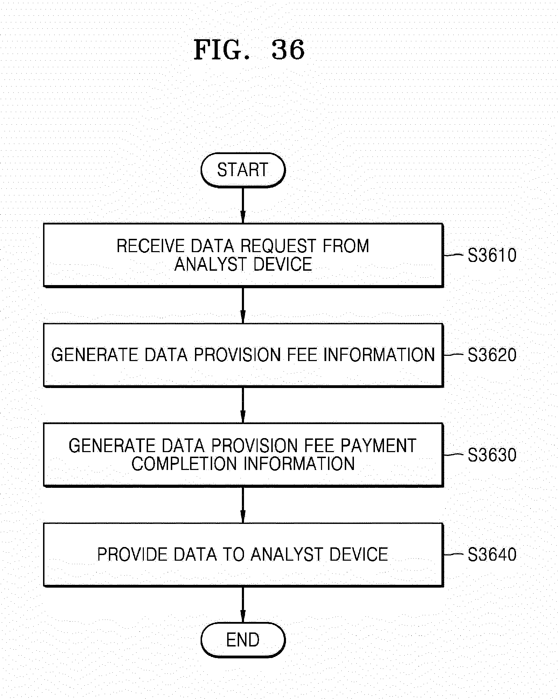

FIG. 36 is a flowchart of a data fee payment method in the data fee payment model 10H of FIG. 35, according to an embodiment.

Referring to FIGS. 35 and 36, according to an embodiment, the server 200B may receive a data request from the analyst device 40 in operation S3610. For example, to analyze a semiconductor company, an analyst may input a data request message for a customer or users to the analyst device 40 and the analyst device 40 may transmit the data request message to the server 200B. According to an embodiment, the customer or the users may correspond to the customer 11 or the first to fifth users 12, 13, 14, 15, and 16 in FIGS. 1A and 1B. According to an embodiment, data may include, but is not limited to, response information of a semiconductor company, production capacity, a semiconductor production schedule, or company information. The data may include content information of various semiconductor companies.

According to an embodiment, based on receiving the data request, the server 200B may generate data provision fee information in operation S3620. According to an embodiment, the server 200B may generate and transmit the data provision fee information to the analyst device 40. According to an embodiment, a data provision fee may be determined based on a request of a data provider, a data subscription fee, the number of times data is provided, the amount of data, or a preset data provision fee, but is not limited thereto.

According to an embodiment, based on payment of the data provision fee being completed, the server 200B may generate data provision fee payment completion information in operation S3630. According to an embodiment, the analyst device 40 may receive the data provision fee information from the server 200B and the analyst may pay an operator a data provision fee corresponding to the data provision fee information received by the analyst device 40. For example, according to an embodiment, the server 200B may receive a data provision fee payment completion message from the analyst device 40 and transmit the data provision fee payment completion information to the operator device 20 in FIG. 29.

According to an embodiment, when the data provision fee payment completion information is generated, the server 200B may transmit the requested data to the analyst device 40 in operation S3640.

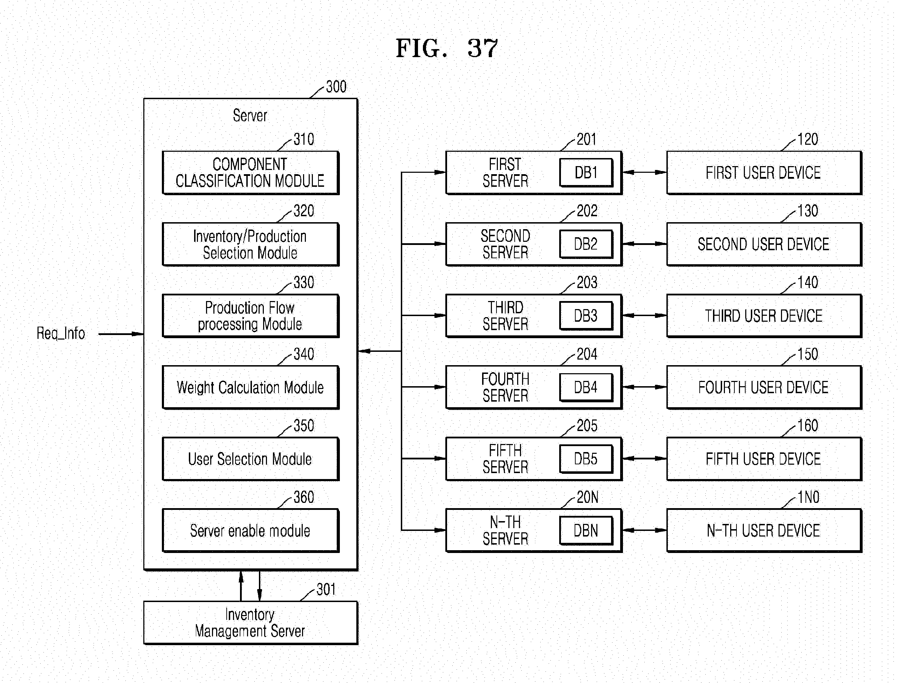

FIG. 37 is a block diagram of the configuration of a server 300 according to an embodiment. The hardware implementation of the server 300 may be the same as the server 200A discussed above with respect to FIG. 27. That is, the server 300 may correspond to the server 200A discussed with respect to FIG. 27 and the processor 210 may implement the various modules described below with respect to FIG. 37.

Referring to FIG. 37, according to an embodiment, the server 300 may include a component classification module 310, an inventory/production selection module 320, a production flow processing module 330, a weight calculation module 340, a user selection module 350, and/or a server enable module 360. According to an embodiment, the server 300 may correspond to a management server, which manages information transfer between a customer device and a plurality of user devices, which have been described with reference to FIGS. 1A to 36. According to an embodiment, the server 300 may exchange data with the first server 201, the second server 202, the third server 203, the fourth server 204, the fifth server 205, and/or an N-th server 20N. For convenience of description, FIG. 37 is described, focusing on the first to fifth servers 201 to 205. However, there may be more servers according to the number of user devices participating in the network system described with reference to FIGS. 1A to 36.

According to an embodiment, the first to N-th servers 201 to 20N may respectively include first to N-th databases DB1 to DBN. According to an embodiment, a database may store and learn information received from a user device. For example, the first server 201 may communicate with the first user device 120, store response information received from the first user device 120 in the first database DB1, and learn the response information. The second server 202 may communicate with the second user device 130, store response information received from the second user device 130 in the second database DB2, and learn the response information. Similarly, each of the third server 203, the fourth server 204, the fifth server 205, and the N-th server 20N may communicate with its corresponding user device, store response information from the corresponding user device in the database thereof, and learn the response information.

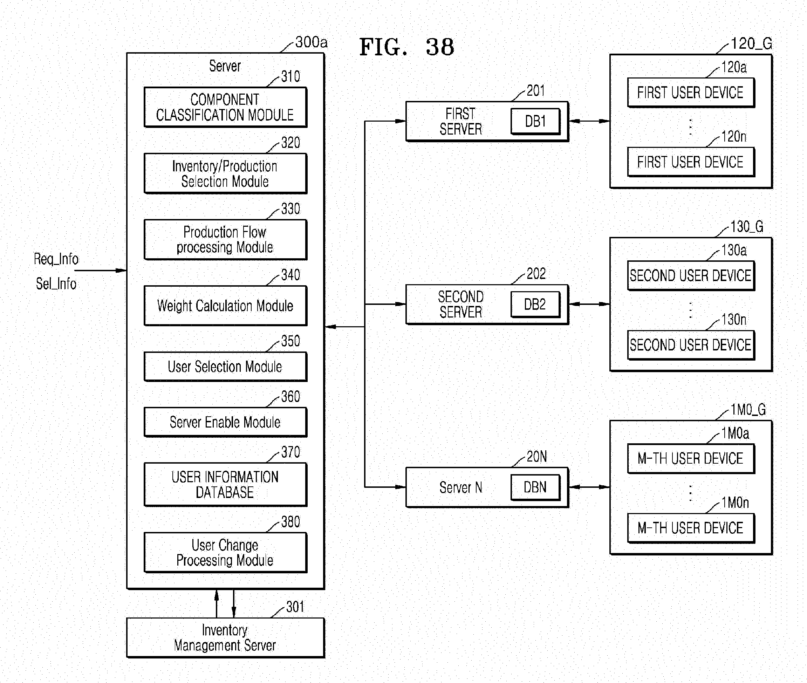

According to an embodiment, the server 300 may receive request information Req_Info from a customer device. The customer device described below with reference to FIGS. 37 and 38 may correspond to the customer device 110 in FIG. 1A. According to an embodiment, the server 300 may analyze the request information Req_Info and may determine whether the request information Req_Info indicates a single component or a product or finished product manufactured using a plurality of components. For example, the component classification module 310 may classify a plurality of components needed by a user to manufacture a product and may determine information, such as the specification of a component meeting the request information Req_Info from the customer device 110.

According to an embodiment, the inventory/production selection module 320 may select whether to transmit a recommendation message for the inventory of a component to the customer device 110 or whether to produce a component through a series of processes. According to an embodiment, the inventory/production selection module 320 may select the inventory for at least some components and select the production for the other components, based on whether there is a component inventory appropriate to the request information Req_Info from the customer device 110 and/or whether there is an appropriate quantity of components.

According to an embodiment, the production flow processing module 330 may determine a plurality of flows constituting a production process, with respect to a component for which production is selected. For example, the production flow processing module 330 may generate a plurality of flows from design to production with respect to each component and may generate different flows for different components.

According to an embodiment, the weight calculation module 340 may receive the request information Req_Info from the customer device 110 and database information of each user from a corresponding one of the first to N-th servers 201 to 20N, may perform a weight operation based on the request information Req_Info and the database information, and may generate an operation result. For example, the weight calculation module 340 may generate a weight according to the priority (e.g., price, delivery date, or performance) of a particular component based on order information and may apply the weight to the flow processing characteristic of each of a plurality of users (e.g., a user providing a low unit price or a user providing high performance, which may be updated in a database periodically or randomly) such that at least some of the users may be selected as bidding targets. For example, according to a result of the operation of the weight calculation module 340, each of the first to N-th servers 201 to 20N may activate the communication with some of a plurality of user devices managed thereby, provide order information to some user devices, and receive response information including bidding information from the user devices.

According to an embodiment, the weight calculation module 340 may receive response information including bidding information from the first to N-th servers 201 to 20N and provide the response information to the customer device 110. According to an embodiment, the weight calculation module 340 may generate a result of performing an operation on the response information and a preset weight received from the customer device 110.

According to an embodiment, the user selection module 350 may provide the bidding information and/or the operation result to the customer device 110. For example, the user selection module 350 may provide the bidding information itself to the customer device 110. For example, the user selection module 350 may provide the customer device 110 with the bidding information including the order of priority based on the operation result according to weights. According to an embodiment, the user selection module 350 may receive selection information of a customer with respect to each component from the customer device 110.

According to an embodiment, the server enable module 360 may control the enable of various servers of a system based on the determination/operation result of the server 300. For example, when a production process is not necessary as a result of determining the request information Req_Info from the customer device 110 in server 300, the server enable module 360 may enable an inventory management server 301 and the inventory management server 301 may communicate with a user device that provides sales information on a pre-produced component.

According to an embodiment, the server enable module 360 may enable the first to N-th servers 201 to 20N to include flows associated with the production of a component and thus select user devices providing information optimized for the component and receive bidding information from the selected user devices. For example, the server enable module 360 may increase the overall processing speed of the system by determining and selectively enabling servers for receiving bidding information.

FIG. 38 is a block diagram of the configuration of a server 300a according to an embodiment. The hardware implementation of the server 300a may be the same as the server 200A discussed above with respect to FIG. 27. That is, the server 300a may correspond to the server 200A discussed with respect to FIG. 27 and the processor 210 may implement the various modules described below with respect to FIG. 38.

Referring to FIG. 38, the server 300a may further include a user information database 370 and a user change processing module 380 compared to the server 300 in FIG. 37.

According to an embodiment, the user information database 370 may store response information received from each of the first to fifth user devices 120, 130, 140, 150, and 160 in FIG. 1B. For example, the user information database 370 may store semiconductor design house information received from the first user device 120 in FIG. 1B. For example, the user information database 370 may store semiconductor foundry company information received from the second user device 130 in FIG. 1B. For example, the user information database 370 may store semiconductor post-processing company information received from the third user device 140 in FIG. 1B. For example, the user information database 370 may store EDA company information or IP provider information received from the fourth user device 150 in FIG. 1B. For example, the user information database 370 may store semiconductor forwarder company information received from the fifth user device 160 in FIG. 1B. According to an embodiment, information stored in the user information database 370 may basically include, but is not limited to, the type of work of a company, a producible semiconductor, a delivery schedule, or price information according to the work.

According to an embodiment, the weight calculation module 340 may calculate a weight based on user information stored in the user information database 370 and the request information Req_Info received from a customer device. For example, the weight calculation module 340 may calculate a weight according to requirements of a component included in the request information Req_Info. For example, the requirement of a component may include price information, specification information, speed information, or pieces of information received from the customer device.

According to an embodiment, the weight calculation module 340 may perform an operation on a weight and user information stored in a database, determine at least one user having a high operation value in each flow, and provide an operation result to user devices included in each flow. When bidding information from user devices is provided to the customer device, selection information Sel_Info for a user may be received from the customer device.

For example, the weight calculation module 340 may perform an operation related to the selection of a second user by using the selection information Sel_Info for a first user. For example, the weight calculation module 340 may additionally generate an operation result by using a weight set for at least one second user optimized for a work result of the first user.

According to an embodiment, the user change processing module 380 may determine whether recommendation (or selection) of a second user has been changed based on a selection result received from the customer device and may provide a result of the determination to the customer device. For example, the user change processing module 380 may provide a recommendation of a second user to the customer device, based on a result of comparing a result of an operation using a weight based on the request information Req_Info received from the customer device with a result of an operation additionally performed according to selection information received from a first user device.

Such an additional weight operation according to a user selection may also be applied to other subsequent flows in the same manner or in a similar manner. For example, the additional weight operation according to a user selection may be applied to a flow for selecting a third user, a fourth user, or a fifth user.

According to an embodiment, the server 300a may exchange information with a first user device group 120_G, a second user device group 130_G, and an M-th user device group 1M0_G respectively through independent servers. For example, the first user device group 120_G may include "n" first user devices 120a to 120n, the second user device group 130_G may include "n" second user devices 130a to 130n, and the M-th user device group 1M0_G may include "n" M-th user devices 1M0a to 1M0n. The first to M-th user device groups 120_G, 130_G, and 1M0_G may communicate with the server 300a through respectively management servers. According to an embodiment, the first user devices 120a to 120n in the first user device group 120_G may communicate with the server 300a through the first server 201. According to an embodiment, the second user devices 130a to 130n in the second user device group 130_G may communicate with the server 300a through the second server 202. As described above, there may be a plurality of user device groups. The M-th user devices 1M0a to 1M0n in the M-th user device group 1M0_G may communicate with the server 300a through the N-th server 20N.

According to the embodiments described with reference to FIGS. 37 and 38, a plurality of user management server may communicate with each other to be optimized to a process flow, thereby increasing the efficiency, speed, and/or the like of all flows related to component production and/or product manufacturing.

The operations performed by the servers described above may be stored in a recording medium as a computer program. The program of a semiconductor transaction method performed by a server according to an embodiment may include code written in computer language, such as C, C++, Java, machine language, or the like, which the processor (e.g., CPU) of a computer can read through the interface of the computer. The code may include functional code related to a function defining necessary functions for the execution of the method and execution procedure control code associated with the processor of the computer to execute the functions in a certain procedure. These codes may further include memory reference code indicating a location (address number) of an internal or external memory of the computer where the processor of the computer refers to additional information or media to execute the functions. When the processor of the computer needs to communicate with another computer, a server, or the like in a remote location to execute the functions, the code may further include communication code indicating a method of communicating with any other remote computer, server, or the like using a communication module of the computer, information or media to be transmitted or received during the communication, or the like.

The medium storing the program refers to a medium which stores data semi-permanently and is readable by a machine not a medium, such as a register, cache, or memory, which stores data for a short time. Specifically, the examples of the medium include, but are not limited to, ROM, RAM, compact disk (CD)-ROM, magnetic tape, a floppy disk, and an optical data storage device. The program may be stored in various recording media of various servers accessible by the computer or various recording media on the computer of a user. The medium may be distributed over network coupled computer systems so that computer-readable code is stored in a distributed fashion.

The steps of the methods or the algorithms described above in the various embodiments may be implemented by hardware, a software module executed by hardware, or a combination thereof. The software module may reside in RAM, ROM, EPROM, EEPROM, flash memory, a hard disk, a removable disk, CD-ROM, or any similar type of computer-readable recording medium.

While various embodiments have been particularly shown and described with reference to the drawings, it will be understood that various changes in form and details may be made therein without departing from the spirit and scope of the following claims.

## Claims

1. A server comprising:
an interface connected to a customer device and a plurality of user devices through a network and configured to:
receive a production request of a product from the customer device; and
receive a set of component parameters from the plurality of user devices, each component parameter of the set of component parameters being associated with a component related to semiconductor production;
a database configured to store the set of component parameters; and
a proposal list generation circuit configured to:
classify components associated with the production request based on the set of component parameters,
determine at least one bottleneck component based on a subset of component parameters that are associated with the classified components, among the set of component parameters, and
generate at least one proposal list based on the at least one bottleneck component,
wherein the at least one proposal list is transmitted to the customer device through the interface.

2. The server of claim 1, wherein the proposal list generation circuit is further configured to:
select a set of user devices, among the plurality of user devices, that are associated with the subset of component parameters and that match the classified components; and
transmit the production request to the set of user devices through the interface.

3. The server of claim 1 or 2, wherein the production request includes at least one production criterion for the production of the product, and
the proposal list generation circuit is further configured to determine the at least one bottleneck component further based on the at least one production criterion.

4. The server of any one of claims 1 to 3, wherein the proposal list generation circuit is further configured to determine at least one bottleneck component for each of a plurality of production categories, and
the database further stores at least one bottleneck component parameter associated with the at least one bottleneck component in each of product categories.

5. The server of claim 4, wherein the proposal list generation circuit is further configured to:
detect, from the at least one bottleneck component, a bottleneck component to be released, based on another set of component parameters received from the plurality of user devices through the interface, and
determine a new bottleneck component from the at least one bottleneck component, based on the bottleneck component that is detected.

6. The server of claim 5, wherein the proposal list generation circuit is further configured to update the at least one bottleneck component parameter in the database, based on the new bottleneck component.

7. A server comprising:
a memory storing computer code; and
at least one processor configured to access the memory and execute the computer code to cause the at least one processor to at least:
receive a production request of a semiconductor component from a customer device,
automatically classify work associated with producing the semiconductor component, based on the production request,
generate at least one proposal list based on the automatically classified work, and
provide the at least one proposal list to the customer device,
wherein the work includes at least one of semiconductor design, semiconductor production, semiconductor packaging, semiconductor post-processing, or forwarding of the semiconductor component,
wherein the at least one proposal list is generated based on at least one of a first response received from a first user device, a second response received from a second user device, or a third response received from a third user device,
the first response including semiconductor design information of the semiconductor component,
the second response including semiconductor foundry information for producing the semiconductor component, and
the third response including test information and packaging information of the semiconductor component.

8. The server of claim 7, wherein the at least one processor is further configured to:
receive a selection from the customer device indicating a selected proposal list from the at least one proposal list,
match the customer device with a user device corresponding to the selected proposal list, and
create payment information based on the selected proposal list.

9. The server of claim 7 or 8, wherein the at least one processor is configured to:
receive a user recommendation from at least one of the first user device, the second user device, or the third user device, and
based on the user recommendation, generate the at least one proposal list by combining the at least one of the first response, the second response or the third response with a response corresponding to the user recommendation.

10. The server of any one of claims 7 to 9, wherein the at least one processor is configured to, in response to the at least one processor receiving the production request of the semiconductor component from the customer device, independently provide the second response of the second user device to the customer device.

11. The server of any one of claims 7 to 10, further comprising:
a first server configured to manage communication between the first user device and the customer device;
a second server configured to manage communication between the second user device and the customer device; and
a third server configured to manage communication between the third user device and the customer device,
wherein the first server, the second server, and the third server independently communicate with the customer device.

12. The server of any one of claims 7 to 11, wherein the at least one processor generates the at least one proposal list further based on at least of a fourth response received from a fourth user device or a fifth response received from a fifth user device,
wherein the fourth response includes semiconductor circuit design information and the fifth response includes forwarding information of the semiconductor component.

13. The server of any one of claims 7 to 12, further comprising a database that stores at least one parameter of a semiconductor production schedule, a production process type, production capacity, or cost, wherein each of the semiconductor production schedule, the production process type, the production capacity, and the cost is received from the second user device.

14. The server of any one of claims 7 to 13, wherein the at least one processor is configured to, based on a production request being received from a plurality of customer devices, recommend the second user device to the plurality of customer devices based on the production requests.

15. The server of any one of claims 7 to 14, wherein the at least one processor is configured to provide second user device candidate information to the customer device, based on production capacity information of a plurality of second user device candidates, the production capacity information being prestored in the server.
